# EUROPEAN PATENT APPLICATION

(11) **EP 4 841 984 A1**
(43) Date of publication of application: **18.11.2026**
(21) Application number: 24915914.6
(22) Date of filing: 08.01.2024
(51) Int. Cl.: H04N 19/593

(54) **CODING METHOD, DECODING METHOD, CODE STREAM, CODER, DECODER, AND STORAGE MEDIUM**

(71) Applicant: GUANGDONG OPPO MOBILE TELECOMMUNICATIONS CORP., LTD., Dongguan, Guangdong 523860 (CN)
(72) Inventor: HUO, Junyan, Dongguan, Guangdong 523860 (CN); MA, Yanzhuo, Dongguan, Guangdong 523860 (CN); YANG, Fuzheng, Dongguan, Guangdong 523860 (CN); QIU, Nengfu, Dongguan, Guangdong 523860 (CN); LI, Ming, Dongguan, Guangdong 523860 (CN)
(74) Representative: Grassi, Stefano
(86) International application number: PCT/CN2024/071226
(87) International publication number: WO 2025/147832

(57) **Abstract**

Disclosed in the present application are a coding method, decoding method, a code stream, a coder, a decoder and a storage medium. The decoding method comprises: determining a first candidate list of the current block (S1501), wherein the first candidate list comprises one or more candidate vector parameters; on the basis of the candidate vector parameter(s) in the first candidate list and/or a vector parameter of a first position block of the current block, determining a second position block (S1502); when a decoding parameter of the second position block includes a vector parameter, and on the basis of the vector parameter of the second position block, determining whether the vector parameter of the second position block meets a second condition (S1503); when the vector parameter of the second position block meets the second condition, and on the basis of the vector parameter of the second position block, updating the first candidate list according to the vector parameter of the second position block (S1504); on the basis of the first candidate list, determining a predicted value of the current block (S1505). In this way, the accuracy of prediction is improved, thereby improving the efficiency of coding and decoding.

## Description

### TECHNICAL FIELD

The present disclosure relates to the technical field of video encoding and decoding, and in particular, to an encoding and decoding method, a bitstream, an encoder, a decoder, and a storage medium.

### BACKGROUND

Intra Template Matching Prediction (Intra TMP) technology searches for a matching template with a minimum cost within a predefined search range of a current picture according to a preset cost function by using a template of a coding block (CB), and takes a best matched reconstructed block corresponding to the matching template as a prediction block of the current coding block.

However, in the prediction process based on Intra TMP, the search strategy in actual implementation is not optimal, which cannot guarantee prediction accuracy and reduces encoding and decoding efficiency.

### SUMMARY

The present disclosure provides an encoding and decoding method, a bitstream, an encoder, a decoder, and a storage medium, which can improve prediction accuracy and further enhance encoding and decoding efficiency.

The technical solution of the present disclosure may be implemented as follows.

In a first aspect, embodiments of the present disclosure provide a decoding method implemented by a decoder, and the method includes the following operations.

A first candidate list of a current block is determined, where the first candidate list includes one or more candidate vector parameters.

A second position block is determined based on at least one candidate vector parameter in the first candidate list and/or a vector parameter of a first position block of the current block.

When a decoding parameter of the second position block includes a vector parameter, it is determined whether the vector parameter of the second position block satisfies a second condition based on the vector parameter of the second position block.

When the vector parameter of the second position block satisfies the second condition, the first candidate list is updated based on the vector parameter of the second position block.

A predicted value of the current block is determined based on the updated first candidate list.

In a second aspect, embodiments of the present disclosure provide an encoding method implemented by an encoder, and the method includes the following operations.

A first candidate list of a current block is determined, where the first candidate list includes one or more candidate vector parameters.

A second position block is determined based on at least one candidate vector parameter in the first candidate list and/or a vector parameter of a first position block of the current block.

When an encoding parameter of the second position block includes a vector parameter, it is determined whether the vector parameter of the second position block satisfies a second condition based on the vector parameter of the second position block.

When the vector parameter of the second position block satisfies the second condition, the first candidate list is updated based on the vector parameter of the second position block.

A predicted value of the current block is determined based on the updated first candidate list.

In a third aspect, embodiments of the present disclosure provide a bitstream. The bitstream is generated by performing bit encoding on information to be encoded, where the information to be encoded includes at least one of a prediction residual of a current block, a value of a first syntax element, or a value of a second syntax element.

The value of the first syntax element is configured to indicate an index of a predicted-value construction mode of the current block in a predicted-value construction candidate list, and the value of the second syntax element is configured to indicate whether the current block adopts an Intra TMP mode.

In a fourth aspect, embodiments of the present disclosure provide an encoder, including a first determination unit, a first update unit, and a first prediction unit.

The first determination unit is configured to determine a first candidate list of a current block, where the first candidate list includes one or more candidate vector parameters.

The first update unit is configured to determine a second position block based on at least one candidate vector parameter in the first candidate list and/or a vector parameter of a first position block of the current block; determine whether the vector parameter of the second position block satisfies a second condition based on the vector parameter of the second position block when an encoding parameter of the second position block includes a vector parameter; and update the first candidate list based on the vector parameter of the second position block when the vector parameter of the second position block satisfies the second condition.

The first prediction unit is configured to determine a predicted value of the current block based on the updated first candidate list.

In a fifth aspect, embodiments of the present disclosure provide an encoder, including a first memory and a first processor.

The first memory is configured to store a computer program executable on the first processor.

The first processor is configured to execute the method described in the second aspect when running the computer program.

In a sixth aspect, embodiments of the present disclosure provide a decoder, including a second determination unit, a second update unit, and a second prediction unit.

The second determination unit is configured to determine a first candidate list of a current block, where the first candidate list includes one or more candidate vector parameters.

The second update unit is configured to determine a second position block based on at least one candidate vector parameter in the first candidate list and/or a vector parameter of a first position block of the current block; determine whether the vector parameter of the second position block satisfies a second condition based on the vector parameter of the second position block when a decoding parameter of the second position block includes a vector parameter; and update the first candidate list based on the vector parameter of the second position block when the vector parameter of the second position block satisfies the second condition.

The second prediction unit is configured to determine a predicted value of the current block based on the updated first candidate list.

In a seventh aspect, embodiments of the present disclosure provide a decoder, including a second memory and a second processor.

The second memory is configured to store a computer program executable on the second processor.

The second processor is configured to execute the method described in the first aspect when running the computer program.

In an eighth aspect, embodiments of the present disclosure provide a computer-readable storage medium. The computer-readable storage medium has stored a computer program, and the computer program, when executed, implements the method according to the first aspect or the method according to the second aspect.

Embodiments of the present disclosure provide an encoding and decoding method, a bitstream, an encoder, a decoder, and a storage medium. At both an encoding end and a decoding end, a first candidate list of a current block is first determined, and the first candidate list includes one or more candidate vector parameters; a second position block is then determined based on at least one candidate vector parameter in the first candidate list and/or a vector parameter of a first position block of the current block. When an encoding/decoding parameter of the second position block includes a vector parameter, it is determined whether the vector parameter of the second position block satisfies a second condition based on the vector parameter of the second position block; when the vector parameter of the second position block satisfies the second condition, the first candidate list is updated based on the vector parameter of the second position block; and finally, a predicted value of the current block is determined based on the updated first candidate list. That is to say, when updating the first candidate list, vector information of several second position blocks can be expanded based on the candidate vector parameters in the initial first candidate list and/or the vector parameters of the first position block (a spatially neighboring block and a non-neighboring block of the current block), and the first candidate list may be supplemented based on the expanded vector information. Reconstructed information of spatially neighboring and non-neighboring blocks can be effectively utilized, candidate vector information can be derived according to the vector information of the reconstructed block on the premise of controlling encoding complexity, the coverage of the Intra TMP search list can be expanded, thereby improving prediction accuracy, further saving bit rate, increasing encoding and decoding efficiency, and upgrading overall encoding and decoding performance.

### BRIEF DESCRIPTION OF THE DRAWINGS

FIG. 1 is a schematic diagram of prediction of Intra TMP;
FIG. 2 is a schematic flowchart of a prediction process based on Intra TMP technology;
FIG. 3 is a schematic diagram of template types of Intra TMP technology;
FIG. 4 is a schematic flowchart of a search process based on Intra TMP technology;
FIG. 5 is a schematic diagram of parameter definition of a current block and its template;
FIG. 6 is a schematic diagram of a template search region;
FIG. 7 is a schematic flowchart of a search process;
FIG. 8 is a schematic flowchart of constructing a coarse search list;
FIG. 9 is a schematic diagram of spatially neighboring positions and non-neighboring positions of a current block;
FIG. 10 is a schematic flowchart of generating a predicted value;
FIG. 11A is a schematic distribution diagram of filter coefficients;
FIG. 11B is a schematic distribution diagram of prediction samples;
FIG. 12 is a schematic structural diagram of an encoder provided by an embodiment of the present disclosure;
FIG. 13 is a schematic structural diagram of a decoder provided by an embodiment of the present disclosure;
FIG. 14 is a schematic network architecture diagram of an encoding and decoding system provided by an embodiment of the present disclosure;
FIG. 15 is a first schematic flowchart of a decoding method provided by an embodiment of the present disclosure;
FIG. 16 is a second schematic flowchart of a decoding method provided by an embodiment of the present disclosure;
FIG. 17 is a first schematic flowchart of an encoding method provided by an embodiment of the present disclosure;
FIG. 18 is a second schematic flowchart of an encoding method provided by an embodiment of the present disclosure;
FIG. 19 is a first schematic flowchart of a search process provided by an embodiment of the present disclosure;
FIG. 20 is a second schematic flowchart of a search process provided by an embodiment of the present disclosure;
FIG. 21 is a third schematic flowchart of a search process provided by an embodiment of the present disclosure;
FIG. 22 is a fourth schematic flowchart of a search process provided by an embodiment of the present disclosure;
FIG. 23 is a schematic structural diagram of an encoder provided by an embodiment of the present disclosure;
FIG. 24 is a schematic specific hardware structure diagram of an encoder provided by an embodiment of the present disclosure;
FIG. 25 is a schematic structural diagram of a decoder provided by an embodiment of the present disclosure;
FIG. 26 is a schematic specific hardware structure diagram of a decoder provided by an embodiment of the present disclosure; and
FIG. 27 is a schematic structural diagram of an encoding and decoding system provided by an embodiment of the present disclosure.

### DETAILED DESCRIPTION

To gain a more detailed understanding of the features and technical contents of the embodiments of the present disclosure, the implementation of the embodiments of the present disclosure is described in detail below with reference to the accompanying drawings. The accompanying drawings are provided for reference and illustration only, and are not intended to limit the embodiments of the present disclosure.

Unless otherwise defined, all technical and scientific terms herein have the same meanings as commonly understood by those skilled in the technical field to which the present disclosure pertains. The terms herein are merely for the purpose of describing the embodiments of the present disclosure, and are not intended to limit the present disclosure.

In the following description, references to "some embodiments" describe a subset of all possible embodiments. It should be understood that "some embodiments" may be the same subset or different subsets of all possible embodiments, and may be combined with each other without conflict. It shall also be noted that the terms "first", "second", and "third" involved in the embodiments of the present disclosure are merely used to distinguish similar objects and do not denote a specific order of the objects. It is appreciable that "first", "second", and "third" may interchange specific sequences or orders where permissible, such that the embodiments described herein may be implemented in an order other than that illustrated or described herein.

Before further elaborating on the embodiments of the present disclosure, the nouns and terms involved in the embodiments are first explained, and the nouns and terms involved in the embodiments are interpreted as follows:
Coding Block (CB);
Block Matching (BM);
Coding Unit (CU);
Prediction Unit (PU);
Block Vector (BV);
Motion Vector (MV);
Sum of Absolute Difference (SAD);
Sum of Absolute Transformed Difference (SATD);
Mean Square Error (MSE);
Sum of Squared Errors (SSE);
Sum of Squared Differences (SSD);
Mean Absolute Deviation (MAD);
Mean Absolute Error (MAE);
Mean Square Differences (MSD);
Normalized Correlation Coefficient (NCC);
Versatile Video Coding (VVC) (i.e., H.266);
VVC Test Model (VTM), which is a reference software test platform for VVC;
Intra Template Matching Prediction (Intra TMP); and
Enhanced Compression Model (ECM), which is a reference software test platform for Beyond VVC.

It can be understood that in a video picture, a coding block is generally characterized by a first color component, a second color component, and a third color component. The three color components are respectively a luma component, a blue chroma component, and a red chroma component. Specifically, the luma component is generally denoted by symbol Y, the blue chroma component is generally denoted by symbol Cb or U, and the red chroma component is generally denoted by symbol Cr or V. Accordingly, a video picture may be represented in a YCbCr format or a YUV format.

It can also be understood that Intra TMP is a special intra prediction mode. Both an encoder and a decoder search for a matching template with a minimum cost within a predefined search range in a current picture according to a preset cost function by using a template (T) of a coding block. An offset of a best matching template relative to the template of the current coding block is a best Block Vector (BV_BEST). A reconstructed block (Ref Block) corresponding to the matching template is then taken as a prediction block of the current coding block (Cur Block). The template of the coding block is generally selected from neighboring reconstructed regions of the current coding block.

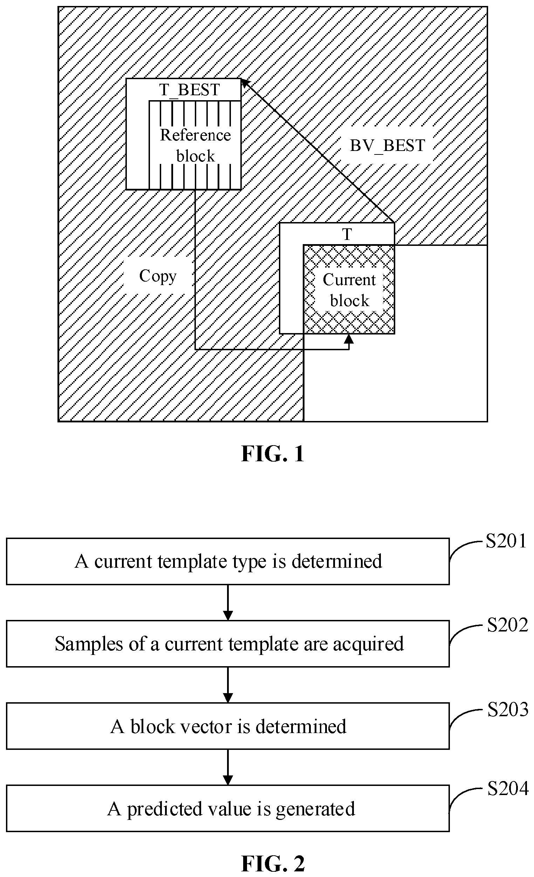

For example, taking a neighboring reconstructed region of a current block as an example, FIG. 1 is a schematic diagram of Intra TMP prediction. As shown in FIG. 1, the obliquely shaded region represents the reconstructed region, the grid-filled block represents the current block, and a neighboring region of the current block serves as a first template (T); the vertically filled block represents a reference block, and a neighboring region of the reference block serves as a second template (namely a best matching template (T_BEST)). An offset of the second template relative to the first template is a best Block Vector (BV_BEST). In this case, the reference block may be copied to serve as the prediction block of the current block.

In the embodiments of the present disclosure, a preset cost function may be SAD, SATD, MSE, SSD, MAD, MSD, NCC, and the like, which are not limited herein.

For example, taking SAD as an example, the cost function is expressed as follows:
$SAD \left({T}_{i}\right) = {\sum }_{m = 0}^{M - 1} \left|{T}_{i , m}-{T}_{m}\right| , m = 0 , 1 , … , M - 1$
where *T*ᵢ denotes a template in a search process, and M denotes the number of samples in the template.

The prediction process of Intra TMP technology in the related art is described in detail below.

Input of Intra TMP: a position (xTbCmp,yTbCmp) of a current block, a width nTbW of the current block, and a height nTbH of the current block.

Output of Intra TMP: predicted value predSamples[x][y] of the current block, where x=0..nTbW-1, y=0..nTbH-1.

Specifically, the prediction process of Intra TMP technology may be divided into four operations: determining a current template type, acquiring reconstructed samples of a current template, determining a BV within a predefined search range, and generating a predicted value. In this way, the predicted value of the current block can be obtained through the foregoing operations. It should be noted that Intra TMP technology may be used for predicting a luma component or a chroma component, which is not limited herein.

In a possible implementation, FIG. 2 is a schematic flowchart of a prediction process based on Intra TMP technology. As shown in FIG. 2, the process includes the following operations.

S201: A current template type is determined.

It should be noted that Intra TMP technology uses neighboring reconstructed samples of a current block as a template to search for a matching template within a predefined search region. The neighboring reconstructed samples may be upper reference samples, upper-left reference samples, upper-right reference samples, left reference samples, lower-left reference samples, and the like of the current block. Therefore, template types can be classified and a corresponding template type can be determined according to availability of the neighboring reconstructed samples.

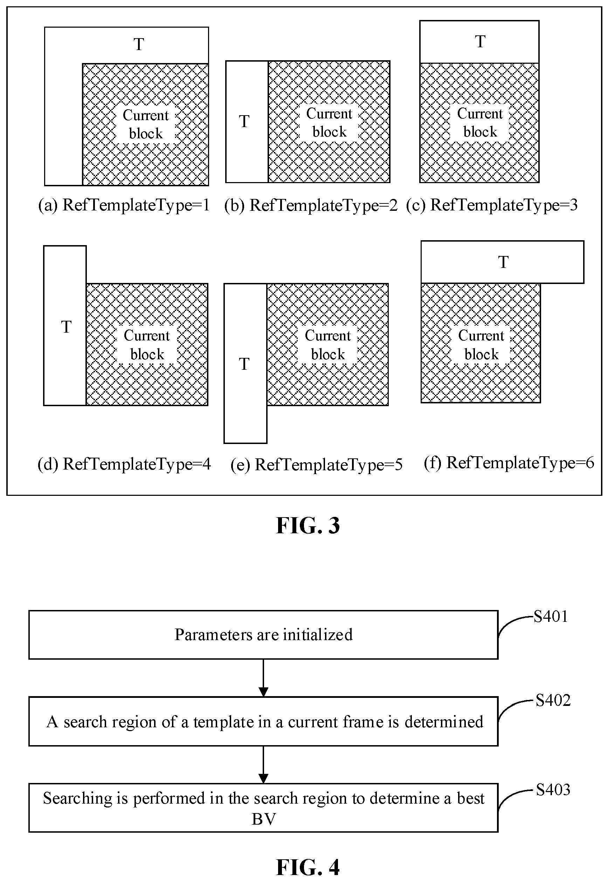

It should also be noted that refTemplateType is used to denote a template type, and FIG. 3 is a schematic diagram of template types of Intra TMP technology. As shown in FIG. 3, grid-filled blocks represent the current block, and a neighboring region of the current block serves as a template T. Six template types are illustrated herein.

Exemplarily, the six template types are as follows:
When upper-left reference samples, upper reference samples, and left reference samples are all available, refTemplateType is set to 1, and the template shape is as shown in (a) of FIG. 3; it should be noted that when refTemplateType is 1, an L-shaped template may have no upper-left neighboring reference samples in some cases;
When only left reference samples are available, refTemplateType is set to 2, and the template shape is as shown in (b) of FIG. 3;
When only upper reference samples are available, refTemplateType is set to 3, and the template shape is as shown in (c) of FIG. 3;
When only left reference samples and upper-left reference samples are available, refTemplateType is set to 4, and the template shape is as shown in (d) of FIG. 3;
When only left reference samples and lower-left reference samples are available, refTemplateType is set to 5, and the template shape is as shown in (e) of FIG. 3; and
When only upper reference samples and upper-right reference samples are available, refTemplateType is set to 6, and the template shape is as shown in (f) of FIG. 3.

S202: Samples of a current template are acquired.

It should be noted that a template of Intra TMP technology may be composed of reconstructed samples from one or more regions on an upper side, an upper-right side, a left side, a lower-left side, and an upper-left side of a current block. In addition, a template size may be preset. For example, when acquiring a left template, a template width templateW_size may be set to 4; when acquiring an upper template, a template height templateH_size may be set to 4.

It should also be noted that which part of reconstructed samples to acquire may be determined according to a value of refTemplateType. Exemplarily, when refTemplateType is 1, reconstructed samples on the left side, upper-left side, and upper side of the current block are acquired; when refTemplateType is 2, only reconstructed samples from four columns on the left side of the current block are acquired; when refTemplateType is 3, only reconstructed samples from four rows on the upper side of the current block are acquired.

S203: A BV is determined.

It should be noted that the search process of Intra TMP technology mainly includes: initialization, determination of a search region for a template in a current frame, and search for and determination of a best BV in the search region.

It should also be noted that, when searching for a best matching template in the search region, a search strategy of coarse search followed by fine search may be adopted, or only fine search or only coarse search may be performed, which is not limited herein.

In the embodiments of the present disclosure, the coarse search may be determining a best coarse matching template in the search region with a first preset step size (e.g., 3), or determining a best coarse matching template in the search region by using a downsampled template (e.g., with a downsampling factor of 3).

In the embodiments of the present disclosure, the fine search may be determining a best fine matching template in the search region with a second preset step size (e.g., 1; in case of sub-sample precision, sub-sample interpolation needs to be performed on reconstructed samples, which is not elaborated herein), or determining a best fine matching template in the vicinity of the best coarse matching template after the coarse search is completed.

In a possible implementation, FIG. 4 is a schematic flowchart of a search process based on Intra TMP technology. As shown in FIG. 4, the process includes the following operations.

S401: Parameters are initialized.

Taking an L-shaped template as an example, uiPatchWidth is initialized to nTbW+templateW_size, and uiPatchHeight is initialized to nTbH+templateH_size. The templateW_size and templateH_size may be fixed constants or dynamically adjusted according to the size of a current block. In addition, the templateW_size and templateH_size may be equal or unequal. For example, templateW_size=4 and templateH_size=4 are set; or templateW_size is set to 4 when the width of the current block is greater than 8, and templateW_size is set to 2 when the width of the current block is less than or equal to 8; templateH_size is set to 4 when the height of the current block is greater than 8, and templateH_size is set to 2 when the height of the current block is less than or equal to 8.

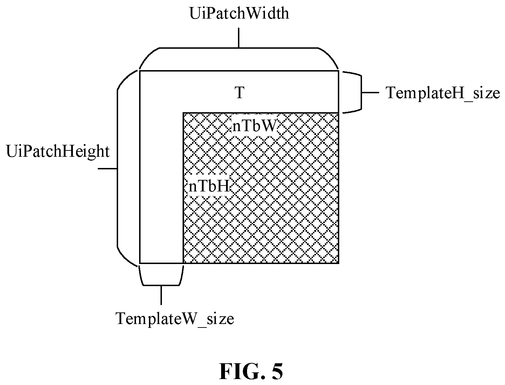

Exemplarily, FIG. 5 is a schematic diagram of parameter definition of a current block and its template. As shown in FIG. 5, specific meanings of the parameters are as follows: nTbW and nTbH respectively denote the width and height of the current block; templateW_size and templateH_size respectively denote the width and height of the template; uiPatchWidth and uiPatchHeight respectively denote the overall width and overall height of the current block and the template.

Further, a cost threshold between templates is initialized and denoted as diffThreshold. For example, when the cost function is SAD, the threshold satisfies: diffThreshold=((1≪bitDepth)≫2)×(uiPatchHeight×uiPatchWidth-nTbH×nTbW). When the picture bit depth bitDepth is 10, the diffThreshold indicates that a distortion threshold of each sample in the template region is 256.

Further, a position of a Coding Tree Block (CTB) where the current block (CB) is located is initialized: ctbRsX, ctbRsY.

Further, a position offset of the CB within the current CTB is initialized: offsetLCBY = yTbCmp - ctbRsY, offsetLCBX = xTbCmp - ctbRsX.

Further, iTemplateSizeH is initialized to be templateH_size and iTemplateSizeW is initialized to be templateW_size.

Further, iBvShift is initialized, where iBvShift denotes the precision of a BV. For example, the precision of the BV may be integer-sample precision with iBvShift set to 0; the precision of the BV may also be sub-sample precision, where for example, iBvShift set to 1 denotes 1/2-sample precision, and iBvShift set to 2 denotes 1/4-sample precision, which is not limited herein.

Further, a preset search range of the template is initialized. The preset search range of the template may be set to a fixed size or dynamically adjusted according to the size of the coding block. For example:
$searchRangeWidth = TMP_SEARCH_RANGE_MULT_FACTOR \times nTbW ;$ and
$searchRangeHeight = TMP_SEARCH_RANGE_MULT_FACTOR \times nTbH .$

A value of TMP_SEARCH_RANGE_MULT_FACTOR may be a preset value, e.g. 5.

S402: A search region for a template in a current frame is determined.

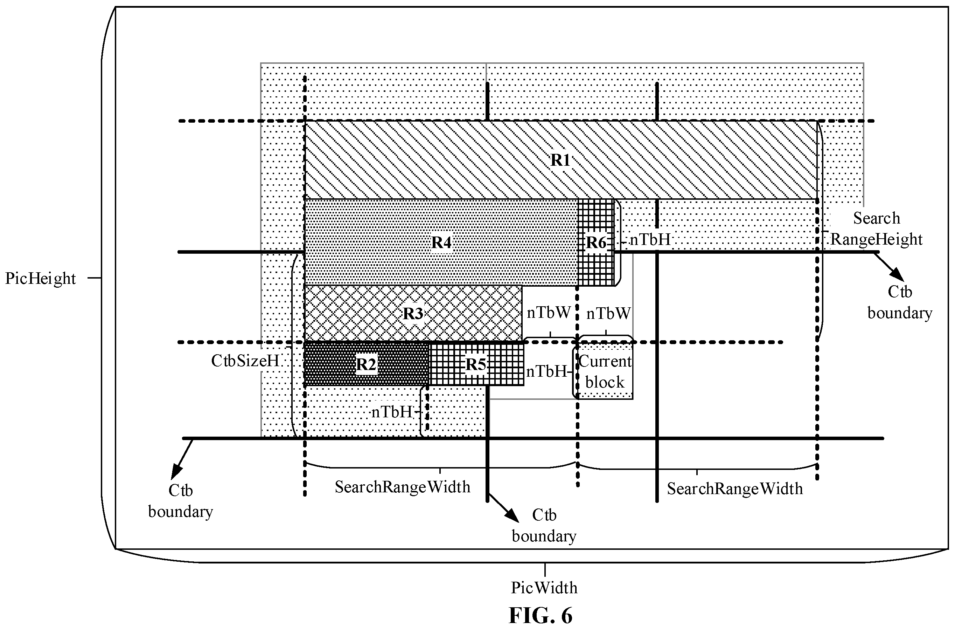

It should be noted that a frame herein may also be referred to as a picture, and thus a current frame may also be referred to as a current picture. A search region in the Intra TMP technology is a reconstructed part in the current picture and is limited by the size of the search range. Exemplarily, FIG. 6 is a schematic diagram of a template search region of a current block. As shown in FIG. 6, R1, R2, R3, R4, R5 and R6 denote six different search regions, where picHeight denotes the height of the current picture, picWidth denotes the width of the current picture, searchRangeHeight denotes the height of the search region, searchRangeWidth denotes the width of the search region, CtbSizeH denotes the height of a coding tree block, nTbH denotes the height of a current block, and nTbW denotes the width of the current block.

The search region is divided into two types:
One type is a peripheral rectangular search region, which is further divided into two categories: a fully reconstructed region where all samples have been reconstructed (e.g., regions R1 to R4 in FIG. 6), and a pending reconstructed region where it is uncertain whether all samples have been reconstructed (e.g., regions R5 to R6 in FIG. 6); and
The other type is an expanded search region, which is defined as a region pointed to by BVs corresponding to spatially neighboring and non-neighboring PUs. In the embodiment corresponding to FIG. 6, this region may be regarded as R7.

For search points in search regions, all search points in a specified search region may be traversed, or different schemes may be adopted to limit the search to a local search range to balance computational complexity and encoding efficiency. For example, for pending reconstructed regions (e.g., regions R5 to R6 in FIG. 6) or fully reconstructed regions (e.g., regions R1 to R4 in FIG. 6), the width of the search range may be limited to 1/wIndex of the original width, and the height may be limited to 1/hIndex of the original height, where wIndex and hIndex are any positive integers greater than or equal to 1. The limited search range is set to a region closer to a unit to be encoded. For another example, when narrowing the search range of the R5 region, the width and height of the search region R5 may each be reduced to 1/2 of the original, and the final search range may be set to the upper-right 1/4 part of the region R5.

S403: Searching is performed in the search region to determine a best BV.

It is noted that bvXMinsregionId and bvXMaxsregionId respectively denote the minimum offset and maximum offset of a BV in the horizontal direction; bvYMins_{regionId} and bvYMaxs_{regionId} respectively denote the minimum offset and maximum offset of the BVs in the vertical direction.

bvXMins_{regionId}, bvXMaxs_{regionId}, bvYMins_{regionId}, and bvYMaxs_{regionId} may be computed according to iVerMin_{regionId}, iVerMax_{regionId}, iHorMin_{regionId}, and iHorMax_{regionId} determined in the operation S402:
${bvXMins}_{regionId} = {iHorMin}_{regionId} - xTbCmp ;$
${bvXMaxs}_{regionId} = {iHorMax}_{regionId} - xTbCmp ;$
${bvYMins}_{regionId} = {iVerMin}_{regionId} - yTbCmp ;$ and
${bvYMaxs}_{regionId} = {iVerMax}_{regionId} - yTbCmp .$

The bvXMinsregionId, bvXMaxsregionId, bvYMinsregionId and bvYMaxsregionId define a range of horizontal and vertical offsets of search points relative to the current block, that is, a range of a BV.

For fully reconstructed regions (such as regions R1 to R4 in FIG. 6), based on each search point (iPosHor, iPosVer) in each search region, namely each BV (composed of a horizontal component and a vertical component (pX,pY), where pX=iPosHor-xTbCmp, pY=iPosVer-yTbCmp, pX is between bvXMins and bvXMaxs, and pY is between bvYMins and bvYMaxs), a matched reconstructed block of the current block may be found in the reconstructed region, and neighboring reconstructed samples of the matched reconstructed block serve as a matching template. A matching cost between a neighboring template of the current block and a neighboring template of the reconstructed block is computed and denoted as pDiff.

For pending reconstructed regions (such as regions R5 to R6 in FIG. 6), based on each search point (iPosHor, iPosVer) in each search region, namely a BV (composed of a horizontal component and a vertical component (pX,pY), where pX=iPosHor-xTbCmp, pY=iPosVer-yTbCmp, pX is between bvXMins and bvXMaxs, and pY is between bvYMins and bvYMaxs), availability determination may be performed on such region:
If available, a matched reconstructed block of the current block may be found in the reconstructed region, and neighboring reconstructed samples of the matched reconstructed block serve as a matching template; a matching cost between a neighboring template of the current block and a neighboring template of the reconstructed block is computed and also denoted as pDiff; and
If unavailable, template matching cost computation is skipped.

The availability determination includes but is not limited to simultaneous establishment of one or more of the following conditions:
Each sample in the template is within a valid coordinate range limited by the picture sample boundary;
Each sample in the reconstructed block corresponding to the template is within the valid coordinate range limited by the picture sample boundary;
Each sample in the template and each sample in the corresponding reconstructed block are within a prescribed range of a search window;
Each sample in the template is located in a same Tile as a current coding region;
Each sample in the reconstructed block corresponding to the template is located in a same Tile as the current coding region;
Each sample in the template has been reconstructed;
Each sample in the reconstructed block corresponding to the template is not located in the current encoding region; and
Each sample in the reconstructed block corresponding to the template has been reconstructed.

All available search points in all search ranges (regionId=0, 1, 2, 3, 4, 5) are traversed and compared to select 30 search points with a minimum matching cost pDiff. Corresponding matching costs are denoted as pDiff_BEST[n], n=0,...,29; corresponding BVs are denoted as best BVs BV_BEST[n], each being a coordinate pair (pX_BEST,pY_BEST), n=0,...,29; and corresponding matching templates are denoted as best matching templates T_BEST[n], n=0,...,29.

If the search strategy is coarse search only, the specific implementation is as follows:
Within the search range where pX is between bvXMinsregionId and bvXMaxsregionId and pY is between bvYMinsregionId and bvYMaxsregionId in each region, a coarse search is performed with a step size greater than 1, for example, a step size of 2. The best matching cost resulting from template matching in the coarse search is denoted as pDiff_BEST, and the corresponding BV is recorded as BV_BEST(pX_BEST, pY_BEST).

If the search strategy is fine search only, the specific implementation is as follows:
Within the search range where pX is between bvXMinsregionId and bvXMaxsregionId and pY is between bvYMinsregionId and bvYMaxsregionId in each region, a fine search is performed with a step size of 1 as an example. The best matching cost resulting from template matching in the fine search is denoted as pDiff_BEST, and the corresponding BV is recorded as BV_BEST(pX_BEST, pY_BEST).

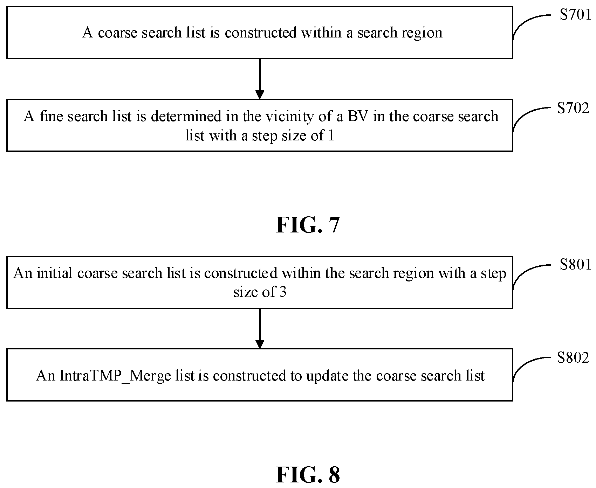

If the search strategy is coarse search followed by fine search, as shown in FIG. 7, the specific implementation is as follows:
S701: A coarse search list is constructed in a search region; and
S702: A fine search list is determined in the vicinity of a BV in the coarse search list with a step size of 1.

The step S701 of constructing a coarse search list in a search region may include the following sub-steps as shown in FIG. 8.

S801: An initial coarse search list is constructed in the search region with a step size of 3.

Within the search range where pX is between bvXMinsregionId and bvXMaxsregionId and pY is between bvYMinsregionId and bvYMaxsregionId in each region, a coarse search is performed with a step size of 3. The top P best matching costs resulting from template matching in the coarse search are denoted as pDiff1_BEST[p], p=0,...,P-1, and corresponding BVs are recorded as BV1_BEST[p], p=0,...,P-1. P may be 1 or an integer greater than 1 as required, and the search region where the best matching search point is located is denoted as bestRegionId[p], p=0,...,P-1.

S802: An IntraTMP_Merge list is constructed to update the coarse search list.

After P anchor points are searched out in the search region, a plurality of predefined search positions are used to construct a candidate BV list for the current block for reference, which is referred to as an IntraTMP_Merge list herein.

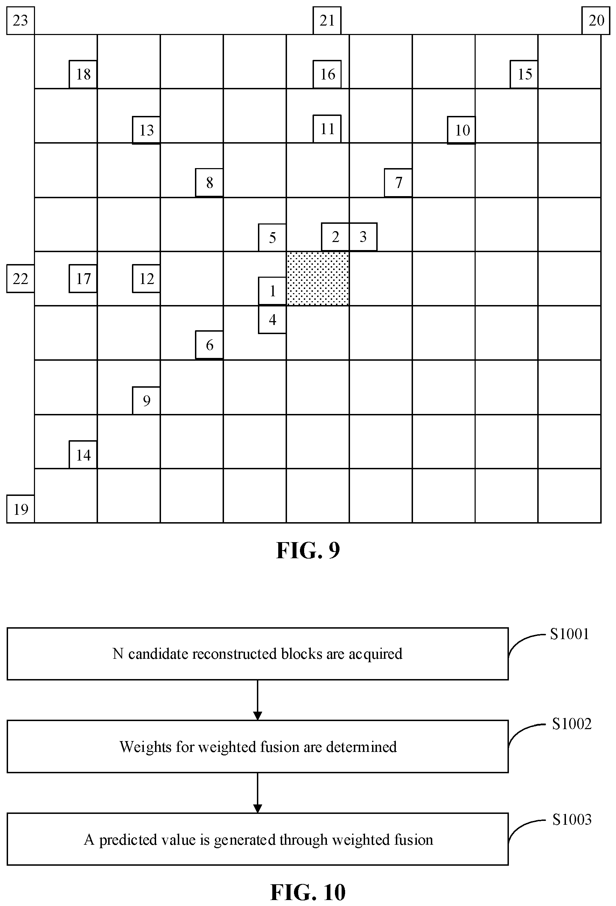

Exemplarily, a predefined search position set may include spatially neighboring and non-neighboring positions of the current block, for example, 5 spatially neighboring positions of the current block: left (xTbCmp-1,yTbCmp+nTbH-1), upper (xTbCmp+nTbW-1,yTbCmp-1), upper-right (xTbCmp+nTbW,yTbCmp-1), lower-left (xTbCmp-1,yTbCmp+nTbH), upper-left (xTbCmp-1,yTbCmp-1), and 18 spatially non-neighboring positions (as shown in FIG. 9). In FIG. 9, positions marked with numbers 1 to 5 are referred to as spatially neighboring positions, and the remaining marked positions are referred to as non-neighboring positions.

An embodiment of the construction process includes: checking whether PUs corresponding to these positions adopt IntraTMP/IBC technology; if so, storing BVs of such PUs into an IntraTMP_Merge list. After the IntraTMP_Merge list is constructed, the coarse search list is updated. The updating operation includes: sequentially accessing each item of the IntraTMP_Merge list, computing a template matching cost corresponding to each BV, and comparing the cost with template matching costs of the initial coarse search list; and if the cost is smaller than a maximum template matching cost in the coarse search list, replacing a BV having a larger cost in the coarse search list with the BV. The replacement operation incluldes, for example: inserting the BV into the coarse search list according to an order of cost magnitude and deleting the BV with the maximum cost from the coarse search list. And a search region bestRegionId where the BV is located is set to 6. It should be noted that this process is actually a list merging process: the coarse search list corresponding to results of R1 to R6 is first constructed, and then a result of R7 is inserted into an appropriate position of the list. In addition, other search sequences and merging strategies may be adopted, which are not limited herein.

In the embodiments of the present disclosure, according to algorithm requirements, the coarse search stage provides one or more fine search anchor points (denoted as M herein, where 1 ≤ M ≤ P) to a subsequent operation. For example, M is set to 1.

For step S702, a search may be performed in the vicinity of BV1_BEST[p], p=0,...,M-1 which result from a coarse search and serve as fine search anchor points.

Specifically, for each fine search anchor point, a refined search range TmpRefineRangeHor and TmpRefineRangeVer is first determined, which may be of a fixed size or related to the search region. For example, TmpRefineRangeHor and TmpRefineRangeVer may both be set to 1 for an anchor point in search regions 0 to 5, and both set to 2 for an anchor point in search region 6. A position of a best matched reconstructed block resulting from a coarse search is then computed as a base position of the fine search region: BestPosX=xTbCmp+pX1_BEST, BestPosY=yTbCmp+pY1_BEST

In a possible implementation, the search window is directly used, the fine search region is treated as an entire pending reconstructed region, and traversal is performed directly.

First, a new search range is acquired based on the position of a best matched block resulting from a coarse search, including:
${iHorMax}_{refine} = min \left(picWidth-nTbW, BestPosX+TmpRefineRangeHor\right) ;$
${iHorMin}_{refine} = max \left(iTemplateSizeW, BestPosX-TmpRefineRangeHor\right) ;$
${iVerMax}_{refine} = min \left(picHeight-nTbH, BestPosY+TmpRefineRangeVer\right) ;$ and
${iVerMin}_{refine} = max \left(iTemplateSizeH, BestPosY-TmpRefineRangeVer\right) .$

Then, adjusted BVs bvXMins, bvXMaxs, bvYMins, bvYMaxs may be computed according to iVerMin_{refine}, iVerMax_{refine}, iHorMin_{refine}, iHorMax_{refine}:
$bvXMins = {iHorMin}_{refine} - xTbCmp ;$
$bvXMaxs = {iHorMax}_{refine} - xTbCmp ;$
$bvYMins = {iVerMin}_{refine} - yTbCmp ;$ and
$bvYMaxs = {iVerMax}_{refine} - yTbCmp .$

A fine search is performed within a BV range where pX is between bvXMins_{refine} and bvXMaxs_{refine} and pY is between bvYMins_{refine} and bvYMaxs_{refine}, that is, all search positions in a fine search window are directly traversed and are subjected to availability determination in sequence. For example, the search is performed with a step size of 1, and the top T best matching costs obtained by template matching at available points are recorded as pDiff_BEST[t], t=0,...,T-1, and corresponding BVs are recorded as BV_BEST[t], t=0,...,T-1. T is an integer of 1 or greater, for example, T=1.

After the foregoing operations are completed, one or more bese BVs BV_BEST[n], n=0,...,N-1 meeting different algorithm requirements may be obtained by combining the results of the coarse search and the fine search (the fine search including search of one or more anchor points). Each best BV is a coordinate pair (pX_BEST,pY_BEST). The pX_BEST and pY_BEST respectively denote a horizontal offset and a vertical offset of a best matching template relative to a template of a current coding block, and also denote a horizontal offset and a vertical offset of a best matched reconstructed block relative to the current coding block.

S204: A predicted value is generated.

In the IntraTMP mode, besides a basic copy method for obtaining a predicted value, there are other methods including: a method of fusing positions corresponding to multiple BVs; a method of filtering reference blocks corresponding to BVs and then copying the filtered blocks; and a method of performing sub-sample interpolation on a reference block corresponding to a sub -sample BV and then copying the interpolated block.

In a possible implementation, after a BV candidate list is acquired through template matching in a regional search at a decoding end, the top N items (for example, N=3) are selected for weighted fusion, which may be referred to as an IntraTMP Fusion mode.

Alternatively, in another possible implementation, after one best BV is acquired, multiple points are selected around the best BV, and predicted values corresponding to the multiple points are weighted and fused to obtain a final predicted value, which may be referred to as an IntraTMP FLM mode.

Alternatively, in yet another possible implementation, after one best BV is acquired, templates are sorted with sub-sample precision to select a best direction and precision, and an interpolation filter is used to compute a predicted value, which may be referred to as an IntraTMP SubPel mode.

Implementation of some of the foregoing methods are described in detail below.

In IntraTMP technology, different prediction modes correspond to different prediction manners. For example, in IntraTMP Fusion technology, after BVs corresponding to N candidate templates are acquired, N candidate reconstructed blocks are acquired through the BVs, and the N candidate reconstructed blocks are weighted and fused to obtain a prediction block of the current coding block. The final predicted value is generated by the following operations: acquiring N candidate reconstructed blocks, determining weights for weighted fusion, and generating the predicted value through weighted fusion. As shown in FIG. 10, the process includes the following operations.

S1001: N candidate reconstructed blocks are acquired.

After BVs corresponding to N candidate templates are acquired, candidate reconstructed blocks RefBlockn are directly acquired in the current picture according to BVn. A horizontal offset of BVn is pXn, and a vertical offset is pYn, where n=0,1...,N-1.

Implementation is realized by simple translation and copying. For x=0...nTbW-1, y=0...nTbH-1, the specific operation is as follows:
$RefBlockn \left[x\right] \left[y\right] = recSamples \left[x+pXn\right] \left[y+pYn\right]$ (2)
where recSamples denotes reconstructed samples of the current frame.

S1002: Weights for weighted fusion are determined.

After N candidate reconstructed blocks RefBlocks are obtained, weights W for weighted fusion of the N candidate reconstructed blocks need to be computed. The weights may be predefined fixed values, or values adaptively computed by using costs, sample values and other parameters.

In the embodiments of the present disclosure, in the IntraTMP Fusion implementation, the weights for weighted fusion are derived by minimizing MSE between reconstructed values of candidate templates refTn and sample values of templates refpredTn to be predicted.

The MSE minimization takes an autocorrelation matrix of the first N matched reference samples refT and a cross-correlation vector between the first N matched reference samples refT and neighboring template samples curT of a current coding block as inputs, and outputs a weight of a reconstructed block corresponding to each matched reference sample.

S1003: A predicted value is generated through weighted fusion.

A prediction block is computed according to each candidate reconstructed block and its corresponding weight for weighted fusion. A value of each candidate reconstructed block is multiplied by its corresponding weight and accumulated to obtain a current prediction block (namely weighted prediction). The computation formula is as follows:
For x=0...nTbW-1, y=0...nTbH-1, the predicted value is computed as:
${predSamples}_{x , y} = {\sum }_{p = 0}^{P - 1} {w}_{p , x , y} ∗ {RefBlock}_{p , x , y}$ (3)

Finally, each predicted value predSamples_{x,y} is stored spatially to form an output prediction block of IntraTMP Fusion.

In the IntraTMP FLM mode, a linear filtering model is established by using a best matching template obtained in a previous search and a template of a current coding block. The process mainly includes two operations: determining a reconstructed region for computing filter coefficients, and computing the filter coefficients. The computation of the predicted value is as follows:

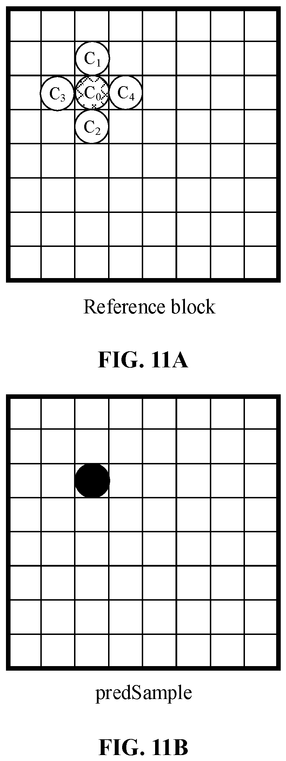

Assuming that the number of filter taps nTap is 5, the shape of the filter is shown in FIG. 11A, where C₀ to C₄ are respective tap coefficients of the filter. A grid-filled circle corresponding to the tap coefficient C₀ denotes a reconstructed sample ref[i][j] located at the position, in the best matching block, corresponding to the current sample to be predicted Y^{pred}[i][j]; remaining white-filled circles denote reconstructed samples neighboring to the current spatial position in the best matched reconstructed block. According to the filter shown in FIG. 11A, the final predicted sample Y^{pred}[i][j] is represented by black-filled circles in FIG. 11B.

The computation process of the predicted value is as follows:
For each current sample (i,j) to be predicted, a sample position in the filter template is defined as (k,l). During filtering, a corresponding reconstructed sample in the best matching block is defined as ref[i+k][j+l], and a filter coefficient at position (k,l) in the filter template is defined as c_{k,l}:
${c}_{k , l} = {c}_{n}$ (4)
where n=0,...,nTap-1, and both k and l range from -1 to 1.

For i=0,...,nTbW-1, j=0,...,nTbH-1:
${Y}^{pred} \left[i\right] \left[j\right] = {\sum }_{k} {\sum }_{l} ref \left[i+k\right] \left[j+l\right] \times {C}_{k , l}$ (5)

The final predicted sample is:
$predSamples \left[i\right] \left[j\right] = Clip 3 \left(0,\left(1≪BitDepth\right)-1,{Y}^{pred}\left[i\right]\left[j\right]\right)$ (6)
where:
$Clip 3 \left(x, y, z\right) = \left\{\begin{matrix}x ; z < x \\ y ; z > y \\ z ; otherwise\end{matrix}\right.$

In the IntraTMP SubPel mode, for a best BV, traversal is performed at 1/4, 1/2, 3/4 sample precision in eight directions including up, down, left, right, upper-left, upper-right, lower-left and lower-right. Sorting is performed according to template cost, and an interpolation filter is used to compute a predicted value for a reference block corresponding to the BV with the minimum template cost.

In brief, IntraTMP technology searches for a matching template with the minimum cost within a predefined search range in a current picture according to a preset cost function by using a template of a coding block, and takes a best matched reconstructed block (Ref Block) corresponding to the matching template as a prediction block of the current coding block (Cur Block). A template of the coding block is generally selected from neighboring reconstructed regions of the current coding block. However, a search strategy in actual implementation cannot fully utilize information of reconstructed neighboring samples, so prediction accuracy cannot be guaranteed, which further affects encoding efficiency.

In view of this, the embodiments of the present disclosure provide an encoding and decoding method. Firstly, a first candidate list of a current block is determined, where the first candidate list includes one or more candidate vector parameters. Secondly, a second position block is determined based on at least one candidate vector parameter in the first candidate list and/or a vector parameter of a first position block of the current block. When an encoding/decoding parameter of the second position block includes a vector parameter, it is determined whether the vector parameter of the second position block satisfies a second condition based on the vector parameter of the second position block. When the vector parameter of the second position block satisfies the second condition, the first candidate list is updated based on the vector parameter of the second position block. Finally, a predicted value of the current block is determined based on the updated first candidate list.

It can be seen that when updating the first candidate list in the embodiments of the present disclosure, several vector information of the second position block may be expanded according to candidate vector parameters in the initial first candidate list and/or a vector parameter of the first position block (including a spatially neighboring block and a non-neighboring block of the current block), and the first candidate list is supplemented with the expanded vector information. Therefore, reconstructed information of spatially neighboring and non-neighboring blocks can be effectively utilized, candidate vector information is derived according to vector information of these reconstructed blocks on the premise of controlling encoding complexity, and the coverage of the IntraTMP search list is expanded. As a result, prediction accuracy is improved, bit rate is further saved, and encoding and decoding efficiency and encoding and decoding performance are enhanced.

The embodiments of the present disclosure are described in detail below with reference to the accompanying drawings.

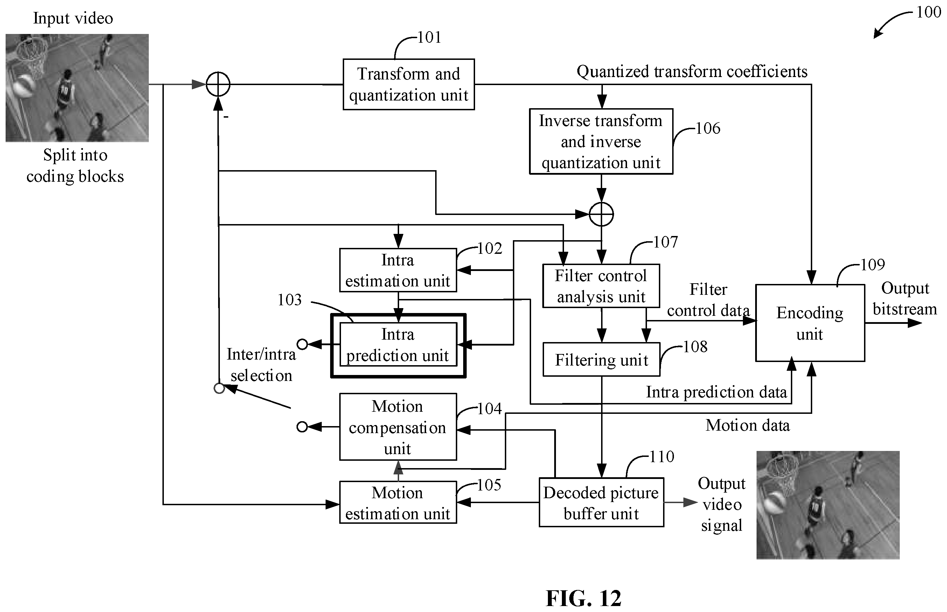

FIG. 12 is a schematic structural diagram of an encoder provided by an embodiment of the present disclosure. As shown in FIG. 12, an encoder 100 may include a transform and quantization unit 101, an intra estimation unit 102, an intra prediction unit 103, a motion compensation unit 104, a motion estimation unit 105, an inverse transform and inverse quantization unit 106, a filter control analysis unit 107, a filtering unit 108, an encoding unit 109, a decoded picture buffer unit 110, and the like. The filtering unit 108 can implement deblocking filtering and Sample Adaptive Offset (SAO) filtering. The encoding unit 109 can implement header information encoding and Context-based Adaptive Binary Arithmetic Coding (CABAC). For an input original video signal, a video coding block is obtained by dividing Coding Tree Units (CTUs). Residual sample information obtained after intra or inter prediction is processed by the transform and quantization unit 101 to transform the video coding block, including transforming residual information from a sample domain to a transform domain and quantizing obtained transform coefficients to further reduce the bit rate. The intra estimation unit 102 and the intra prediction unit 103 are configured to perform intra prediction on the video coding block. Specifically, the intra estimation unit 102 and the intra prediction unit 103 are configured to determine an intra prediction mode to be used for encoding the video coding block. The motion compensation unit 104 and the motion estimation unit 105 are configured to perform inter prediction encoding on the received video coding block relative to one or more blocks in one or more reference frames to provide temporal prediction information. Motion estimation performed by the motion estimation unit 105 is a process of generating motion vectors, which can estimate motion of the video coding block, and then the motion compensation unit 104 may perform motion compensation based on the motion vectors determined by the motion estimation unit 105. After the intra prediction mode is determined, the intra prediction unit 103 is further configured to output selected intra prediction data to the encoding unit 109, and the motion estimation unit 105 may also transmit computed motion vector data to the encoding unit 109. In addition, the inverse transform and inverse quantization unit 106 is configured to reconstruct the video coding block and reconstruct a residual block in the sample domain. The reconstructed residual block is processed by the filter control analysis unit 107 and the filtering unit 108 to remove blocking artifacts, and then the reconstructed residual block is added to a prediction block in a frame of the decoded picture buffer unit 110 to generate a reconstructed video coding block. The encoding unit 109 is configured to encode various encoding parameters and quantized transform coefficients. In a CABAC-based encoding algorithm, context content may be based on neighboring coding blocks, and may be used to encode information indicating the determined intra prediction mode and output a bitstream of the video signal. The decoded picture buffer unit 110 is configured to store reconstructed video coding blocks for prediction reference. As video picture encoding proceeds, new reconstructed video coding blocks are continuously generated and stored in the decoded picture buffer unit 110.

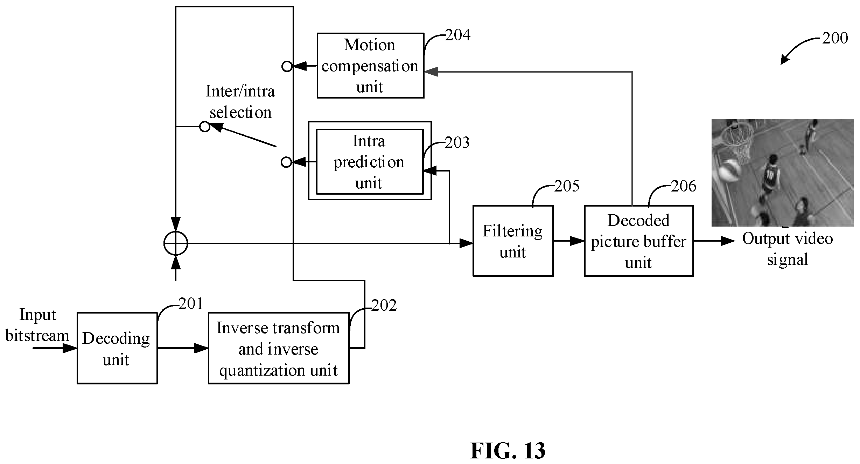

FIG. 13 is a schematic structural diagram of a decoder provided by an embodiment of the present disclosure. As shown in FIG. 13, a decoder 200 includes a decoding unit 201, an inverse transform and inverse quantization unit 202, an intra prediction unit 203, a motion compensation unit 204, a filtering unit 205, a decoded picture buffer unit 206, and the like. The decoding unit 201 may implement header information decoding and CABAC decoding. The filtering unit 205 may implement deblocking filtering and SAO filtering. An input video signal is encoded as shown in FIG. 12 and a bitstream of the video signal is output. The bitstream is input into the decoder 200 and first processed by the decoding unit 201 to obtain decoded transform coefficients. The transform coefficients are processed by the inverse transform and inverse quantization unit 202 to generate a residual block in the sample domain. The intra prediction unit 203 may generate prediction data of a current video decoding block based on the determined intra prediction mode and data from previously decoded blocks of a current frame or picture. The motion compensation unit 204 may determine prediction information for the video decoding block by parsing motion vectors and other associated syntax elements, and use the prediction information to generate a prediction block of the video decoding block being decoded. A decoded video block is formed by summing a residual block from the inverse transform and inverse quantization unit 202 and a corresponding prediction block generated by the intra prediction unit 203 or the motion compensation unit 204. The decoded video signal is processed by the filtering unit 205 to remove blocking artifacts and improve video quality. The decoded video block is then stored in the decoded picture buffer unit 206. The decoded picture buffer unit 206 may store reference pictures for subsequent intra prediction or motion compensation, and may be also used for output of the video signal, so as to obtain the restored original video signal.

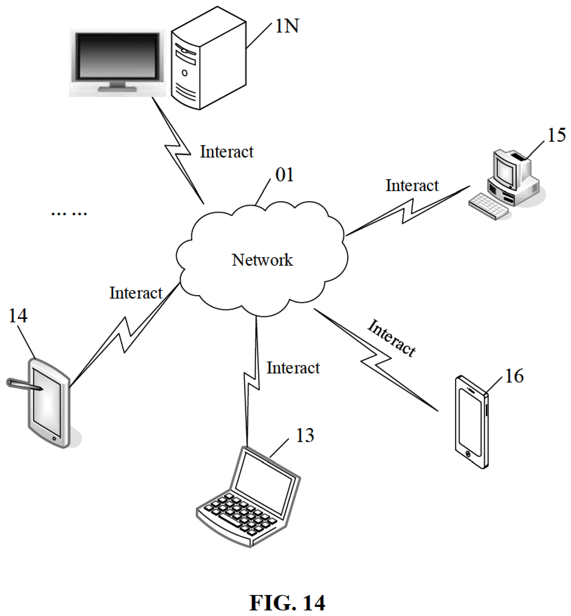

Further, the embodiments of the present disclosure further provide a network architecture of an encoding and decoding system including an encoder and a decoder. FIG. 14 is a schematic network architecture diagram of an encoding and decoding system provided by an embodiment of the present disclosure. As shown in FIG. 14, the network architecture includes one or more electronic devices 13 to 1N and a communication network 01. The electronic devices 13 to 1N may perform video interaction through the communication network 01. In implementation, the electronic devices may be various types of devices with a video encoding and decoding function. For example, the electronic devices may include a smartphone, a tablet computer, a personal computer, a personal digital assistant, a navigator, a digital phone, a video phone, a television, a sensing device, a server, and the like, which are not limited herein.

It should be noted that the decoder or the encoder in the embodiments of the present disclosure may be the foregoing electronic device. The encoder may also be referred to as a video encoder or an image encoder, and the decoder may also be referred to as a video decoder or an image decoder.

It should be noted that the method of the embodiments of the present disclosure is mainly applied to the intra prediction unit 103 shown in FIG. 12 and the intra prediction unit 203 shown in FIG. 13. That is, the embodiments of the present disclosure may be implemented by an encoder, a decoder, or both an encoder and a decoder, which is not limited herein.

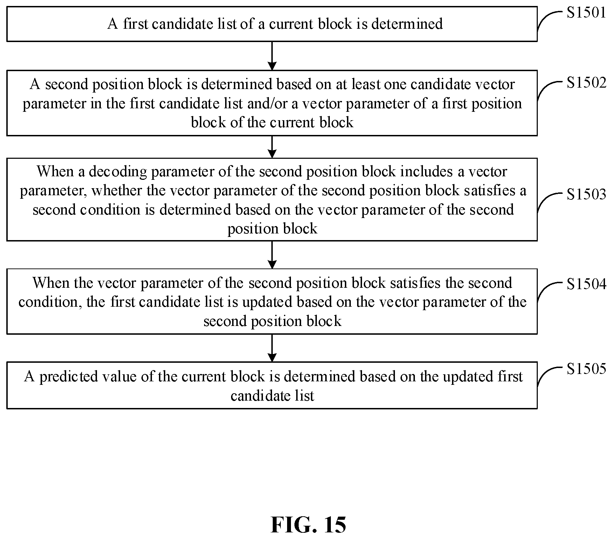

In an embodiment of the present disclosure, FIG. 15 is a first schematic flowchart of a decoding method provided by an embodiment of the present disclosure. As shown in FIG. 15, the method includes the following operations.

S1501: A first candidate list of a current block is determined.

It should be noted that the decoding method of the embodiments of the present disclosure is implemented by a decoder. In addition, the decoding method may be an intra prediction method, and more specifically, an intra prediction method based on an Intra TMP expanded BV list. By fully utilizing reconstructed information of spatially neighboring and non-neighboring positions, the coverage of the first candidate list is increased, thereby improving prediction accuracy.

It should also be noted that in the embodiments of the present disclosure, a video picture may be split into a plurality of decoding blocks, and each decoding block may include a first color component, a second color component, and a third color component. A current block in the embodiments of the present disclosure refers to a current decoding block to be subjected to intra prediction in a video picture. When prediction is performed on the first color component of the current block and the first color component is a luma component, the current block may also be referred to as a luma block. When prediction is performed on the second color component of the current block and the second color component is a chroma component, the current block may also be referred to as a chroma block.

It should also be noted that in the embodiments of the present disclosure, the first candidate list may include one or more candidate vector parameters. The vector parameters may include BV parameters and/or MV parameters. That is, the first candidate list herein may be a list including a plurality of candidate BVs or a list including a plurality of candidate MVs.

Exemplarily, a BV parameter may be used to indicate a position of a reference block relative to a current block, that is, an offset between the current block and the reference block is the BV parameter.

In some embodiments, for determining the first candidate list of the current block, the method may include: determining a first search region of the current block; and determining the first candidate list of the current block based on the first search region.

It should be noted that in the embodiments of the present disclosure, determining the first search region of the current block may include: determining a first template of the current block; and determining the first search region of the current block based on the first template.

In the embodiments of the present disclosure, a template type of the current block may be determined first, and then the first template of the current block is determined according to the template type. Determining the template type of the current block may include: determining the template type according to reference samples of the current block; or determining the template type according to indication information in a bitstream; or determining the template type according to size parameters of the current block.

In the embodiments of the present disclosure, reference samples of the current block may include at least one of: left neighboring reference samples, upper neighboring reference samples, and upper-left neighboring reference samples of the current block.

It can be understood that in the embodiments of the present disclosure, reference samples of the current block may refer to reference samples neighboring to the current block, where the neighboring may be spatial neighboring, but is not limited thereto. For example, the neighboring may also be temporal neighboring, spatial and temporal neighboring. Reference samples of the current block may be those obtained by processing spatially neighboring reference samples, temporally neighboring reference samples, or spatially and temporally neighboring reference samples, which is not limited herein.

It can also be understood that reference samples of the current block in the embodiments of the present disclosure may include neighboring reconstructed samples of the current block, that is, neighboring reconstructed samples of the current block may be used as a template to search for a matching template within the first search region. Reference samples of the current block, namely neighboring reconstructed samples of the current block, may include upper reference samples, upper-left reference samples, upper-right reference samples, left reference samples, and lower-left reference samples of the current block.

It can also be understood that when determining the template type by using reference samples of the current block, the template type may be classified and determined according to availability of neighboring reference samples.

In some embodiments, when determining the template type according to reference samples of the current block: if left neighboring reference samples, upper neighboring reference samples, and upper-left neighboring reference samples of the current block are all available, the template type of the current block is determined to be a first value; if only left neighboring reference samples of the current block are available, the template type is determined to be a second value; if only upper neighboring reference samples of the current block are available, the template type is determined to be a third value; if only left neighboring reference samples and upper-left neighboring reference samples of the current block are available, the template type is determined to be a fourth value; if only left neighboring reference samples and lower-left neighboring reference samples of the current block are available, the template type is determined to be a fifth value; and if only upper neighboring reference samples and upper-right neighboring reference samples of the current block are available, the template type is determined to be a sixth value.

It should be noted that in the embodiments of the present disclosure, in some circumstances, if left neighboring reference samples and upper neighboring reference samples of the current block are both available, the template type of the current block is determined to be the first value. That is, for an L-shaped template, upper-left neighboring reference samples may be absent in some circumstances.

It should be noted that the first value, the second value, the third value, the fourth value, the fifth value, and the sixth value may be any numerical values, which are not limited in the present disclosure. For example, the six values may be 1, 2, 3, 4, 5, and 6 in sequence.

Exemplarily, refTemplateType may be used to denote the template type. As shown in FIG. 3, grid-filled blocks represent the current block, a neighboring region of the current block serves as a template T, and six template types are illustrated.

As an example, the six template types are as follows: when upper-left reference samples, upper reference samples, and left reference samples are all available, refTemplateType is set to 1, with the template shape as shown in (a) of FIG. 3; when only left reference samples are available, refTemplateType is set to 2, with the template shape as shown in (b) of FIG. 3; when only upper reference samples are available, refTemplateType is set to 3, with the template shape as shown in (c) of FIG. 3; when only left reference samples and upper-left reference samples are available, refTemplateType is set to 4, with the template shape as shown in (d) of FIG. 3; when only left reference samples and lower-left reference samples are available, refTemplateType is set to 5, with the template shape as shown in (e) of FIG. 3; and when only upper reference samples and upper-right reference samples are available, refTemplateType is set to 6, with the template shape as shown in (f) of FIG. 3.

In some embodiments, the template type of IntraTMP may be selected by combining availability information of the foregoing reference samples and an indication in the bitstream. For example, a serial number is agreed for each template type, and actually used template serial number information is transmitted in the bitstream, so that the template type can be determined at a decoding end. That is, in the embodiments of the present disclosure, the template type may be determined according to availability information of reference samples of the current block, or according to indication information in the bitstream, or according to a combination thereof, which is not limited herein.

Further, when determining the first template corresponding to the current block according to the template type, the method may further include: determining template reference samples of the current block according to the template type and a template size corresponding to the template type; and then determining the first template of the current block according to the template reference samples.

It should be noted that the first template of the current block may include template reference samples of the current block. The template reference samples of the current block may be determined by the template type of the current block and a template size corresponding to the template type.

It should also be noted that the first template of the current block may be composed of reconstructed samples in one or more regions of the current block, including upper, upper-right, left, lower-left and upper-left regions, that is, composed of the reference samples of the current block.

It should also be noted that the template size corresponding to the template type may be preset, or indicated by a syntax element in the bitstream, or adaptively selected according to a block size or other information. For example, when acquiring a left template, templateW_size may be set to 4; and when acquiring an upper template, templateH_size may be set to 4.

Correspondingly, by combining a value of refTemplateType of the current block and a template size corresponding to the refTemplateType, it can be determined which part of reconstructed samples are acquired as template reference samples of the current block, so as to determine the corresponding first template. Exemplarily, when refTemplateType is 1, reconstructed samples on the left, upper-left and upper sides of the current block may be acquired; when refTemplateType is 2, only the left four columns of reconstructed pixels of the current block are acquired; when refTemplateType is 3, only the upper four rows of reconstructed samples of the current coding block are acquired.

Certainly, the preset template size may be any integer greater than 0, and is not limited to 4, which is not limited herein.

That is, template reference samples of the current block determined from reference samples of the current block by combining the template type of the current block and the corresponding template size may serve as the first template corresponding to the current block.

It can be understood that the search process of vector parameters may include initialization, determining a search region of the first template in a current frame (i.e., the first search region), and searching in the first search region to determine one or more best vector parameters. Therefore, the initialization needs to be completed before performing search processing.

Exemplarily, as shown in FIG. 5, nTbW and nTbH denote the size of the current block, templateW_size and templateH_size denote the template size, and uiPatchWidth and uiPatchHeight denote the size of a block including the current block and its template.

Correspondingly, during initialization, uiPatchWidth may be initialized to nTbW+templateW_size, and uiPatchHeight to nTbH+templateH_size. The templateW_size and templateH_size may be fixed constants, or indicated by syntax elements in the bitstream, or dynamically adjusted according to the current block size or other information. The templateW_size and templateH_size may be equal or unequal, for example, templateW_size=4 and templateH_size=4; or templateW_size is set to 4 when the width of the current block is greater than 8, or set to 2 when the width is less than or equal to 8; templateH_size is set to 4 when the height of the current block is greater than 8, or set to 2 when the height is less than or equal to 8.

Further, a cost threshold between templates is initialized and denoted as diffThreshold. For example, when the cost function is SAD, the threshold satisfies: diffThreshold=((1≪bitDepth)≫2)×(uiPatchHeight×uiPatchWidth-nTbH×nTbW). When the picture bit depth bitDepth is 10, diffThreshold indicates that a distortion threshold of each sample in the template region is 256.

Further, a position of a CTB where the current block (CB) is located is initialized: ctbRsX, ctbRsY.

Further, a position offset of the CB within the current CTB is initialized: offsetLCBY = yTbCmp - ctbRsY, offsetLCBX = xTbCmp - ctbRsX.

Further, iTemplateSizeH is initialized to be templateH_size and iTemplateSizeW is initialized to be templateW_size.

Further, iBvShift is initialized, where iBvShift denotes the precision of a vector parameter (BV). For example, the precision of the BV may be integer-sample precision with iBvShift set to 0; or sub-sample precision, where iBvShift set to 1 denotes 1/2-sample precision and iBvShift set to 2 denotes 1/4-sample precision, which is not limited herein.

Further, a preset search range of the template is initialized. The preset search range may be set to a fixed size or dynamically adjusted according to the size of the current block. For example: searchRangeWidth=TMP_SEARCH_RANGE_MULT_FACTOR×nTbW, searchRangeHeight=TMP_SEARCH_RANGE_MULT_FACTOR×nTbH. A value of TMP_SEARCH_RANGE_MULT_FACTOR may be a preset value, or indicated by a syntax element in the bitstream, or adaptively adjusted according to the current block size and other information, for example, the value is set to 5.

It can also be understood that the first search region may include a first type search region and/or a second type search region. The first type search region is a rectangular search region around the current block. The second type search region is a region pointed to by vector parameters corresponding to preset search positions of the current block and a region pointed to by automatic repositioning.

The first type search region includes a fully reconstructed region and/or a pending reconstructed region. All samples in the fully reconstructed region are reconstructed samples; samples in the pending reconstructed region include reconstructed samples and/or unreconstructed samples.

That is, the first search region in the embodiments of the present disclosure is divided into two types:
One type is a peripheral rectangular search region, which is further divided into a fully reconstructed region where all samples have been reconstructed (such as regions R1 to R4 in FIG. 6), and a pending reconstructed region where it is uncertain whether all samples have been reconstructed (such as regions R5 to R6 in FIG. 6).

The other type is an expanded search region, which is defined as a region pointed to by BVs corresponding to spatially neighboring and non-neighboring PUs (regarded as R7 in the embodiment corresponding to FIG. 6) and a region pointed to by automatic repositioning (regarded as R8). Since search points in R7 and/or R8 are not necessarily neighboring to each other, searching for R7 and/or R8 is performed point by point according to a list.

In some embodiments, determining the first candidate list of the current block based on the first search region may include: searching in the first search region according to a first search step size to determine one or more first candidate vector parameters; and adding the one or more first candidate vector parameters to the first candidate list of the current block.

In a specific embodiment, searching in the first search region according to the first search step size to determine one or more first candidate vector parameters may include: traversing search points in the first search region according to the first search step size, and determining a first matching cost between a matching template corresponding to each search point in the first search region and the first template according to a preset matching criterion; determining one or more matched search points according to the first matching cost, and determining one or more first candidate vector parameters based on the one or more matched search points.

It should be noted that the first search step size may be set to 3, and the obtained first candidate list may be referred to as an initial coarse search list.

It should also be noted that the preset matching criterion may be any one of SAD, SATD, SSE, MAD, MAE, MSE, and NCC.

In a possible implementation, traversing search points in the first search region may include the following content.

For a fully reconstructed region (such as regions R1 to R4 in FIG. 6), based on each search point (iPosHor,iPosVer) in each search region, namely each BV (composed of a horizontal component and a vertical component (pX,pY), where pX=iPosHor-xTbCmp, pY=iPosVer-yTbCmp, pX is between bvXMins and bvXMaxs, and pY is between bvYMins and bvYMaxs), a matched reconstructed block of the current block may be found in the reconstructed region, and neighboring reconstructed samples of the matched reconstructed block serve as a matching template. A matching cost between a neighboring template of the current block and a neighboring template of the reconstructed block is computed and denoted as pDiff.

For pending reconstructed regions (such as regions R5 to R6 in FIG. 6), based on each search point (iPosHor,iPosVer) in each search region, namely a BV (composed of a horizontal component and a vertical component (pX,pY), where pX=iPosHor-xTbCmp, pY=iPosVer-yTbCmp, pX is between bvXMins and bvXMaxs, and pY is between bvYMins and bvYMaxs), availability determination may be performed on such region:

If available, a matched reconstructed block of the current block may be found in the reconstructed region, and neighboring reconstructed samples of the matched reconstructed block serve as a matching template; a matching cost between a neighboring template of the current block and a neighboring template of the reconstructed block is computed and also denoted as pDiff; and
If unavailable, template matching cost computation is skipped.

The availability determination includes but is not limited to simultaneous establishment of one or more of the following conditions:
Each sample in the template is within a valid coordinate range limited by the picture sample boundary;
Each sample in the reconstructed block corresponding to the template is within the valid coordinate range limited by the picture sample boundary;
Each sample in the template and each sample in the corresponding reconstructed block are within a prescribed range of a search window;
Each sample in the template is located in a same Tile as a current coding region;
Each sample in the reconstructed block corresponding to the template is located in a same Tile as the current coding region;
Each sample in the template has been reconstructed;
Each sample in the reconstructed block corresponding to the template is not located in the current encoding region; and
Each sample in the reconstructed block corresponding to the template has been reconstructed.

All available search points in all search ranges (regionId=0, 1, 2, 3, 4, 5) are traversed and compared to select 30 search points with a minimum matching cost pDiff. Corresponding matching costs are denoted as pDiff_BEST[n], n=0,...,29; corresponding BVs are denoted as best BVs BV_BEST[n], each being a coordinate pair (pX_BEST,pY_BEST), n=0,...,29; and corresponding matching templates are denoted as best matching templates T_BEST[n], n=0,...,29.

Assuming the first search step size is 3, a search is performed in the first search region with a step size of 3. For example, within the search range where pX is between bvXMinsregionId and bvXMaxsregionId and pY is between bvYMinsregionId and bvYMaxsregionId in each region, a coarse search is performed with a step size of 3, and the top P best matching costs obtained through template matching are recorded as pDiff1_BEST[p], p=0,...,P-1, and corresponding BVs are recorded as BV1_BEST[p], p=0,...,P-1. P may be 1 or an integer greater than 1 as required, and the search region where the best matching search point is located is denoted as bestRegionId[p], p=0,...,P-1. The first candidate list can be constructed according to the P BV1_BEST[p].

S1502: A second position block is determined based on at least one candidate vector parameter in the first candidate list and/or a vector parameter of a first position block of the current block.

S1503: When a decoding parameter of the second position block includes a vector parameter, whether the vector parameter of the second position block satisfies a second condition is determined based on the vector parameter of the second position block.

It should be noted that the first position block of the current block may include a block at a spatially neighboring position and/or a non-neighboring position of the current block, and the number of the first position block may be one or more.

Exemplarily, for predefined one or more first position blocks, predefined search positions may be 5 spatially neighboring positions of the current block: left (xTbCmp-1,yTbCmp+nTbH-1), upper-left (xTbCmp-1,yTbCmp-1), upper (xTbCmp+nTbW-1,yTbCmp-1), upper-right (xTbCmp+nTbW,yTbCmp-1), lower-left (xTbCmp-1,yTbCmp+nTbH), and 18 spatially non-neighboring positions (as shown in FIG. 9).

It should also be noted that determining the second position block may include: determining the second position block based on at least one candidate vector parameter in the first candidate list; and/or determining the second position block based on the vector parameter of the first position block of the current block.

That is, the second position block may be determined based on at least one candidate vector parameter in the first candidate list, or based on the vector parameter of the first position block, or jointly based on both, which is not limited herein.

In some embodiments, when determining the second position block based on the vector parameter of the first position block of the current block, the method may further include: when a decoding parameter of the first position block includes a vector parameter, determining whether the vector parameter of the first position block satisfies a first condition based on the vector parameter of the first position block; and determining the second position block based on the vector parameter of the first position block when the vector parameter of the first position block satisfies the first condition.

It should be noted that when the vector parameter is a BV, if the first position block of the current block adopts BV-based prediction technology (i.e., IBC/IntraTMP), it may be determined that a decoding parameter of the first position block includes a vector parameter.

It should also be noted that the first condition may include that a cost value corresponding to the vector parameter of the first position block is superior to a cost value corresponding to at least one candidate vector parameter in the first candidate list. That is, if the cost value corresponding to the vector parameter of the first position block is superior to the cost value corresponding to the at least one candidate vector parameter in the first candidate list, it is determined that the vector parameter of the first position block satisfies the first condition.

In some embodiments, determining that the at lesat one vector parameter of the first position block satisfies the first condition may include: determining the cost value corresponding to the vector parameter of the first position block according to a matching cost between a matching template corresponding to the vector parameter of the first position block and a first template; determining a cost value corresponding to at least one candidate vector parameter in the first candidate list according to a matching cost between a matching template corresponding to at least one candidate vector parameter in the first candidate list and the first template; and determining that the vector parameter of the first position block satisfies the first condition when the cost value corresponding to the vector parameter of the first position block is less than the cost value corresponding to the at least one candidate vector parameter in the first candidate list.

It should also be noted that the method may further include: updating the first candidate list based on the vector parameter of the first position block when the vector parameter of the first position block satisfies the first condition.

In a specific embodiment, updating the first candidate list based on the vector parameter of the first position block may includce: adding the vector parameter of the first position block to the first candidate list.

That is, when the vector parameter of the first position block satisfies the first condition, the vector parameter of the first position block may be used to update the first candidate list. Exemplarily, the vector parameter of the first position block may be added to the first candidate list according to a cost magnitude, and the item with the maximum cost in the first candidate list is deleted to obtain the updated first candidate list.

It should also be noted that a search region where the vector parameter of the first position block is located is determined as R6, that is, bestRegionId is set to 6.

It should also be noted that during the update process, it is first checked whether a PU corresponding to these predefined search positions adopt IntraTMP/IBC technology, that is, whether a decoding parameter of the PU corresponding to these predefined search positions includes a vector parameter; if so, a BV of the PU is determined, and the first candidate list is updated by using the BV. The specific update operation is as follows: sequentially accessing each item in the first candidate list, computing a template matching cost corresponding to each BV, comparing the cost with a template matching costs in the first candidate list, and if the compared cost value corresponding to a BV is less than the maximum cost in the first candidate list, replacing an inferior BV in the first candidate list with the BV. For example, the BV is inserted into the first candidate list according to an order of cost magnitude, and the item with the maximum cost in the first candidate list is deleted. The value of bestRegionId of its search region is set to 6.

It can be understood that the number of the second position block may be one or more.

It should also be noted that the second position block denotes a reference block pointed to by the vector parameter of the first position block, or a block pointed to by a vector parameter of a reference block pointed to by the vector parameter of the first position block.

It should also be noted that in the embodiments of the present disclosure, the vector parameter still take BV as an example. If the second position block adopts a BV-based prediction mode, namely IBC or IntraTMP, the decoding parameter of the second position block includes a vector parameter accordingly.

For example, regarding the second position block, the method takes the vector parameter of the first position block as a current BV. The method first determines several candidate positions of the current block, e.g., five candidate positions: the center position (xTbCmp+nTbW/2,yTbCmp+nTbH/2), the upper-left position (xTbCmp,yTbCmp), the upper-right position (xTbCmp+nTbW-1,yTbCmp), the lower-left position (xTbCmp,yTbCmp+nTbH-1), and the lower-right position (xTbCmp+nTbW-1,yTbCmp+nTbH-1). Then the method checks whether a PU corresponding to the coordinates of the five candidate positions plus the current BV adopts the BV-based prediction mode (IBC/IntraTMP). If the PU adopts the mode, the method regards the newly obtained BV as the current BV and repeats the above operations to determine the vector parameter of the second position block (also called as an expanded BV). In other words, in the embodiments of the present disclosure, the expanded BV can be the BV stored in a block pointed to by the current BV, or the BV stored in a block pointed to by the block that the current BV points to, and so on.

In some embodiments, the second condition may include that a cost value corresponding to the vector parameter of the second position block is superior to a cost value corresponding to at least one candidate vector parameter in the first candidate list. That is, when the cost value corresponding to the vector parameter of the second position block is superior to the cost value corresponding to the at least one candidate vector parameter in the first candidate list, the vector parameter of the second position block satisfies the second condition.

It should also be noted that the method in the embodiments of the present disclosure may also include: determining the cost value corresponding to the vector parameter of the second position block according to a matching cost between a matching template corresponding to the vector parameter of the second position block and a first template; determining the cost value corresponding to the at least one candidate vector parameter in the first candidate list according to a matching cost between a matching template corresponding to at least one candidate vector parameter in the first candidate list and the first template; and determining that the vector parameter of the second position block satisfies the second condition when the cost value corresponding to the vector parameter of the second position block is less than the cost value corresponding to the at least one candidate vector parameter in the first candidate list.

S1504: The first candidate list is updated based on the vector parameter of the second position block when the vector parameter of the second position block satisfies the second condition.

It should be noted that the number of the vector parameter of the second position block may be be one or more in the embodiments of the present disclosure. Determination of the vector parameter of the second position block may be stopped when traversal on all the vector parameter of the first position block is completed, or when the number of acquired vector parameters of the second position block exceeds a first threshold.

It should also be noted that the first threshold is denoted by V in the embodiments of the present disclosure. For instance, V may be set to 15, or other values such as 1, 2, 5 and 10, which is not limited herein.

In some embodiments, the operation of updating the first candidate list based on the vector parameter of the second position block may include: adding the vector parameter of the second position block to the first candidate list.

That is to say, the first candidate list may be updated with the vector parameter of the second position block when the vector parameter satisfies the second condition. For example, the vector parameter of the second position block is inserted into the first candidate list according to a cost magnitude, and the item with the maximum cost in the list is deleted to obtain the updated first candidate list.

In some embodiments, the method may further include: determining the search region where the vector parameter of the second position block is located to R7, namely assigning a value of 7 to bestRegionId.

It should be noted that in the embodiments of the present disclosure, for the acquired a vector parameter of the first position block, operations are performed as below: firstly, for each current BV, determining five positions of the current block: the center (xTbCmp+nTbW/2,yTbCmp+nTbH/2), upper-left (xTbCmp,yTbCmp), upper-right (xTbCmp+nTbW-1,yTbCmp), lower-left (xTbCmp,yTbCmp+nTbH-1), and lower-right (xTbCmp+nTbW-1,yTbCmp+nTbH-1); checking whether a PU corresponding to the coordinates of the five positions plus the current BV adopts the BV-based prediction mode (IBC/IntraTMP); if the PU adopts the mode, computing a vector sum of the BV stored in the PU and the current BV and recording the sum as BV', taking the BV' as a new current BV, and repeating the above operations to continuing determination of more available options of an expanded BV; and if the PU does not adopt the mode, checking a next position. The above operations repeat until the check of all the five positions is completed or the number of determined expanded BVs exceeds a threshold V, and then determination of the vector parameter of the second position block is stopped.

It should also be noted that the first candidate list is updated after multiple expanded BVs are obtained. The specific update process includes: computing a template matching cost for each of expanded BVs, and comparing the cost with template matching costs of BVs in the first candidate list; and if the cost for an expanded BV is less than a maximum template matching cost in the first candidate list, replacing an inferior BV in the list with this expanded BV. An example of the replacement operation includes: inserting the expanded BV into the first candidate list in an order of cost magnitude, and removing the item with the maximum cost from the updated first candidate list. The search region bestRegionId where the newly inserted BV is located is set to 7.

That is to say, in the embodiments of the present disclosure, when a BV of the first position block (a spatially neighboring position and/or a non-neighboring position of the current block) is better than at least one BV in the first candidate list (the first condition), a block pointed to by the BV of the first position block is checked; if the block pointed to by such BV also has a BV, whether to add this BV into the first candidate list is determined (the second condition). Another characteristic of the embodiments of the present disclosure is that the first position block may provide two candidate BVs for the first candidate list (i.e., adding one BV when the first condition is satisfied and adding another BV when the second condition is satisfied), to obtain the updated first candidate list (namely the final coarse search list).

S1505: A predicted value of the current block is determined based on the updated first candidate list.

It should be noted that in the embodiments of the present disclosure, a fine search may be performed based on the final coarse search list after acquiring the list. The search process includes a coarse search followed by a fine search.

In some embodiments, the operation of determining the predicted value of the current block based on the updated first candidate list includes: determining a vector parameter of the current block based on the updated first candidate list, and then determining the predicted value of the current block based on the vector parameter of the current block.

In a specific embodiment, the operation of determining a vector parameter of the current block based on the updated first candidate list includes: determining a second search region indicated by a candidate vector parameter in the updated first candidate list, and searching in the second search region according to a second search step size to determine the vector parameter of the current block. The the second search step size is smaller than the first search step size.

It should be noted that the second search step size may be be set to 1 or other values in the embodiments of the present disclosure. The second search step size is required to be smaller than the first search step size used in the coarse search.

For example, the best BV BV1_BEST[p] (p=0,...,M-1) obtained from the updated first candidate list is taken as anchor points for a fine search around these anchor points.

For each fine search anchor point, a refined search range including TmpRefineRangeHor and TmpRefineRangeVer is first determined. The refined search range (namely the second search region) may be of a fixed size and may correlate with a search region. For example, both TmpRefineRangeHor and TmpRefineRangeVer may be set to 1 for anchor points of search regions 0 to 5; both TmpRefineRangeHor and TmpRefineRangeVer may be set to 2 for anchor points of search region 6. Then a position of a best matched reconstructed block obtained from the coarse search is computed as the base position of a fine search region: BestPosX = xTbCmp + pX1_BEST, BestPosY = yTbCmp + pY1_BEST.

Traveral is directly performed using a search window in the fine search region which is regarded as an entire pending reconstructed region.

A new search range is acquired based on the position of the best matched block obtained from the coarse search, including:
$iHorMaxrefine = min \left(picWidth-nTbW, BestPosX+TmpRefineRangeHor\right) ;$
$iHorMinrefine = max \left(iTemplateSizeW, BestPosX-TmpRefineRangeHor\right) ;$
$iVerMaxrefine = min \left(picHeight-nTbH , BestPosY+TmpRefineRangeVer\right) ;$ and
$iVerMinrefine = max \left(iTemplateSizeH, BestPosY-TmpRefineRangeVer\right) .$

Then, adjusted BVs bvXMins, bvXMaxs, bvYMins and bvYMaxs may be computed according to iVerMinrefine, iVerMaxrefine, iHorMinrefine and iHorMaxrefine:
$bvXMins = iHorMinrefine - xTbCmp ;$
$bvXMaxs = iHorMaxrefine - xTbCmp ;$
$bvYMins = iVerMinrefine - yTbCmp ;$ and
$bvYMaxs = iVerMaxrefine - yTbCmp .$

The fine search is performed within a BV range where pX is between bvXMinsrefine and bvXMaxsrefine and pY is between bvYMinsrefine and bvYMaxsrefine, namely, all the search positions in a fine search window are directly traversed and sequentially subjected to availability determination. For example, a second search step size of 1 is used for the fine search, top T best matching costs obtained by template matching of available points are recorded as pDiff_BEST[t] (t=0,...,T-1), and the corresponding BVs are recorded as best BVs BV_BEST[t] (t=0,...,T-1). Here T is an integer greater than or equal to 1, for example, T is set to 1.

After completing the above operation, one or more best BVs BV_BEST[n] (n=0,...,N-1) that meet different algorithm requirements may be obtained by combining results of the coarse search and the fine search (the fine search includes a search based on one or multiple anchor points). Each best BV is a coordinate pair (pX_BEST, pY_BEST). The pX_BEST and pY_BEST respectively represent the horizontal offset and vertical offset between a best matching template and a current block template, and also represent the horizontal offset and vertical offset between a best matched reconstructed block and a current block. The vector parameter of the current block may be accordingly determined.

In some embodiments, the operation of searching in the second search region with the second search step size to determine the vector parameter of the current block includes: performing a sub-sample search in the second search region according to the second search step size to determine the vector parameter of the current block. In other words, a sub-sample level search can be implemented in the fine search stage.

It should also be noted that the number of the vector parameter of the current block may be one or more in the embodiments of the present disclosure. When the current block has a pluarality of vector parameters, weighted fusion may be performed on positions corresponding to multiple BVs to acquire the predicted value of the current block.

In some embodiments, when the current block has one vector parameter, the operation of determining the predicted value of the current block based on the vector parameter of the current block includes: determining a reference block of the current block based on the vector parameter, and then determining the predicted value of the current block based on the reference block.

For example, a simple translation and copy manner may be adopted to determine the reference block of the current block in the embodiments of the present disclosure. The specific operation includes: for x=0...nTbW-1 and y = 0...nTbH-1, reconstructed samples recSamples of the current frame (namely the reference block of the current block) are determined through the formula RefBlockn [x][y] = recSamples[x + pXn][y + pYn].

It should be noted that an initial reconstructed block of the current block may first be determined based on the vector parameter of the current block, and then correction may be performed on the initial reconstructed block to obtain the reference block of the current block. Alternatively, the reference block may first be filtered to acquire a filtered reference block, and then the predicted value of the current block is determined based on the filtered reference block.

It should also be noted that the predicted value determined through the vector parameter of the current block may serve as the final predicted value directly, or may further be subjected to correction (such as a clip operation) to obtain the final predicted value of the current block.

In some embodiments, the operation of determining the predicted value of the current block based on the reference block includes: determining a first prediction block of the current block based on the reference block; predicting the current block according to a first prediction mode to determine a second predicted block of the current block, wherein the first prediction mode is a non-intra template matching prediction mode, and determining the predicted value of the current block based on the first predicted block and the second predicted block.

It should be noted that the first prediction mode may be a prediction mode different from the Intra TMP mode used for the current block, such as a PLANAR mode, a CCLM mode and an angular prediction mode. Here, weighted fusion may be performed on the first prediction block and the second prediction block to determine the predicted value of the current block.

That is to say, when determining the predicted value of the current block, the predicted value may be corrected through local filtering or through weighted fusion of multiple predicted values.

In some embodiments, when there are a plurality of vector parameters of the current block, the operation of determining the predicted value of the current block based on the vector parameter of the current block includes: determining a plurality of reference blocks of the current block based on the plurality of vector parameters of the current block, and determining the predicted value of the current block based on the plurality of reference blocks.

It should also be noted that the operation of determining the predicted value of the current block based on the plurality of reference blocks includes: determining a plurality of predicted blocks of the current block based on the plurality of reference blocks, and performing weighted fusion on the plurality of predicted blocks to determine the predicted value of the current block.

It can be understood that under the IntraTMP mode, the predicted value may be obtained not only through the basic copy mode, but also through filtering and fusion of positions corresponding to multiple BVs, as well as through prediction combined with a regular intra prediction mode.

In some embodiments, the operation of determining the predicted value of the current block based on the vector parameter of the current block further includes: decoding a bitstream to determine a value of a first syntax element; determining a predicted-value construction mode of the current block according to the value of the first syntax element and a predicted-value construction candidate list of the current block; and determining the predicted value of the current block based on the vector parameter of the current block and the predicted-value construction mode.

That is to say, when determining the predicted value of the current block, the predicted-value construction candidate list may be determined based on multiple types of single predicted values, filtered predicted values, and weighted predicted values, and/or a predicted-value construction manner of these predicted values; and a specific item in the predicted-value construction candidate list may be determined at the decoding end through the syntax element transmitted in the bitstream, so as to acquire the actual predicted value.

In some embodiments, the method may further include: decoding a bitstream to determine a value of a second syntax element, and executing the operation of determining the first candidate list of the current block when the second syntax element indicates that the current block adopts the Intra TMP mode.

It should be noted that a value of the first syntax element is used to indicate an index of the predicted-value construction mode of the current block in the predicted-value construction candidate list; and a value of the second syntax element is used to indicate whether the current block uses the Intra TMP mode.

It should also be noted that it is determined that the current block uses the Intra TMP mode when the value of the second syntax element equals a first preset value, and it is determined that the current block dose not use the Intra TMP mode when the value of the second syntax element equals a second preset value.

The first preset value is different from the second preset value in the embodiments of the present disclosure. For example, the first preset value may be set to 1 and the second preset value may be set to 0; or, the first preset value may be set to 0 and the second preset value may be set to 1; or, the first preset value may be defined as true and the second preset value may be set as false; or the first preset value may be set as false and the second preset value may be set as true.

In a specific embodiment, the first preset value is set to 1 and the second preset value is set to 0. For example, when the value of the second syntax element is 1, the second syntax element indicates that the current block adopts the Intra TMP mode, and the decoding method shown in FIG. 15 is executed accordingly. The method of the present disclosure is applicable to the Intra TMP mode.

Further, a reconstructed value of the current block may be determined according to the predicted value of the current block after the predicted value of the current block is determined based on the vector parameter of the current block.

In some embodiments, the method may further include: decoding a bitstream to acquire a prediction residual of the current block, and determining a reconstructed value of the current block according to the prediction residual and the predicted value of the current block.

It should also be noted that the reconstructed value of the current block may be determined by adding the prediction residual and the predicted value, so as to implement the reconstruction of the current block.

It should also be noted that it is not necessary to divide the search into coarse search and fine search steps; instead, a one-time search may be performed, and then BV options may be expanded based on a result of the one-time search to obtain final vector parameters; subsequently, the predicted value of the current block is determined based on the final vector parameters.

It should also be noted that under the IntraTMP mode, besides a basic copy method for obtaining a predicted value, there are other methods including: a method of fusing positions corresponding to multiple BVs; a method of filtering reference blocks corresponding to BVs and then copying the filtered blocks; and a method of performing sub-sample interpolation on a reference block corresponding to a sub -sample BV and then copying the interpolated block. For example, after a BV candidate list is acquired through template matching in a regional search at a decoding end, the top N items (for example, N=3) are selected for weighted fusion, which may be referred to as an IntraTMP Fusion mode. Alternatively, after one best BV is acquired, multiple points are selected around the best BV, and predicted values corresponding to the multiple points are weighted and fused to obtain a final predicted value, which may be referred to as an IntraTMP FLM mode. Or after one best BV is acquired, templates are sorted with sub-sample precision to select a best direction and precision, and an interpolation filter is used to compute a predicted value, which may be referred to as an IntraTMP SubPel mode. The specific implementation mode is not limited herein.

The embodiments of the present disclosure provide a decoding method, which is specifically a method for expanding the coverage of an IntraTMP search list. The method includes: first determining a first candidate list of a current block, the first candidate list includeing one or more candidate vector parameters; then determining a second position block based on at least one candidate vector parameter in the first candidate list and/or a vector parameter of a first position block of the current block; when a decoding parameter of the second position block includes a vector parameter, determining whether the vector parameter of the second position block satisfies a second condition; updating the first candidate list based on the vector parameter of the second position block when the second condition is satisfied; and determining a predicted value of the current block based on the updated first candidate list. In this way, vector information of several second position blocks may be expanded based on at least one vector parameter in the initial first candidate list and a vector parameter of the first position block (including spatially neighboring and non-neighboring blocks) of the current block during the update process of the first candidate list, and the first candidate list may be supplemented with the expanded vector information. The reconstructed information of spatially neighboring and non-neighboring blocks may be fully used, candidate vector information can be deduced based on vector information of these reconstructed blocks without increasing encoding complexity significantly, and the coverage of the IntraTMP search list is expanded. The prediction accuracy is accordingly improved, the bit rate is saved, the encoding and decoding efficiency is optimized, and overall encoding and decoding performance is enhanced.

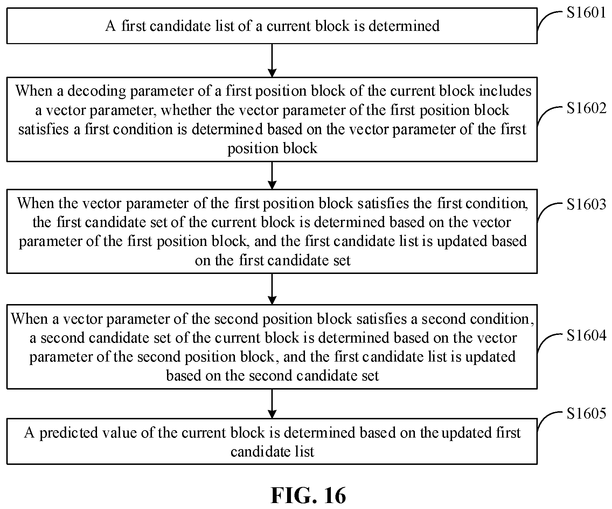

Based on the foregoing decoding method, in another embodiment of the present disclosure, FIG. 16 illustrates a second schematic flowchart of a decoding method provided by the embodiments of the present disclosure. As shown in FIG. 16, the method includes the following operations.

S1601: A first candidate list of a current block is determined.

It should be noted that a first template of the current block is first determined, then a first search region of the current block is determined based on the first template, and a search is performed in the first search region with a step size of 3 to construct an initial coarse search list, namely the first candidate list. The first candidate list includes one or more candidate vector parameters.

S1602: When a decoding parameter of a first position block of the current block includes a vector parameter, whether the vector parameter of the first position block satisfies a first condition is determined based on the vector parameter of the first position block.

S1603: When the vector parameter of the first position block satisfies the first condition, a first candidate set of the current block is determined based on the vector parameter of the first position block, and the first candidate list is updated based on the first candidate set.

It should also be noted that the first position block of the current block may include a block at a spatially neighboring position and/or a non-neighboring position of the current block, and the number of the first position block may be one or more.

For example, for predefined one or more first position blocks, predefined search positions may be 5 spatially neighboring positions of the current block: left (xTbCmp-1,yTbCmp+nTbH-1), upper-left (xTbCmp-1,yTbCmp-1), upper (xTbCmp+nTbW-1,yTbCmp-1), upper-right (xTbCmp+nTbW,yTbCmp-1), lower-left (xTbCmp-1,yTbCmp+nTbH), and 18 spatially non-neighboring positions (as shown in FIG. 9).

It should also be noted that the first candidate set may be denoted as IntraTMP_Merge in the embodiments of the present disclosure. In some embodiments, the operation of updating the first candidate list based on the first candidate set may include: determining a cost value corresponding to a second candidate vector parameter in the first candidate set, and determining a maximum cost value corresponding to one or more candidate vector parameters in the first candidate list; and replacing a candidate vector parameter corresponding to the maximum cost in the first candidate list with the second candidate vector parameter to update the first candidate list when the cost value corresponding to the second candidate vector parameter is less than the maximum cost in the first candidate list. The second candidate vector parameter refers to any vector parameter in the first candidate set.

In a specific embodiment, the operation of replacing the candidate vector parameter corresponding to the maximum cost may include: adding the second candidate vector parameter into the first candidate list and deleting the candidate vector parameter corresponding to the maximum cost from the updated first candidate list.

For example, the construction process of the IntraTMP_Merge set (or called IntraTMP_Merge list) is as follows: checking whether PUs corresponding to these positions adopt IntraTMP/IBC technology; if so, storing BVs of such PUs into an IntraTMP_Merge set. After the IntraTMP_Merge set is constructed, the first candidate list is updated according to the IntraTMP_Merge set. The updating operation includes: sequentially accessing each item of the IntraTMP_Merge set, computing a template matching cost corresponding to each BV, and comparing the cost with template matching costs of the first candidate list; and if the cost is smaller than a maximum template matching cost in the first candidate list, replacing an inferior BV in the first candidate list with the BV. The replacement operation incluldes, for example: inserting the BV into the first candidate list according to an order of cost magnitude and deleting the BV with the maximum cost from the updated first candidate list. And a search region bestRegionId where the BV is located is set to 6.

S1604: when the vector parameter of the second position block satisfies the second condition, a second candidate set of the current block is determined based on the vector parameter of the second position block, and the first candidate list is updated based on the second candidate set.

It should be noted that the second position block may be determined based on at least part of candidate vector parameters in the updated first candidate list after the first candidate list is updated based on the first candidate set. The second candidate set may be constructed based on the vector parameter of the second position block when the vector parameter of the second position block satisfies the second condition.

In a possible implementation, the at least part of candidate vector parameters in the updated first candidate list refers to one or more second candidate vector parameters that are inserted into the first candidate list from the first candidate set. In some embodiments, the operation of determining the second candidate set of the current block may include: determining one or more second candidate vector parameters updated from the first candidate set into the first candidate list; determining the second position block based on the one or more second candidate vector parameters; and determining the second candidate set of the current block based on the vector parameter of the second position block.

In another possible implementation, the at least part of candidate vector parameters in the updated first candidate list refers to all candidate vector parameters in the updated first candidate list. Therefore, in some embodiment, the operation of determining the second candidate set of the current block may include: after updating the first candidate list based on the first candidate set, determining the second position block based on all candidate vector parameters in the updated first candidate list, and determining the second candidate set of the current block based on the vector parameter of the second position block.

In another possible implementation, the at least part of candidate vector parameters in the updated first candidate list may be a preset number of candidate vector parameters in the updated first candidate list. Therefore, in some embodiment, the operation of determining the second candidate set of the current block may include: after updating the first candidate list based on the first candidate set, selecting top N candidate vector parameter(s) from the updated first candidate list; and determining the second position block based on the N candidate vector parameter(s), and determining the second candidate set of the current block based on the vector parameter of the second position block, wherein N is a positive integer.

It should be noted that, in the embodiments of the present disclosure, the method may further include: determining a value of N based on a size parameter of the current block. That is, the number of checked objects may be limited according to the size of the current block. For example, the top 5 candidate vector parameters are checked for current blocks with a size less than or equal to 16×16, and the top 10 candidate vector parameters are checked for the current block of other sizes.

In another possible implementation, the operation of determining the second candidate set of the current block may include: after updating the first candidate list based on the first candidate set, clustering the updated first candidate list to determine M candidate vector parameter(s) located at cluster centers; determining the second position block based on the M candidate vector parameter(s); and determining the second candidate set of the current block based on the vector parameter of the second position block, wherein M is a positive integer.

It should also be noted that the second candidate set may be denoted as IntraTMP_EBVP in the embodiments of the present disclosure. For construction of the IntraTMP_EBVP set, check may be performed on only the BVs inserted into the first candidate list from the IntraTMP_Merge set, or EBVP-based update may be performed on all options in the updated first candidate list.

In addition, the BVs checked through the IntraTMP_EBVP list and the number of the checked BVs may be adjusted. For example, the top 5 or top 10 BVs in the corresponding BV set may be checked. Or, The number of checked objects may be limited according to the size of the current block, for example, the top 5 BVs are checked for a CU with a size less than or equal to 16×16 and the top 10 BVs are checked for a CU of other sizes. Alternatively, the updated first candidate list may be clustered according to a geometric distance to cluster centers. The number of cluster centers may be 2 to 5, for example, an EBVP operation is performed cluster centers only.

In another possible implementation, the construction of the second candidate set may be omitted. The method may further include: when the first candidate set is not full, filling the vector parameter of the second position block into the first candidate set until the first candidate set is full, and updating the first candidate list based on the filled first candidate set.

That is to say, BVs from EBVP may be supplemented into the IntraTMP_Merge set until the IntraTMP_Merge set is full, and then the first candidate list is updated with the filled IntraTMP_Merge set. The number of supplemented BVs is limited by the remaining vacancies of the IntraTMP_Merge set.

For example, after the first candidate list is updated based on the IntraTMP_Merge set, an IntraTMP_EBVP set is constructed for each BV that is inserted into the first candidate list from the IntraTMP_Merge set, and the first candidate list is updated again based on the IntraTMP_EBVP set. The specific process is as follows.

First, an IntraTMP_EBVP set is initially constructed from empty for each current BV. Five positions of a current CU is determined: the center (xTbCmp+nTbW/2,yTbCmp+nTbH/2), upper-left (xTbCmp,yTbCmp), upper-right (xTbCmp+nTbW-1,yTbCmp), lower-left (xTbCmp,yTbCmp+nTbH-1), and lower-right (xTbCmp+nTbW-1,yTbCmp+nTbH-1). It is checked whether a PU corresponding to the coordinates of the five positions plus the current BV adopts a BV-based prediction mode (IBC/IntraTMP). If the PU adopts the mode, a sum of the BV stored in the corresponding PU and the current BV is computed and recorded as BV' (i.e., a vector sum resulting from respective summation of vertical componentnts and horizontal components), BV' is added into the TMP_EBVP set, and the BV' is taken as a new current BV to repeat the above operation and supplement more valid options into the TMP_EBVP set. If the PU does not adopt the mode, check is continued for a next position.

In some embodiments, the method may further include: determining that construction of a third candidate set is completed when traversal on all the vector parameter of the second position block is completed or a number of candidate vector parameters in the second candidate set is greater than a first threshold.

It should be noted that the first threshold is denoted as V, which represents the length limit of the second candidate set in the embodiments of the present disclosure. For example, V may be set to 15. Or, other values such as 1, 2, 5 and 10 may be set for V to limit the length of the IntraTMP_EBVP set.

The above operations are repeated until the check of all the five positions is completed or the quantity of BVs in the constructed IntraTMP_EBVP set exceeds V, and then the construction of the IntraTMP_EBVP set is finished.

In some embodiments, after completing the construction of the second candidate set, the method may further include: determining a second matching cost between a matching template corresponding to a third candidate vector parameter in the second candidate set and a first template according to a preset matching criterion; and deleting the third candidate vector parameter from the second candidate set to update the second candidate set when the second matching cost is greater than a second threshold. The third candidate vector parameter refers to any vector parameter in the second candidate set.

That is to say, a restriction may be performed based on a template cost corresponding to a BV (such as SAD, SATD, or the like). A template cost is calculated for each BV in the second candidate set in advance, a cost threshold is limited, and a BV whose template cost does not exceed the cost threshold is added to the IntraTMP_EBVP set, to obtain a final second candidate set.

In some embodiments, the operation of updating the first candidate list based on the second candidate set may include: determining a cost value corresponding to a third candidate vector parameter in the second candidate set and a maximum cost value corresponding to one or more candidate vector parameters in the first candidate list; when the cost value of the third candidate vector parameter is smaller than the maximum cost in the first candidate list, the candidate vector parameter corresponding to the maximum cost in the first candidate list is replaced with the third candidate vector parameter to complete the update. The third candidate vector parameter refers to any vector parameter in the first candidate set.

In a specific embodiment, the operation of replacing the candidate vector parameter corresponding to the maximum cost in the first candidate list with the second candidate vector parameter may include: adding the third candidate vector parameter into the first candidate list, and deleting the candidate vector parameter corresponding to the maximum cost from the updated first candidate list.

For example, after completing the construction of the IntraTMP_EBVP set, the first candidate list is updated. The updating operation includes: sequentially accessing each BV in the IntraTMP_EBVP set, computing a template matching cost of each BV, and comparing the cost with template matching costs of BVs in the first candidate list; if the cost is less than a maximum template matching cost in the first candidate list, replacing an inferior BV in the first candidate list with the BV corresponding to the compared cost. The replacement operation includes, for example: inserting the BV into the first candidate list in order of cost magnitude and deleting the item with the maximum cost from the updated first candidate list. And, bestRegionId is set to 7 for the search region where the BV newly inserted into the first candidate list is located.

It should also be noted that the IntraTMP_EBVP set may be used independently of the IntraTMP_Merge set. That is, expansion is performed directly based on BVs obtained from a search in a search window under the IntraTMP mode only.

It should also be noted that it is not necessary to divide the search into coarse search and fine search steps; instead, a one-time search may be performed, and then BV options may be expanded based on a result of the one-time search to obtain final BVs.

In some embodiments, for updating the first candidate list, the method further includes: determining top K candidate vector parameter(s) in the first candidate set, and updating the first candidate list based on the top K candidate vector parameter(s). K is a positive integer.

That is to say, only the top K items (such as K=5) of the IntraTMP_Merge set are used to update the coarse search list, and expansion is performed only based on each BV in the IntraTMP_Merge set.

In some embodiments, for updating the first candidate list, the method further includes: determining top P candidate vector parameter(s) from the first candidate set, determining the second position block based on the P candidate vector parameter(s), and determining the vector parameter of the second position block; constructing a fourth candidate set of the current block based on the vector parameter of the second position block when the vector parameter of the second position block satisfies the second condition, and determining that construction of the fourth candidate set is completed when traversal on all the P candidate vector parameter(s) is completed or the fourth candidate set is full; determining a cost value corresponding to one or more candidate vector parameters in the fourth candidate set, and selecting Q candidate vector parameter(s) from the fourth candidate set according to the cost value corresponding to the one or more candidate vector parameters, and updating the first candidate list based on the Q candidate vector parameter(s). Both P and Q are positive integers.

That is to say, a Merge set or list may be maintained jointly using IntraTMP_Merge and IntraTMP_EBVP. For example, the top P BVs (such as P=5) is first selected from the IntraTMP_Merge set, IntraTMP_EBVP expansion is performed based on the P BVs to construct a new Merge set with a length of L (such as L=28). When the new Merge set is fully filled with the expanded BVs or the expansion of all P BVs is completed, costs of all BVs in the new Merge set are computed and ranked, top Q items (such as Q=5) after ranking are selected from the list to update the first candidate list.

S1605: A predicted value of the current block is determined based on the updated first candidate list.

It should be noted that a fine search may be performed based on a final coarse search list after acquiring the final coarse list. That is, the search process includes a coarse search stage followed by a fine search stage. After acquiring the first candidate list, the best BVs BV1_BEST[p] (p=0,...,M-1) obtained from the updated first candidate list are taken as anchor points for the fine search, specifically: determining a second search region indicated by a candidate vector parameter in the updated first candidate list; and searching in the second search region with a second search step size smaller than the first search step size adopted in the coarse search. For example, the second search step size is assumed to be 1, a fine search is performed around the anchor points of the first candidate list to determine the final a vector parameter of the current block.

It should also be noted that multiple reference blocks of the current block may be determined based on the vector parameter of the current block, and the predicted value of the current block may be determined according to the multiple reference blocks. The specific operation may include: determining multiple prediction blocks of the current block based on the multiple reference blocks, and performing weighted fusion on the multiple prediction blocks to acquire the predicted value of the current block.

The embodiments of the present disclosure provide a decoding method, which specifically is a method for expanding the coverage of an IntraTMP search list. The method utilizes information of spatially neighboring and non-neighboring reconstructed blocks, expands the search range of IntraTMP without significantly increasing encoding complexity, improves prediction accuracy, saves bit rate, optimizes encoding and decoding efficiency, and enhances overall encoding and decoding performance.

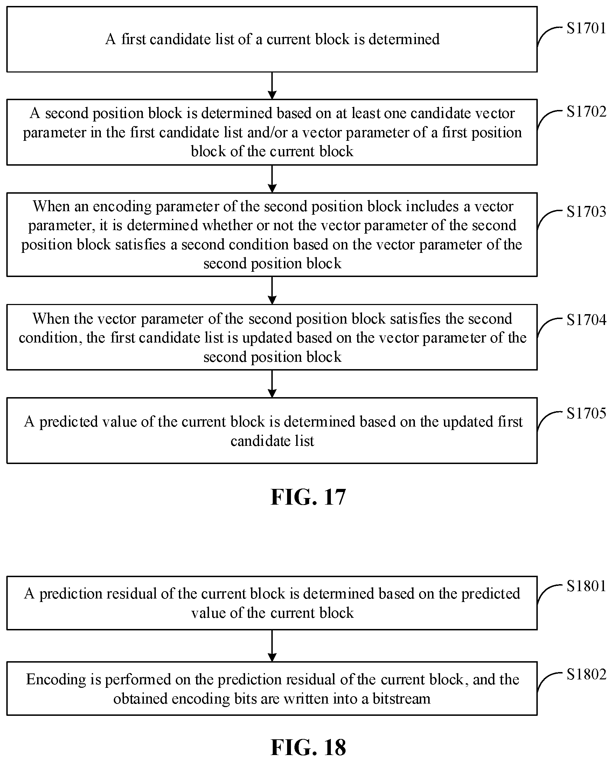

In still another embodiment of the present disclosure, FIG. 17 is a first schematic flowchart of an encoding method provided by the embodiments of the present disclosure. As shown in FIG. 17, the method includes the following operations.

S1701: A first candidate list of a current block is determined.

It should be noted that the encoding method in the embodiments of the present disclosure runs on an encoder. In addition, the encoding method relates to an intra prediction method, and more specifically, an intra prediction method based on an Intra TMP expanded BV list. Here, reconstructed information at spatially neighboring and non-neighboring positions is fully used, the coverage of the first candidate list is expanded, and prediction accuracy is therefore improved.

It should also be noted that a video picture may be split into multiple coding blocks in the embodiments of the present disclosure. Each coding block may include a first color component, a second color component and a third color component. The current block in the embodiments refers to a coding block of the video picture that is pending for intra prediction. When prediction is performed on the first color component of the current block and the first color component is a luma component, the current block may also be referred to as a luma block. When prediction is performed on the second color component of the current block and the second color component is a chroma component, the current block may also be referred to as a chroma block.

It should also be noted that the first candidate list may include one or more candidate vector parameters in the embodiments of the present disclosure. The vector parameters may include BV parameters and/or MV parameters. That is to say, the first candidate list may be a list includeing multiple candidate BVs, or a list includeing multiple candidate MVs.

For example, a BV parameter may be used to indicate a position of a reference block relative to a current block, that is, an offset between the current block and the reference block is the BV parameter.

In some embodiments, for determining the first candidate list of the current block, the method may include: determining a first search region of the current block; and determining the first candidate list of the current block based on the first search region.

It should be noted that the operation of determining the first search region of the current block may include: determining a first template of the current block, and determining the first search region of the current block based on the first template.

In the embodiments of the present disclosure, a template type of the current block may be determined first, and then the first template of the current block is determined according to the template type. Determining the template type of the current block may include: determining the template type according to reference samples of the current block; or determining the template type according to indication information in a bitstream; or determining the template type according to size parameters of the current block.

In the embodiments of the present disclosure, reference samples of the current block may include at least one of: left neighboring reference samples of the current block, upper neighboring reference samples of the current block, and upper-left neighboring reference samples of the current block.

It can be understood that reference samples of the current block refer to reference samples neighboring to the current block in the embodiments of the present disclosure. The neighboring herein mainly refers to spatial neighboring, but is not limited thereto. For example, the neighboring may also be temporal neighboring, spatial and temporal neighboring. Reference samples of the current block may also be samples obtained by processing spatially neighboring reference samples, temporally neighboring reference samples, or spatially and temporally neighboring reference samples, which is not limited herein.

It can also be understood that reference samples of the current block may include neighboring reconstructed samples of the current block, that is, neighboring reconstructed samples of the current block may be used as a template to search for a matching template within the first search region. Reference samples of the current block, namely neighboring reconstructed samples of the current block, may include upper reference samples, upper-left reference samples, upper-right reference samples, left reference samples, and lower-left reference samples of the current block.

It can also be understood that when determining the template type by using reference samples of the current block, the template type may be classified and determined according to availability of neighboring reference samples.

In some embodiments, when determining the template type according to reference samples of the current block: if left neighboring reference samples, upper neighboring reference samples, and upper-left neighboring reference samples of the current block are all available, the template type of the current block is determined to be a first value; if only left neighboring reference samples of the current block are available, the template type is determined to be a second value; if only upper neighboring reference samples of the current block are available, the template type is determined to be a third value; if only left neighboring reference samples and upper-left neighboring reference samples of the current block are available, the template type is determined to be a fourth value; if only left neighboring reference samples and lower-left neighboring reference samples of the current block are available, the template type is determined to be a fifth value; and if only upper neighboring reference samples and upper-right neighboring reference samples of the current block are available, the template type is determined to be a sixth value.

It should be noted that in the embodiments of the present disclosure, in some circumstances, if left neighboring reference samples and upper neighboring reference samples of the current block are both available, the template type of the current block is determined to be the first value. That is, for an L-shaped template, upper-left neighboring reference samples may be absent in some circumstances.

It should be noted that the first value, the second value, the third value, the fourth value, the fifth value, and the sixth value may be any numerical values, which are not limited in the present disclosure. For example, the six values may be 1, 2, 3, 4, 5, and 6 in sequence.

For example, the template type may be denoted as refTemplateType in the embodiments of the present disclosure. As shown in FIG. 3, grid-filled blocks represent the current block, a neighboring region of the current block serves as a template T, and six template types are illustrated.

As an example, the six template types are as follows: when upper-left reference samples, upper reference samples, and left reference samples are all available, refTemplateType is set to 1, with the template shape as shown in (a) of FIG. 3; when only left reference samples are available, refTemplateType is set to 2, with the template shape as shown in (b) of FIG. 3; when only upper reference samples are available, refTemplateType is set to 3, with the template shape as shown in (c) of FIG. 3; when only left reference samples and upper-left reference samples are available, refTemplateType is set to 4, with the template shape as shown in (d) of FIG. 3; when only left reference samples and lower-left reference samples are available, refTemplateType is set to 5, with the template shape as shown in (e) of FIG. 3; and when only upper reference samples and upper-right reference samples are available, refTemplateType is set to 6, with the template shape as shown in (f) of FIG. 3.

In some embodiments, the template type of IntraTMP may be selected by combining availability information of the foregoing reference samples and an indication in the bitstream. For example, a serial number is agreed for each template type, and actually used template serial number information is transmitted in the bitstream, so that the template type can be determined at a decoding end. That is, in the embodiments of the present disclosure, the template type may be determined according to availability information of reference samples of the current block, or according to indication information in the bitstream, or according to a combination thereof, which is not limited herein.

Further, when determining the first template corresponding to the current block according to the template type, the method may further include: determining template reference samples of the current block according to the template type and a template size corresponding to the template type; and then determining the first template of the current block according to the template reference samples.

It should be noted that the first template of the current block may include template reference samples of the current block. The template reference samples of the current block may be determined by the template type of the current block and a template size corresponding to the template type.

It should also be noted that the first template of the current block may be composed of reconstructed samples in one or more regions of the current block, including upper, upper-right, left, lower-left and upper-left regions, that is, composed of the reference samples of the current block.

It should also be noted that the template size corresponding to the template type may be preset, or indicated by a syntax element in the bitstream, or adaptively selected according to a block size or other information. For example, when acquiring a left template, templateW_size may be set to 4; and when acquiring an upper template, templateH_size may be set to 4.

Correspondingly, by combining a value of refTemplateType of the current block and a template size corresponding to the refTemplateType, it can be determined which part of reconstructed samples are acquired as template reference samples of the current block, so as to determine the corresponding first template. Exemplarily, when refTemplateType is 1, reconstructed samples on the left, upper-left and upper sides of the current block may be acquired; when refTemplateType is 2, only the left four columns of reconstructed pixels of the current block are acquired; when refTemplateType is 3, only the upper four rows of reconstructed samples of the current coding block are acquired.

Certainly, the preset template size may be any integer greater than 0 and is not limited to 4, which is not restricted herein.

That is to say, the template reference samples determined from the reference samples of the current block by combining the template type of the current block and the corresponding template size may serve as the first template corresponding to the current block.

It can be understood that the search process of vector parameters may include initialization, determining a search region of the first template in a current frame (i.e., the first search region), and searching in the first search region to determine one or more best vector parameters. Therefore, the initialization needs to be completed before performing search processing.

For example, as shown in FIG. 5, nTbW and nTbH denote the size of the current block, templateW_size and templateH_size denote the template size, and uiPatchWidth and uiPatchHeight denote the size of a block including the current block and its template.

Correspondingly, during initialization, uiPatchWidth may be initialized to nTbW+templateW_size, and uiPatchHeight to nTbH+templateH_size. The templateW_size and templateH_size may be fixed constants, or indicated by syntax elements in the bitstream, or dynamically adjusted according to the current block size or other information. The templateW_size and templateH_size may be equal or unequal, for example, templateW_size=4 and templateH_size=4; or templateW_size is set to 4 when the width of the current block is greater than 8, or set to 2 when the width is less than or equal to 8; templateH_size is set to 4 when the height of the current block is greater than 8, or set to 2 when the height is less than or equal to 8.

Further, a cost threshold between templates is initialized and denoted as diffThreshold. For example, when the cost function is SAD, the threshold satisfies: diffThreshold=((1«bitDepth)»2)×(uiPatchHeight×uiPatchWidth-nTbH×nTbW). When the picture bit depth bitDepth is 10, diffThreshold indicates that a distortion threshold of each sample in the template region is 256.

Further, a position of a CTB where the current block (CB) is located is initialized: ctbRsX, ctbRsY.

Further, a position offset of the CB within the current CTB is initialized: offsetLCBY = yTbCmp - ctbRsY, offsetLCBX = xTbCmp - ctbRsX.

Further, iTemplateSizeH is initialized to be templateH_size and iTemplateSizeW is initialized to be templateW_size.

Further, iBvShift is initialized, where iBvShift denotes the precision of a vector parameter (BV). For example, the precision of the BV may be integer-sample precision with iBvShift set to 0; or sub-sample precision, where iBvShift set to 1 denotes 1/2-sample precision and iBvShift set to 2 denotes 1/4-sample precision, which is not limited herein.

Further, a preset search range of the template is initialized. The preset search range may be set to a fixed size or dynamically adjusted according to the size of the current block. For example: searchRangeWidth=TMP_SEARCH_RANGE_MULT_FACTOR×nTbW, searchRangeHeight=TMP_SEARCH_RANGE_MULT_FACTOR×nTbH. A value of TMP_SEARCH_RANGE_MULT_FACTOR may be a preset value, or indicated by a syntax element in the bitstream, or adaptively adjusted according to the current block size and other information, for example, the value is set to 5.

It can also be understood that the first search region may include a first type search region and/or a second type search region. The first type search region is a rectangular search region around the current block. The second type search region is a region pointed to by vector parameters corresponding to preset search positions of the current block and a region pointed to by automatic repositioning.

The first type search region includes a fully reconstructed region and/or a pending reconstructed region. All samples in the fully reconstructed region are reconstructed samples; samples in the pending reconstructed region include reconstructed samples and/or unreconstructed samples.

That is to say, the first search region is divided into two categories in the embodiments of the present disclosure.

The first category is a peripheral rectangular search region, which is further divided into two types: the first type is a fully reconstructed region where all samples have been reconstructed (such as regions R1 to R4 in FIG. 6); and the second type is a pending reconstructed region where it is uncertain whether all samples have been reconstructed (such as regions R5 to R6 in FIG. 6).

The second category is an expanded search region, which is defined as a region pointed to by BVs corresponding to spatially neighboring and non-neighboring PUs (regarded as R7 in the embodiment corresponding to FIG. 6) and a region pointed to by automatic repositioning (regarded as R8). Since search points in R7 and/or R8 are not necessarily neighboring to each other, searching for R7 and/or R8 is performed point by point according to a list.

In some embodiments, the operation of determining the first candidate list of the current block based on the first search region may include: searching in the first search region with a first search step size to determine one or more first candidate vector parameters, and adding the one or more first candidate vector parameters into the first candidate list of the current block.

In a specific embodiment, the operation of searching in the first search region according to the first search step size to determine one or more first candidate vector parameters may include: traversing search points in the first search region according to the first search step size, and determining a first matching cost between a matching template corresponding to each search point in the first search region and the first template according to a preset matching criterion; determining one or more matched search points according to the first matching cost, and determining one or more first candidate vector parameters based on the one or more matched search points.

It should be noted that the first search step size may be set to 3, and the obtained first candidate list may be referred to as an initial coarse search list.

It should also be noted that the preset matching criterion may be any one of SAD, SATD, SSE, MAD, MAE, MSE, and NCC.

In a possible implementation, the operation of traversing search points in the first search region may include the following content.

For a fully reconstructed region (such as regions R1 to R4 in FIG. 6), based on each search point (iPosHor,iPosVer) in each search region, namely each BV (composed of a horizontal component and a vertical component (pX,pY), where pX=iPosHor-xTbCmp, pY=iPosVer-yTbCmp, pX is between bvXMins and bvXMaxs, and pY is between bvYMins and bvYMaxs), a matched reconstructed block of the current block may be found in the reconstructed region, and neighboring reconstructed samples of the matched reconstructed block serve as a matching template. A matching cost between a neighboring template of the current block and a neighboring template of the reconstructed block is computed and denoted as pDiff.

For pending reconstructed regions (such as regions R5 to R6 in FIG. 6), based on each search point (iPosHor,iPosVer) in each search region, namely a BV (composed of a horizontal component and a vertical component (pX,pY), where pX=iPosHor-xTbCmp, pY=iPosVer-yTbCmp, pX is between bvXMins and bvXMaxs, and pY is between bvYMins and bvYMaxs), availability determination may be performed on such region:
If available, a matched reconstructed block of the current block may be found in the reconstructed region, and neighboring reconstructed samples of the matched reconstructed block serve as a matching template; a matching cost between a neighboring template of the current block and a neighboring template of the reconstructed block is computed and also denoted as pDiff; and
If unavailable, template matching cost computation is skipped.

The availability determination includes but is not limited to simultaneous establishment of one or more of the following conditions:
Each sample in the template is within a valid coordinate range limited by the picture sample boundary;
Each sample in the reconstructed block corresponding to the template is within the valid coordinate range limited by the picture sample boundary;
Each sample in the template and each sample in the corresponding reconstructed block are within a prescribed range of a search window;
Each sample in the template is located in a same Tile as a current coding region;
Each sample in the reconstructed block corresponding to the template is located in a same Tile as the current coding region;
Each sample in the template has been reconstructed;
Each sample in the reconstructed block corresponding to the template is not located in the current encoding region; and
Each sample in the reconstructed block corresponding to the template has been reconstructed.

All available search points in all search ranges (regionId=0, 1, 2, 3, 4, 5) are traversed and compared to select 30 search points with a minimum matching cost pDiff. Corresponding matching costs are denoted as pDiff_BEST[n], n=0,...,29; corresponding BVs are denoted as best BVs BV_BEST[n], each being a coordinate pair (pX_BEST,pY_BEST), n=0,...,29; and corresponding matching templates are denoted as best matching templates T_BEST[n], n=0,...,29.

Assuming the first search step size is 3, a search is performed in the first search region with a step size of 3. For example, within the search range where pX is between bvXMinsregionId and bvXMaxsregionId and pY is between bvYMinsregionId and bvYMaxsregionId in each region, a coarse search is performed with a step size of 3, and the top P best matching costs obtained through template matching are recorded as pDiff1_BEST[p], p=0,...,P-1, and corresponding BVs are recorded as BV1_BEST[p], p=0,...,P-1. P may be 1 or an integer greater than 1 as required, and the search region where the best matching search point is located is denoted as bestRegionId[p], p=0,...,P-1. The first candidate list can be constructed according to the P BV1_BEST[p].

S1702: A second position block is determined based on at least one candidate vector parameter in the first candidate list and/or a vector parameter of a first position block of the current block.

S1703: When an encoding parameter of the second position block includes a vector parameter, whether the vector parameter of the second position block satisfies a second condition is determined based on the vector parameter of the second position block.

It should be noted that the first position block of the current block may include a block at a spatially neighboring position and/or a non-neighboring position of the current block, and the number of the first position block may be one or more.

Exemplarily, for predefined one or more first position blocks, predefined search positions may be 5 spatially neighboring positions of the current block: left (xTbCmp-1,yTbCmp+nTbH-1), upper-left (xTbCmp-1,yTbCmp-1), upper (xTbCmp+nTbW-1,yTbCmp-1), upper-right (xTbCmp+nTbW,yTbCmp-1), lower-left (xTbCmp-1,yTbCmp+nTbH), and 18 spatially non-neighboring positions (as shown in FIG. 9).

It should also be noted that the operation of determining the second position block may include: determining the second position block based on at least one candidate vector parameter in the first candidate list; and/or determining the second position block based on the vector parameter of the first position block of the current block.

That is, the second position block may be determined based on at least one candidate vector parameter in the first candidate list, or based on the vector parameter of the first position block, or jointly based on both, which is not limited herein.

In some embodiments, when determining the second position block based on the vector parameter of the first position block of the current block, the method may further include: when a decoding parameter of the first position block includes a vector parameter, determining whether the vector parameter of the first position block satisfies a first condition based on the vector parameter of the first position block; and determining the second position block based on the vector parameter of the first position block when the vector parameter of the first position block satisfies the first condition.

It should be noted that when the vector parameter is a BV, if the first position block of the current block adopts BV-based prediction technology (i.e., IBC/IntraTMP), it may be determined that the encoding parameter of the first position block includes the vector parameter.

It should also be noted that the first condition may include that a cost value corresponding to the vector parameter of the first position block is superior to a cost value corresponding to at least one candidate vector parameter in the first candidate list. That is, if the cost value corresponding to the vector parameter of the first position block is superior to the cost value corresponding to the at least one candidate vector parameter in the first candidate list, it is determined that the vector parameter of the first position block satisfies the first condition.

In some embodiments, determining that the at lesat one vector parameter of the first position block satisfies the first condition may include: determining the cost value corresponding to the vector parameter of the first position block according to a matching cost between a matching template corresponding to the vector parameter of the first position block and a first template; determining a cost value corresponding to at least one candidate vector parameter in the first candidate list according to a matching cost between a matching template corresponding to at least one candidate vector parameter in the first candidate list and the first template; and determining that the vector parameter of the first position block satisfies the first condition when the cost value corresponding to the vector parameter of the first position block is less than the cost value corresponding to the at least one candidate vector parameter in the first candidate list.

It should also be noted that the method may further include: updating the first candidate list based on the vector parameter of the first position block when the vector parameter of the first position block satisfies the first condition.

In a specific embodiment, updating the first candidate list based on the vector parameter of the first position block may includce: adding the vector parameter of the first position block to the first candidate list.

That is, when the vector parameter of the first position block satisfies the first condition, the vector parameter of the first position block may be used to update the first candidate list. Exemplarily, the vector parameter of the first position block may be added to the first candidate list according to a cost magnitude, and the item with the maximum cost in the first candidate list is deleted to obtain the updated first candidate list.

It should also be noted that a search region where the vector parameter of the first position block is located is determined as R6, that is, bestRegionId is set to 6.

It should also be noted that during the update process, it is first checked whether a PU corresponding to these predefined search positions adopt IntraTMP/IBC technology, that is, whether an encoding parameter of the PU corresponding to these predefined search positions include a vector parameter; if so, a BV of the PU is determined, and the first candidate list is updated by using the BV. The specific update operation is as follows: sequentially accessing each item in the first candidate list, computing a template matching cost corresponding to each BV, comparing the cost with a template matching costs in the first candidate list, and if the compared cost value corresponding to a BV is less than the maximum cost in the first candidate list, replacing an inferior BV in the first candidate list with the BV. For example, the BV is inserted into the first candidate list according to an order of cost magnitude, and the item with the maximum cost in the first candidate list is deleted. The value of bestRegionId of its search region is set to 6.

It can be understood that the number of the second position block may be one or more.

It should also be noted that the second position block denotes a reference block pointed to by the vector parameter of the first position block, or a block pointed to by a vector parameter of a reference block pointed to by the vector parameter of the first position block.

It should also be noted that in the embodiments of the present disclosure, the vector parameter still take BV as an example. If the second position block adopts a BV-based prediction mode, namely IBC or IntraTMP, an encoding parameter of the second position block includes a vector parameter accordingly.

For example, regarding the second position block, the method takes the vector parameter of the first position block as a current BV. The method first determines several candidate positions of the current block, e.g., five candidate positions: the center position (xTbCmp+nTbW/2,yTbCmp+nTbH/2), the upper-left position (xTbCmp,yTbCmp), the upper-right position (xTbCmp+nTbW-1,yTbCmp), the lower-left position (xTbCmp,yTbCmp+nTbH-1), and the lower-right position (xTbCmp+nTbW-1,yTbCmp+nTbH-1). Then the method checks whether a PU corresponding to the coordinates of the five candidate positions plus the current BV adopts the BV-based prediction mode (IBC/IntraTMP). If the PU adopts the mode, the method regards the newly obtained BV as the current BV and repeats the above operations to determine the vector parameter of the second position block (also called as an expanded BV). In other words, in the embodiments of the present disclosure, the expanded BV can be the BV stored in a block pointed to by the current BV, or the BV stored in a block pointed to by the block that the current BV points to, and so on.

In some embodiments, the second condition may include that a cost value corresponding to the vector parameter of the second position block is superior to a cost value corresponding to at least one candidate vector parameter in the first candidate list. That is, when the cost value corresponding to the vector parameter of the second position block is superior to the cost value corresponding to the at least one candidate vector parameter in the first candidate list, the vector parameter of the second position block satisfies the second condition.

It should also be noted that the method in the embodiments of the present disclosure may also include: determining the cost value corresponding to the vector parameter of the second position block according to a matching cost between a matching template corresponding to the vector parameter of the second position block and a first template; determining the cost value corresponding to the at least one candidate vector parameter in the first candidate list according to a matching cost between a matching template corresponding to at least one candidate vector parameter in the first candidate list and the first template; and determining that the vector parameter of the second position block satisfies the second condition when the cost value corresponding to the vector parameter of the second position block is less than the cost value corresponding to the at least one candidate vector parameter in the first candidate list.

S1704: When the vector parameter of the second position block satisfies the second condition, the first candidate list is updated based on the vector parameter of the second position block.

It should be noted that the number of the vector parameter of the second position block may be be one or more in the embodiments of the present disclosure. Determination of the vector parameter of the second position block may be stopped when traversal on all the vector parameter of the first position block is completed, or when the number of acquired vector parameters of the second position block exceeds a first threshold.

It should also be noted that the first threshold is denoted by V in the embodiments of the present disclosure. For instance, V may be set to 15, or other values such as 1, 2, 5 and 10, which is not limited herein.

In some embodiments, the operation of updating the first candidate list based on the vector parameter of the second position block may include: adding the vector parameter of the second position block to the first candidate list.

That is to say, the first candidate list may be updated with the vector parameter of the second position block when the vector parameter satisfies the second condition. For example, the vector parameter of the second position block is inserted into the first candidate list according to a cost magnitude, and the item with the maximum cost in the list is deleted to obtain the updated first candidate list.

In some embodiments, the method may further include: determining the search region where the vector parameter of the second position block is located to R7, namely assigning a value of 7 to bestRegionId.

It should be noted that in the embodiments of the present disclosure, for the acquired a vector parameter of the first position block, operations are performed as below: firstly, for each current BV, determining five positions of the current block: the center (xTbCmp+nTbW/2,yTbCmp+nTbH/2), upper-left (xTbCmp,yTbCmp), upper-right (xTbCmp+nTbW-1,yTbCmp), lower-left (xTbCmp,yTbCmp+nTbH-1), and lower-right (xTbCmp+nTbW-1,yTbCmp+nTbH-1); checking whether a PU corresponding to the coordinates of the five positions plus the current BV adopts the BV-based prediction mode (IBC/IntraTMP); if the PU adopts the mode, computing a vector sum of the BV stored in the PU and the current BV and recording the sum as BV' (i.e., a vector sum resulting from respective summation of vertical componentnts and horizontal components), taking the BV' as a new current BV, and repeating the above operations to continuing determination of more available options of an expanded BV; and if the PU does not adopt the mode, checking a next position. The above operations repeat until the check of all the five positions is completed or the number of determined expanded BVs exceeds a threshold V, and then determination of the vector parameter of the second position block is stopped.

It should also be noted that the first candidate list is updated after multiple expanded BVs are obtained. The specific update process includes: computing a template matching cost for each of expanded BVs, and comparing the cost with template matching costs of BVs in the first candidate list; and if the cost for an expanded BV is less than a maximum template matching cost in the first candidate list, replacing an inferior BV in the list with this expanded BV. An example of the replacement operation includes: inserting the expanded BV into the first candidate list in an order of cost magnitude, and removing the item with the maximum cost from the updated first candidate list. The search region bestRegionId where the newly inserted BV is located is set to 7.

That is to say, in the embodiments of the present disclosure, when a BV of the first position block (a spatially neighboring position and/or a non-neighboring position of the current block) is better than at least one BV in the first candidate list (the first condition), a block pointed to by the BV of the first position block is checked; if the block pointed to by such BV also has a BV, whether to add this BV into the first candidate list is determined (the second condition). Another characteristic of the embodiments of the present disclosure is that the first position block may provide two candidate BVs for the first candidate list (i.e., adding one BV when the first condition is satisfied and adding another BV when the second condition is satisfied), to obtain the updated first candidate list (namely the final coarse search list).

In some embodiments, for updating the first candidate list, the method may further include: determining a first candidate set of the current block based on the vector parameter of the first position block when the vector parameter of the first position block satisfies the first condition, and determining a second candidate set of the current block based on the vector parameter of the second position block when the vector parameter of the second position block satisfies the second condition.

It should be noted that the first candidate set is denoted as IntraTMP_Merge, and the second candidate set is denoted as IntraTMP_EBVP.

It should also be noted that the operation of updating the first candidate list based on the first candidate set may include: determining a cost value corresponding to a second candidate vector parameter in the first candidate set, and determining a maximum cost value corresponding to one or more candidate vector parameters in the first candidate list; and replacing a candidate vector parameter corresponding to the maximum cost in the first candidate list with the second candidate vector parameter to update the first candidate list when the cost value corresponding to the second candidate vector parameter is less than the maximum cost in the first candidate list. The second candidate vector parameter refers to any vector parameter in the first candidate set.

In a specific embodiment, the operation of replacing the candidate vector parameter corresponding to the maximum cost in the first candidate list with the second candidate vector parameter may include: adding the second candidate vector parameter into the first candidate list and deleting the candidate vector parameter corresponding to the maximum cost from the updated first candidate list.

For example, the construction process of the IntraTMP_Merge set (or called IntraTMP_Merge list) is as follows: checking whether PUs corresponding to these positions adopt IntraTMP/IBC technology; if so, storing BVs of such PUs into an IntraTMP_Merge set. After the IntraTMP_Merge set is constructed, the first candidate list is updated according to the IntraTMP_Merge set. The updating operation includes: sequentially accessing each item of the IntraTMP_Merge set, computing a template matching cost corresponding to each BV, and comparing the cost with template matching costs of the first candidate list; and if the cost is smaller than a maximum template matching cost in the first candidate list, replacing an inferior BV in the first candidate list with the BV. The replacement operation incluldes, for example: inserting the BV into the first candidate list according to an order of cost magnitude and deleting the BV with the maximum cost from the updated first candidate list. And a search region bestRegionId where the BV is located is set to 6.

It should be noted that the second position block may be determined based on at least part of candidate vector parameters in the updated first candidate list after the first candidate list is updated based on the first candidate set. The second candidate set may be constructed based on the vector parameter of the second position block when the vector parameter of the second position block satisfies the second condition.

In a possible implementation, the at least part of candidate vector parameters in the updated first candidate list refers to one or more second candidate vector parameters that are inserted into the first candidate list from the first candidate set. In some embodiments, the operation of determining the second candidate set of the current block may include: determining one or more second candidate vector parameters updated from the first candidate set into the first candidate list; determining the second position block based on the one or more second candidate vector parameters; and determining the second candidate set of the current block based on the vector parameter of the second position block.

In another possible implementation, the at least part of candidate vector parameters in the updated first candidate list refers to all candidate vector parameters in the updated first candidate list. Therefore, in some embodiment, the operation of determining the second candidate set of the current block may include: after updating the first candidate list based on the first candidate set, determining the second position block based on all candidate vector parameters in the updated first candidate list, and determining the second candidate set of the current block based on the vector parameter of the second position block.

In another possible implementation, the at least part of candidate vector parameters in the updated first candidate list may be a preset number of candidate vector parameters in the updated first candidate list. Therefore, in some embodiment, the operation of determining the second candidate set of the current block may include: after updating the first candidate list based on the first candidate set, selecting top N candidate vector parameter(s) from the updated first candidate list; and determining the second position block based on the N candidate vector parameter(s), and determining the second candidate set of the current block based on the vector parameter of the second position block, wherein N is a positive integer.

It should be noted that, in the embodiments of the present disclosure, the method may further include: determining a value of N based on a size parameter of the current block. That is, the number of checked objects may be limited according to the size of the current block. For example, the top 5 candidate vector parameters are checked for current blocks with a size less than or equal to 16×16, and the top 10 candidate vector parameters are checked for the current block of other sizes.

In another possible implementation, the operation of determining the second candidate set of the current block may include: after updating the first candidate list based on the first candidate set, clustering the updated first candidate list to determine M candidate vector parameter(s) located at cluster centers; determining the second position block based on the M candidate vector parameter(s); and determining the second candidate set of the current block based on the vector parameter of the second position block, wherein M is a positive integer.

It should also be noted that for construction of the IntraTMP_EBVP set (or called IntraTMP_EBVP list), check may be performed on only the BVs inserted into the first candidate list from the IntraTMP_Merge set, or EBVP-based update may be performed on all options in the updated first candidate list.

In addition, the checked BVs for the IntraTMP_EBVP list and the number of the checked BVs may be adjusted. For example, the top 5 or top 10 BVs in the corresponding BV set may be checked. Or, The number of checked objects may be limited according to the size of the current block, for example, the top 5 BVs are checked for a CU with a size less than or equal to 16×16 and the top 10 BVs are checked for a CU of other sizes. Alternatively, the updated first candidate list may be clustered according to a geometric distance to cluster centers. The number of cluster centers may be 2 to 5, for example, an EBVP operation is performed cluster centers only.

In another possible implementation, the construction of the second candidate set may be omitted. The method may further include: when the first candidate set is not full, filling the vector parameter of the second position block into the first candidate set until the first candidate set is full, and updating the first candidate list based on the filled first candidate set.

That is to say, BVs from EBVP may be supplemented into the IntraTMP_Merge set until the IntraTMP_Merge set is full, and then the first candidate list is updated with the filled IntraTMP_Merge set. The number of supplemented BVs is limited by the remaining vacancies of the IntraTMP_Merge set.

For example, after the first candidate list is updated based on the IntraTMP_Merge set, an IntraTMP_EBVP set is constructed for each BV that is inserted into the first candidate list from the IntraTMP_Merge set, and the first candidate list is updated again based on the IntraTMP_EBVP set. The specific process is as follows.

An IntraTMP_EBVP set is initially constructed from empty for each current BV. Five positions of a current CU is determined: the center (xTbCmp+nTbW/2,yTbCmp+nTbH/2), upper-left (xTbCmp,yTbCmp), upper-right (xTbCmp+nTbW-1,yTbCmp), lower-left (xTbCmp,yTbCmp+nTbH-1), and lower-right (xTbCmp+nTbW-1,yTbCmp+nTbH-1). It is checked whether a PU corresponding to the coordinates of the five positions plus the current BV adopts a BV-based prediction mode (IBC/IntraTMP). If the PU adopts the mode, a vector sum of the BV stored in the corresponding PU and the current BV is computed and recorded as BV' (i.e., a vector sum resulting from respective summation of vertical componentnts and horizontal components), BV' is added into the TMP_EBVP set, and the BV' is taken as a new current BV to repeat the above operation and supplement more valid options into the TMP_EBVP set. If the PU does not adopt the mode, check is continued for a next position.

In some embodiments, the method may further include: determining that construction of a third candidate set is completed when traversal on all the vector parameter of the second position block is completed or a number of candidate vector parameters in the second candidate set is greater than a first threshold.

It should be noted that the first threshold is denoted as V, which represents the length limit of the second candidate set in the embodiments of the present disclosure. For example, V may be set to 15. Or, other values such as 1, 2, 5 and 10 may be set for V to limit the length of the IntraTMP_EBVP set.

The above operations are repeated until the check of all the five positions is completed or the quantity of BVs in the constructed IntraTMP_EBVP set exceeds V, and then the construction of the IntraTMP_EBVP set is finished.

In some embodiments, after completing the construction of the second candidate set, the method may further include: determining a second matching cost between a matching template corresponding to a third candidate vector parameter in the second candidate set and a first template according to a preset matching criterion; and deleting the third candidate vector parameter from the second candidate set to update the second candidate set when the second matching cost is greater than a second threshold. The third candidate vector parameter refers to any vector parameter in the second candidate set.

In the embodiments of the present disclosure, the preset matching criterion may be any one of SAD, SATD, SSE, MAD, MAE, MSE, and NCC. That is to say, constraint may be imposed according to a template cost corresponding to each BV (such as SAD and SATD). A template cost of each BV in the second candidate set is first computed, a cost threshold is set, and only BVs with costs not exceeding the cost threshold are added into the IntraTMP_EBVP set, so as to obtain a final second candidate set.

In some embodiments, updating the first candidate list based on the second candidate set may include: determining a cost value corresponding to a third candidate vector parameter in the second candidate set and a maximum cost value corresponding to one or more candidate vector parameters in the first candidate list; when the cost value of the third candidate vector parameter is smaller than the maximum cost in the first candidate list, the candidate vector parameter corresponding to the maximum cost in the first candidate list is replaced with the third candidate vector parameter to complete the update. The third candidate vector parameter refers to any vector parameter in the first candidate set.

In a specific embodiment, replacing the candidate vector parameter corresponding to the maximum cost in the first candidate list with the second candidate vector parameter may include: adding the third candidate vector parameter into the first candidate list, and deleting the candidate vector parameter corresponding to the maximum cost from the updated first candidate list.

For example, after completing the construction of the IntraTMP_EBVP set, the first candidate list is updated. The updating operation includes: sequentially accessing each BV in the IntraTMP_EBVP set, computing a template matching cost of each BV, and comparing the cost with template matching costs of BVs in the first candidate list; if the cost is less than a maximum template matching cost in the first candidate list, replacing an inferior BV in the first candidate list with the BV corresponding to the compared cost. The replacement operation includes, for example: inserting the BV into the first candidate list in order of cost magnitude and deleting the item with the maximum cost from the updated first candidate list. And, bestRegionId is set to 7 for the search region where the BV newly inserted into the first candidate list is located.

It should also be noted that the IntraTMP_EBVP set may be used independently of the IntraTMP_Merge set. That is, BV expansion is performed directly based on BVs obtained from a search in a search window under the IntraTMP mode only.

It should also be noted that it is not necessary to divide the search into coarse search and fine search steps; instead, a one-time search may be performed, and then BV options may be expanded based on a result of the one-time search to obtain final BVs.

In some embodiments, for updating the first candidate list, the method further includes: determining top K candidate vector parameter(s) in the first candidate set, and updating the first candidate list based on the top K candidate vector parameter(s). K is a positive integer.

That is to say, in the embodiments of the present disclosure, only the top K items (for example, K may be set to 5) of the IntraTMP_Merge set are used to update the coarse search list, and expansion is performed only based on each BV in the IntraTMP_Merge set.

In some embodiments, for updating the first candidate list, the method further includes: determining top P candidate vector parameter(s) from the first candidate set, determining the second position block based on the P candidate vector parameter(s), and determining the vector parameter of the second position block; constructing a fourth candidate set of the current block based on the vector parameter of the second position block when the vector parameter of the second position block satisfies the second condition, and determining that construction of the fourth candidate set is completed when traversal on all the P candidate vector parameter(s) is completed or the fourth candidate set is full; determining a cost value corresponding to one or more candidate vector parameters in the fourth candidate set, and selecting Q candidate vector parameter(s) from the fourth candidate set according to the cost value corresponding to the one or more candidate vector parameters, and updating the first candidate list based on the Q candidate vector parameter(s). Both P and Q are positive integers.

That is to say, a Merge set or list may be maintained jointly using IntraTMP_Merge and IntraTMP_EBVP. For example, the top P BVs (such as P=5) is first selected from the IntraTMP_Merge set, IntraTMP_EBVP expansion is performed based on the P BVs to construct a new Merge set with a length of L (such as L=28). When the new Merge set is fully filled with the expanded BVs or the expansion of all P BVs is completed, costs of all BVs in the new Merge set are computed and ranked, top Q items (such as Q=5) after ranking are selected from the list to update the first candidate list.

S1705: A predicted value of the current block is determined based on the updated first candidate list.

It should be noted that a fine search may be performed based on a final coarse search list after acquiring the final coarse list. That is, the search process includes a coarse search stage followed by a fine search stage.

In some embodiments, determining the predicted value of the current block based on the updated first candidate list may include: determining a vector parameter of the current block based on the updated first candidate list, and determining the predicted value of the current block based on the vector parameter of the current block.

In a specific embodiment, determining the vector parameter of the current block based on the updated first candidate list may include: determining a second search region indicated by a candidate vector parameter in the updated first candidate list, and searching in the second search region with a second search step size to determine the vector parameter of the current block. The value of the second search step size is smaller than that of the first search step size.

It should be noted that the second search step size may be set to 1 or other values in the embodiments of the present disclosure, and is required to be smaller than the first search step size adopted in the coarse search stage.

For example, the best BVs BV1_BEST[p] (p=0,...,M-1) obtained from the updated first candidate list are taken as anchor points for the fine search, and the fine search is performed around these anchor points.

For each fine search anchor point, a refined search range including TmpRefineRangeHor and TmpRefineRangeVer is first determined. The refined search range (namely the second search region) may be of a fixed size and may correlate with a search region. For example, both TmpRefineRangeHor and TmpRefineRangeVer may be set to 1 for anchor points of search regions 0 to 5; both TmpRefineRangeHor and TmpRefineRangeVer may be set to 2 for anchor points of search region 6. Then a position of a best matched reconstructed block obtained from the coarse search is computed as the base position of a fine search region: BestPosX = xTbCmp + pX1_BEST, BestPosY = yTbCmp + pY1_BEST.

Traveral is directly performed using a search window in the fine search region which is regarded as an entire pending reconstructed region.

A new search range is acquired based on the position of the best matched block obtained from the coarse search, including:
$iHorMaxrefine = min \left(picWidth-nTbW , BestPosX+TmpRefineRangeHor\right) ;$
$iHorMinrefine = max \left(iTemplateSizeW, BestPosX-TmpRefineRangeHor\right) ;$
$iVerMaxrefine = min \left(picHeight-nTbH , BestPosY+TmpRefineRangeVer\right) ;$ and
$iVerMinrefine = max \left(iTemplateSizeH, BestPosY-TmpRefineRangeVer\right) .$

Thereafter, adjusted BVs bvXMins, bvXMaxs, bvYMins and bvYMaxs may be computed according to iVerMinrefine, iVerMaxrefine, iHorMinrefine and iHorMaxrefine:
$bvXMins = iHorMinrefine - xTbCmp ;$
$bvXMaxs = iHorMaxrefine - xTbCmp ;$
$bvYMins = iVerMinrefine - yTbCmp ;$ and
$bvYMaxs = iVerMaxrefine - yTbCmp .$

The fine search is performed within a BV range where pX is between bvXMinsrefine and bvXMaxsrefine and pY is between bvYMinsrefine and bvYMaxsrefine, namely, all the search positions in a fine search window are directly traversed and sequentially subjected to availability determination. For example, a second search step size of 1 is used for the fine search, top T best matching costs obtained by template matching of available points are recorded as pDiff_BEST[t] (t=0,...,T-1), and the corresponding BVs are recorded as best BVs BV_BEST[t] (t=0,...,T-1). Here T is an integer greater than or equal to 1, for example, T is set to 1.

After completing the above operation, one or more best BVs BV_BEST[n] (n=0,...,N-1) that meet different algorithm requirements may be obtained by combining results of the coarse search and the fine search (the fine search includes a search based on one or multiple anchor points). Each best BV is a coordinate pair (pX_BEST, pY_BEST). The pX_BEST and pY_BEST respectively represent the horizontal offset and vertical offset between a best matching template and a current block template, and also represent the horizontal offset and vertical offset between a best matched reconstructed block and a current block. The vector parameter of the current block may be accordingly determined.

In some embodiments, the operation of searching in the second search region with the second search step size to determine the vector parameter of the current block includes: performing a sub-sample search in the second search region according to the second search step size to determine the vector parameter of the current block. In other words, a sub-sample level search can be implemented in the fine search stage.

It should also be noted that the number of the vector parameter of the current block may be one or more in the embodiments of the present disclosure. When the current block has a pluarality of vector parameters, weighted fusion may be performed on positions corresponding to multiple BVs to acquire the predicted value of the current block.

In some embodiments, when the current block has one vector parameter, the operation of determining the predicted value of the current block based on the vector parameter of the current block includes: determining a reference block of the current block based on the vector parameter, and then determining the predicted value of the current block based on the reference block.

For example, a simple translation and copy manner may be adopted to determine the reference block of the current block in the embodiments of the present disclosure. The specific operation includes: for x=0...nTbW-1 and y = 0...nTbH-1, reconstructed samples recSamples of the current frame (namely the reference block of the current block) are determined through the formula RefBlockn [x][y] = recSamples[x + pXn][y + pYn].

It should be noted that an initial reconstructed block of the current block may first be determined based on the vector parameter of the current block, and then correction may be performed on the initial reconstructed block to obtain the reference block of the current block. Alternatively, the reference block may first be filtered to acquire a filtered reference block, and then the predicted value of the current block is determined based on the filtered reference block.

It should also be noted that the predicted value determined through the vector parameter of the current block may serve as the final predicted value directly, or may further be subjected to correction (such as a clip operation) to obtain the final predicted value of the current block.

In some embodiments, the operation of determining the predicted value of the current block based on the reference block includes: determining a first prediction block of the current block based on the reference block; predicting the current block according to a first prediction mode to determine a second predicted block of the current block, wherein the first prediction mode is a non-intra template matching prediction mode, and determining the predicted value of the current block based on the first predicted block and the second predicted block.

It should be noted that the first prediction mode may be a prediction mode different from the Intra TMP mode used for the current block, such as a PLANAR mode, a CCLM mode and an angular prediction mode. Here, weighted fusion may be performed on the first prediction block and the second prediction block to determine the predicted value of the current block.

That is to say, when determining the predicted value of the current block, the predicted value may be corrected through local filtering or through weighted fusion of multiple predicted values.

In some embodiments, when there are a plurality of vector parameters of the current block, the operation of determining the predicted value of the current block based on the vector parameter of the current block includes: determining a plurality of reference blocks of the current block based on the plurality of vector parameters of the current block, and determining the predicted value of the current block based on the plurality of reference blocks.

It should also be noted that the operation of determining the predicted value of the current block based on the plurality of reference blocks includes: determining a plurality of predicted blocks of the current block based on the plurality of reference blocks, and performing weighted fusion on the plurality of predicted blocks to determine the predicted value of the current block.

It can be understood that under the IntraTMP mode, the predicted value may be obtained not only through the basic copy mode, but also through filtering and fusion of positions corresponding to multiple BVs, as well as through prediction combined with a regular intra prediction mode.

In some embodiments, determining the predicted value of the current block based on the vector parameter of the current block may further include: determining a predicted-value construction mode of the current block, and determining the predicted value of the current block based on the vector parameter of the current block and the predicted-value construction mode.

In a specific embodiment, determining the predicted-value construction mode of the current block may include: determining a predicted-value construction candidate list of the current block, where the predicted-value construction candidate list includes at least one candidate predicted-value construction mode; computing a cost respectively for the at least one candidate predicted-value construction mode to determine at least one cost result; determining a minimum cost result from the at least one cost result, and determining a candidate predicted-value construction mode corresponding to the minimum cost result as the predicted-value construction mode of the current block.

It should be noted that in the embodiments of the present disclosure, the cost result may be determined using a distortion value, specifically, through a rate-distortion cost. The cost result may also be determined based on a SAD size, a MSE sizse, a SSE size or other cost evaluation criteria, which is not limited herein.

In some embodiments, the method may further include: determining a value of a first syntax element, where the value indicates an index of the predicted-value construction mode of the current block in the predicted-value construction candidate list; and encoding the value of the first syntax element and writing the obtained encoding bits into a bitstream.
when determining the predicted value of the current block, the predicted-value construction candidate list may be determined based on multiple types of single predicted values, filtered predicted values, and weighted predicted values, and/or a predicted-value construction manner of these predicted values, and may be transmitted through the syntax element in the bitstream to the decoding end, so that the decoding end can determine which item in the predicted-value construction candidate list is adopted to acquire the actual predicted value by parsing the bitstream.

In some embodiments, the method may further include: determining a value of a second syntax element, encoding the value of the second syntax element, and writing the obtained encoding bits into a bitstream.

It should be noted that in the embodiments of the present disclosure, the value of the second syntax element indicates whether the current block adopts the Intra TMP mode. it is determined that the current block uses the Intra TMP mode when the value of the second syntax element equals a first preset value, and it is determined that the current block dose not use the Intra TMP mode when the value of the second syntax element equals a second preset value.

The first preset value is different from the second preset value in the embodiments of the present disclosure. For example, the first preset value may be set to 1 and the second preset value may be set to 0; or, the first preset value may be set to 0 and the second preset value may be set to 1; or, the first preset value may be defined as true and the second preset value may be set as false; or the first preset value may be set as false and the second preset value may be set as true. Exemplarily, the first preset value is set to 1 and the second preset value to 0 herein.

It should also be noted that the operation of determining the first candidate list of the current block, namely the encoding method shown in FIG. 17, is executed when the current block adopts the Intra TMP mode. That is, the method in the embodiments of the present disclosure is applicable to the Intra TMP mode.

That is to say, under the IntraTMP mode, besides a basic copy method for obtaining a predicted value, there are other methods including: a method of fusing positions corresponding to multiple BVs; a method of filtering reference blocks corresponding to BVs and then copying the filtered blocks; and a method of performing sub-sample interpolation on a reference block corresponding to a sub -sample BV and then copying the interpolated block. For example, after a BV candidate list is acquired through template matching in a regional search at a decoding end, the top N items (for example, N=3) are selected for weighted fusion, which may be referred to as an IntraTMP Fusion mode. Alternatively, after one best BV is acquired, multiple points are selected around the best BV, and predicted values corresponding to the multiple points are weighted and fused to obtain a final predicted value, which may be referred to as an IntraTMP FLM mode. Or after one best BV is acquired, templates are sorted with sub-sample precision to select a best direction and precision, and an interpolation filter is used to compute a predicted value, which may be referred to as an IntraTMP SubPel mode. The specific implementation mode is not limited herein.

In some embodiments, after step S1705, with reference to FIG. 18, the method may further include:
S1801: A prediction residual of the current block is determined based on the predicted value of the current block; and
S1802: Encoding is performed on the prediction residual of the current block, and the obtained encoding bits are written into a bitstream.

It should be noted that in the embodiments of the present disclosure, after determining the predicted value of the current block based on the vector parameter of the current block, the prediction residual of the current block may be further determined according to the predicted value. Specifically, an original value of the current block is determined, and a substraction is performed between the predicted value and the original value to compute the prediction residual. The prediction residual of the current block is written into the bitstream and transmitted to the decoding end, so that the decoding end can obtain the prediction residual by parsing the bitstream, further determine the reconstructed value of the current block, and complete the reconstruction of the current block.

In some embodiments, the embodiments of the present disclosure provide a bitstream generated through bit encoding of information to be encoded. The information to be encoded includes at least one of: a prediction residual of a current block, a value of a first syntax element, and a value of a second syntax element.

In the embodiments of the present disclosure, the value of the first syntax element indicates an index of a predicted-value construction mode of the current block in a predicted-value construction candidate list, and a value of the second syntax element indicates whether the current block adopts an Intra TMP mode.

The embodiments of the present disclosure provide an encoding method, which is specifically a method for expanding the coverage of an Intra TMP search list. The method includes: first determining a first candidate list of a current block, where the first candidate list includes one or more candidate vector parameters; determining a second position block based on at least one candidate vector parameter in the first candidate list and/or a vector parameter of a first position block of the current block; determining whether the vector parameter of the second position block satisfies a second condition when an encoding parameter of the second position block includes a vector parameter; updating the first candidate list based on the vector parameter of the second position block when the second condition is satisfied; and finally determining a predicted value of the current block based on the updated first candidate list. In this way, during the update of the first candidate list, vector information of several second position blocks may be expanded based on at least one vector parameter in the initial first candidate list and a vector parameter of the first position block (including spatially neighboring and non-neighboring blocks) of the current block during the update process of the first candidate list, and the first candidate list may be supplemented with the expanded vector information. The reconstructed information of spatially neighboring and non-neighboring blocks may be fully used, candidate vector information can be deduced based on vector information of these reconstructed blocks without increasing encoding complexity significantly, and the coverage of the IntraTMP search list is expanded. The prediction accuracy is accordingly improved, the bit rate is saved, the encoding and decoding efficiency is optimized, and overall encoding and decoding performance is enhanced.

In another embodiment of the present disclosure, based on the foregoing encoding and decoding method, an adaptive relocated BV list may be constructed during IntraTMP prediction to fully utilize information of all neighboring reconstructed samples, and different schemes may be adopted to narrow the search range for search regions at different relative positions to the current block, so as to balance computational complexity.

The prediction process in the embodiments of the present disclosure is described in detail below.

Inputs of IntraTMP: a position (xTbCmp, yTbCmp) of the current block, a width nTbW of the current block, and a height nTbH of the current block.

Output of IntraTMP: predicted value predSamples[x][y] of the current block, where x = 0..nTbW - 1, y = 0..nTbH - 1.

Specifically, the prediction process of Intra TMP technology may be divided into four operations: determining a current template type, acquiring reconstructed samples of a current template, determining a BV within a predefined search range, and generating a predicted value. In this way, the predicted value of the current block can be obtained through the foregoing operations. It should be noted that Intra TMP technology may be used for predicting a luma component or a chroma component, which is not limited herein.

In terms of BV determination, the IntraTMP search process mainly includes: initialization, determination of a search region for a template in a current frame, and search for and determination of a best BV in the search region, as shown in FIG. 4. A search strategy of coarse search followed by fine search may be adopted when searching for a best matching template in the search region.

The coarse search may be determining a best coarse matching template in the search region with a first preset step size (e.g., 3), or determining a best coarse matching template in the search region by using a downsampled template (e.g., with a downsampling factor of 3).

The fine search may be determining a best fine matching template in the search region with a second preset step size (e.g., 1; in case of sub-sample precision, sub-sample interpolation needs to be performed on reconstructed samples, which is not elaborated herein), or determining a best fine matching template in the vicinity of the best coarse matching template after the coarse search is completed.

Step 1: Initialization is performed.

Here, uiPatchWidth is initialized to nTbW+templateW_size, and uiPatchHeight is initialized to nTbH+templateH_size. The templateW_size and templateH_size may be fixed constants or dynamically adjusted according to the size of a coding block, and may be equal or unequal. For example, templateW_size=4 and templateH_size=4 are set; or templateW_size is set to 4 when the width of the coding block is greater than 8 and set to 2 when the width is less than or equal to 8; templateH_size is set to 4 when the height of the coding block is greater than 8 and set to 2 when the height is less than or equal to 8. The specific meaning of each parameter is shown in FIG. 5.

A cost threshold between templates is initialized and denoted as diffThreshold. For example, when the cost function is SAD, the threshold satisfies: diffThreshold=((1«bitDepth)«2)×(uiPatchHeight×uiPatchWidth-nTbH×nTbW). When the picture bit depth bitDepth is 10, the diffThreshold indicates that a distortion threshold of each sample in the template region is 256.

A position of a CTB where the current coding block (CB) is located is initialized: ctbRsX, ctbRsY.

A position offset of the current CB within the current CTB is initialized: offsetLCBY = yTbCmp - ctbRsY, offsetLCBX = xTbCmp - ctbRsX.
iTemplateSizeH is initialized to be templateH_size and iTemplateSizeW is initialized to be templateW_size.
iBvShift is initialized, where iBvShift denotes the precision of a BV. For example, the precision of the BV may be integer-sample precision with iBvShift set to 0; the precision of the BV may also be sub-sample precision, where for example, iBvShift set to 1 denotes 1/2-sample precision, and iBvShift set to 2 denotes 1/4-sample precision, which is not limited herein.
a preset search range of the template is initialized. The preset search range of the template may be set to a fixed size or dynamically adjusted according to the size of the coding block. For example:
   $searchRangeWidth = TMP_SEARCH_RANGE_MULT_FACTOR * nTbW ;$ and
   $searchRangeHeight = TMP_SEARCH_RANGE_MULT_FACTOR * nTbH .$

A value of TMP_SEARCH_RANGE_MULT_FACTOR may be a preset value, for example fixed to 5.

Step 2: A search region for a template in a current frame is determined.

The search region is divided into two types:
One type is a peripheral rectangular search region, which is further divided into two categories: a fully reconstructed region where all samples have been reconstructed (e.g., regions R1 to R4 in FIG. 6), and a pending reconstructed region where it is uncertain whether all samples have been reconstructed (e.g., regions R5 to R6 in FIG. 6);
The other type is an expanded search region, which is defined as a region pointed to by BVs corresponding to spatially neighboring and non-neighboring PUs (regarded as R7 in the embodiment corresponding to FIG. 6) and a region pointed to by automatic repositioning (regarded as R8). Since search points in R7 and/or R8 are not necessarily neighboring to each other, searching for R7 and/or R8 is performed point by point according to a list.

For search points in the search regions, all search points in a specified search region may be traversed, or different schemes may be adopted to limit the search to a local search range to balance computational complexity and encoding efficiency. For example, for pending reconstructed regions (e.g., regions R5 to R6 in FIG. 6) or fully reconstructed regions (e.g., regions R1 to R4 in FIG. 6), the width of the search range may be limited to 1/wIndex of the original width, and the height may be limited to 1/hIndex of the original height, where wIndex and hIndex are any positive integers greater than or equal to 1. The limited search range is set to a region closer to a unit to be encoded. For another example, when narrowing the search range of the R5 region, the width and height of the search region R5 may each be reduced to 1/2 of the original, and the final search range may be set to the upper-right 1/4 part of the region R5.

Step 3: Searching is performed in the search region to determine a best BV.

Here, bvXMinsregionId and bvXMaxsregionId respectively denote the minimum offset and maximum offset of a BV in the horizontal direction; bvYMins_{regionId} and bvYMaxs_{regionId} respectively denote the minimum offset and maximum offset of the BVs in the vertical direction.

Here, bvXMinsregionId, bvXMaxsregionId, bvYMinsregionId and bvYMaxsregionId may be computed according to iVerMinregionId, iVerMaxregionId, iHorMinregionId and iHorMaxregionId determined in Step 2:
$bvXMinsregionId = iHorMinregionId - xTbCmp ;$
$bvXMaxsregionId = iHorMaxregionId - xTbCmp ;$
$bvYMinsregionId = iVerMinregionId - yTbCmp ;$ and
$bvYMaxsregionId = iVerMaxregionId - yTbCmp .$

The bvXMinsregionId, bvXMaxsregionId, bvYMinsregionId and bvYMaxsregionId define a range of horizontal and vertical offsets of search points relative to the current block, namely a range of a BV.

For a fully reconstructed region (such as regions R1 to R4 in FIG. 6), based on each search point (iPosHor, iPosVer) in each search region, namely each BV (composed of a horizontal component and a vertical component (pX,pY), where pX=iPosHor-xTbCmp, pY=iPosVer-yTbCmp, pX is between bvXMins and bvXMaxs, and pY is between bvYMins and bvYMaxs), a matched reconstructed block of the current block may be found in the reconstructed region, and neighboring reconstructed samples of the matched reconstructed block serve as a matching template. A matching cost between a neighboring template of the current block and a neighboring template of the reconstructed block is computed and denoted as pDiff.

For pending reconstructed regions (such as regions R5 to R6 in FIG. 6), based on each search point (iPosHor, iPosVer) in each search region, namely a BV (composed of a horizontal component and a vertical component (pX,pY), where pX=iPosHor-xTbCmp, pY=iPosVer-yTbCmp, pX is between bvXMins and bvXMaxs, and pY is between bvYMins and bvYMaxs), availability determination may be performed on such region:
If available, a matched reconstructed block of the current block may be found in the reconstructed region, and neighboring reconstructed samples of the matched reconstructed block serve as a matching template; a matching cost between a neighboring template of the current block and a neighboring template of the reconstructed block is computed and also denoted as pDiff; and
If unavailable, template matching cost computation is skipped.

The availability determination includes but is not limited to simultaneous establishment of one or more of the following conditions:
Each sample in the template is within a valid coordinate range limited by the picture sample boundary;
Each sample in the reconstructed block corresponding to the template is within the valid coordinate range limited by the picture sample boundary;
Each sample in the template and each sample in the corresponding reconstructed block are within a prescribed range of a search window;
Each sample in the template is located in a same Tile as a current coding region;
Each sample in the reconstructed block corresponding to the template is located in a same Tile as the current coding region;
Each sample in the template has been reconstructed;
Each sample in the reconstructed block corresponding to the template is not located in the current encoding region; and
Each sample in the reconstructed block corresponding to the template has been reconstructed.

All available search points in all search ranges (regionId=0, 1, 2, 3, 4, 5) are traversed and compared to select 30 search points with a minimum matching cost pDiff. Corresponding matching costs are denoted as pDiff_BEST[n], n=0,...,29; corresponding BVs are denoted as best BVs BV_BEST[n], each being a coordinate pair (pX_BEST,pY_BEST), n=0,...,29; and corresponding matching templates are denoted as best matching templates T_BEST[n], n=0,...,29.

In a possible implementation, if the search strategy is coarse search followed by fine search, the process can be implemented as shown in FIG. 7: constructing a coarse search list in the search region, and determining a fine search list in the vicinity of a BV in the coarse search list with a step size of 1.

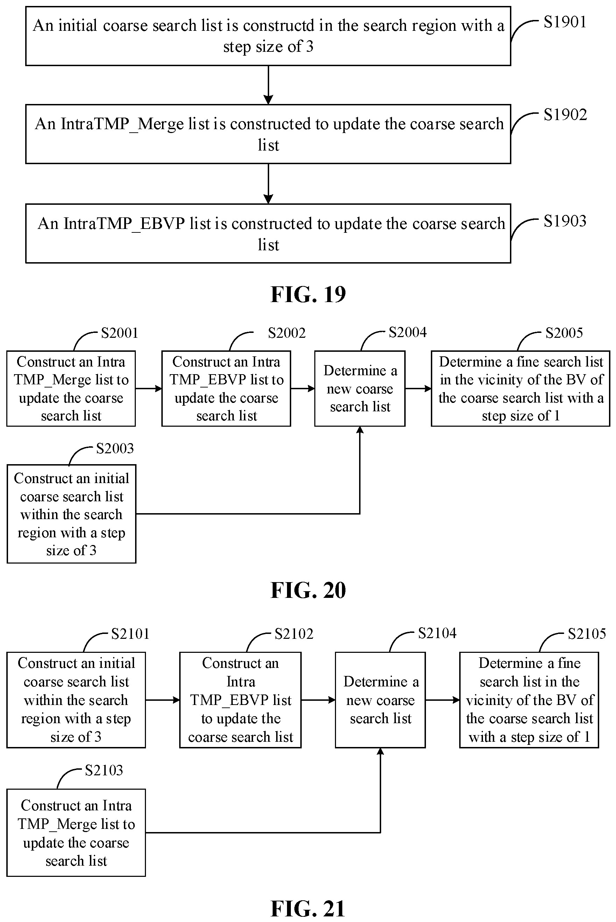

In a possible implementation, the coarse search stage is implemented as shown in FIG. 19, and the specific implementation is as follows.

S1901: An initial coarse search list is constructd in the search region with a step size of 3.

It is to be noted that, within the search range where pX is between bvXMinsregionId and bvXMaxsregionId and pY is between bvYMinsregionId and bvYMaxsregionId in each region, a coarse search is performed with a step size of 3. The top P best matching costs resulting from template matching in the coarse search are denoted as pDiff1_BEST[p], p=0,...,P-1, and corresponding BVs are recorded as BV1_BEST[p], p=0,...,P-1. P may be 1 or an integer greater than 1 as required, and the search region where the best matching search point is located is denoted as bestRegionId[p], p=0,...,P-1.

S1902: An IntraTMP_Merge list is constructed to update the coarse search list.

After P anchor points are searched out in the search region, a plurality of predefined search positions are used to construct a candidate BV list for the current block for reference, which is referred to as an IntraTMP_Merge list herein.

A predefined search position set may include 5 spatially neighboring positions of the current block: left (xTbCmp-1,yTbCmp+nTbH-1), upper-left (xTbCmp-1,yTbCmp-1), upper (xTbCmp+nTbW-1,yTbCmp-1), upper-right (xTbCmp+nTbW,yTbCmp-1), lower-left (xTbCmp-1,yTbCmp+nTbH), and 18 spatially non-neighboring positions (as shown in FIG. 9)..

An embodiment of the construction process includes: checking whether PUs corresponding to these positions adopt IntraTMP/IBC technology; if so, storing BVs of such PUs into an IntraTMP_Merge list. After the IntraTMP_Merge list is constructed, the coarse search list is updated. The updating operation includes: sequentially accessing each item of the IntraTMP_Merge list, computing a template matching cost corresponding to each BV, and comparing the cost with template matching costs of the initial coarse search list; and if the cost is smaller than a maximum template matching cost in the coarse search list, replacing a BV having a larger cost in the coarse search list with the BV. The replacement operation incluldes, for example: inserting the BV into the coarse search list according to an order of cost magnitude and deleting the BV with the maximum cost from the coarse search list. And a search region bestRegionId where the BV is located is set to 6. It should be noted that this process is actually a list merging process: the coarse search list corresponding to results of R1 to R6 is first constructed, and then a result of R7 is inserted into an appropriate position of the list. Other search sequences and merging strategies may be adopted in actual implementation, which are not limited herein.

In the embodiments of the present disclosure, according to algorithm requirements, the coarse search stage provides one or more fine search anchor points (denoted as M herein, where 1 ≤ M ≤ P) to a subsequent operation. For example, M is set to 1.

S1903: An IntraTMP_EBVP list is constructed to update the coarse search list.

After updating the coarse search list according to the IntraTMP_Merge list, an IntraTMP_EBVP list may be constructed for each BV newly inserted into the coarse search list from the Merge list, and the coarse search list may be updated according to the IntraTMP_EBVP list.

First, an IntraTMP_EBVP set is initially constructed from empty for each current BV. Five fixed positions of the current block are determined: the center (xTbCmp+nTbW/2, yTbCmp+nTbH/2), upper-left (xTbCmp, yTbCmp), upper-right (xTbCmp+nTbW-1, yTbCmp), lower-left (xTbCmp, yTbCmp+nTbH-1), and lower-right (xTbCmp+nTbW-1, yTbCmp+nTbH-1). It is checked whether a PU corresponding to the coordinates of the five positions plus the current BV adopts a BV-based prediction mode (i.e., IBC/IntraTMP).

If the PU adopts the mode, a vector sum of the BV stored in the corresponding PU and the current BV is computed and recorded as BV' (i.e., a vector sum resulting from respective summation of vertical componentnts and horizontal components), BV' is added into the TMP_EBVP set, and the BV' is taken as a new current BV to repeat the above operation and supplement more valid options into the TMP_EBVP set. If the PU does not adopt the mode, check is continued for a next position.

The above operations are repeated until all the five positions are checked or the number of items in the constructed IntraTMP_EBVP list exceeds a threshold T (for example T=15). The threshold may also be set to a small value such as 1, 2, 5 or 10; or it may be prescribed that subsequent operations are terminated when the SAD exceeds a certain threshold; or a constraint may be set for the quantity of total expanded items (similar to the IBC-ARBVP method, expanded BVs are appended to the end of a merge list with a fixed length until the list is full, in which case R7 and new R7 can be regarded as the same candidate region); or constraints may be set for both the quantity and SAD; and so on.

After completing the construction of the IntraTMP_EBVP list, the coarse search list is updated. The updating operation includes: sequentially accessing each BV in the IntraTMP_EBVP list, computing a template matching cost valu of each BV, and comparing the cost with template matching costs of BVs in the coarse search list to be updated; if the cost is less than a maximum template matching cost in the coarse search list, replacing an inferior BV in the coarse search list with the BV corresponding to the compared cost. The replacement operation includes, for example: inserting the BV into the coarse search list in order of cost magnitude and deleting the item with the maximum cost from the coarse search list. And, bestRegionId is set to 7 for the search region where the BV newly inserted into the coarse search list is located. It should be noted that the bestRegionId is originally used to provide basis for accessing surrounding samples during a fine search and filtering.

It should also be noted that the so-called "update" in step S1902 and step S1903 is essentially a list merging process, and there is no fixed update sequence. In terms of memory storage, three lists exist: a coarse search list, an IntraTMP_Merge list and an IntraTMP_EBVP list. The coarse search list is mandatory, while the other two lists may not be physically constructed; instead, the other two are treated as a checking order, and any qualified candidate is immediately used to update the coarse search list once checked.

Further, after the coarse search is completed, a fine search list may be determined around a BV of the coarse search list with a step size of 1. Specifically, the search is performed around the best BV BV1_BEST[p](p=0,...,M-1) obtained through the coarse search, which serve as the anchor points for the fine search.
for each fine search anchor point, a refined search range TmpRefineRangeHor and TmpRefineRangeVer is first determined, which may be of a fixed size or related to the search region. For example, TmpRefineRangeHor and TmpRefineRangeVer may both be set to 1 for an anchor point in search regions 0 to 5, and both set to 2 for an anchor point in search region 6. A position of a best matched reconstructed block resulting from a coarse search is then computed as a base position of the fine search region: BestPosX=xTbCmp+pX1_BEST, BestPosY=yTbCmp+pY1_BEST.

The search window is directly utilized, the fine search region is regarded as an entire undetermined reconstructed region, and traversal is performed directly.

First, a new search range is acquired based on the position of a best matched block resulting from a coarse search, including:
$iHorMaxrefine = min \left(picWidth-nTbW, BestPosX+TmpRefineRangeHor\right) ;$
$iHorMinrefine = max \left(iTemplateSizeW, BestPosX-TmpRefineRangeHor\right) ;$
$iVerMaxrefine = min \left(picHeight-nTbH, BestPosY+TmpRefineRangeVer\right) ;$ and
$iVerMinrefine = max \left(iTemplateSizeH, BestPosY-TmpRefineRangeVer\right) .$

Then, adjusted BVs BVbvXMins, bvXMaxs, bvYMins and bvYMaxs may be computed according to iVerMinrefine, iVerMaxrefine, iHorMinrefine and iHorMaxrefine:
$bvXMins = iHorMinrefine - xTbCmp ;$
$bvXMaxs = iHorMaxrefine - xTbCmp ,$
$bvYMins = iVerMinrefine - yTbCmp ;$ and
$bvYMaxs = iVerMaxrefine - yTbCmp .$

A fine search is performed within a BV range where pX is between bvXMins_{refine} and bvXMaxs_{refine} and pY is between bvYMins_{refine} and bvYMaxs_{refine}, that is, all search positions in a fine search window are directly traversed and are subjected to availability determination in sequence. For example, the search is performed with a step size of 1, and the top T best matching costs obtained by template matching at available points are recorded as pDiff_BEST[t], t=0,...,T-1, and corresponding BVs are recorded as BV_BEST[t], t=0,...,T-1. T is an integer of 1 or greater, for example, T=1.

After the foregoing operations are completed, one or more bese BVs BV_BEST[n], n=0,...,N-1 meeting different algorithm requirements may be obtained by combining the results of the coarse search and the fine search (the fine search including search of one or more anchor points). Each best BV is a coordinate pair (pX_BEST,pY_BEST). The pX_BEST and pY_BEST respectively denote a horizontal offset and a vertical offset of a best matching template relative to a template of a current coding block, and also denote a horizontal offset and a vertical offset of a best matched reconstructed block relative to the current coding block.

It should be noted that in the embodiments of the present disclosure, the foregoing search scheme may be adjusted.

In a possible implementation, the BV list updated through the Intra TMP_EBVP from the Intra TMP_Merge list may be merged with a list of an original rectangular search region to form a new coarse search list, and then a fine search is performed. With reference to FIG. 20, the specific implementation is as follows:
S2001: Construct an Intra TMP_Merge list to update the coarse search list;
S2002: Construct an Intra TMP_EBVP list to update the coarse search list;
S2003: Construct an initial coarse search list in the search region with a step size of 3;
S2004: Determine a new coarse search list; and
S2005: Determine a fine search list around the BV of the coarse search list with a step size of 1.

In another possible implementation, the list of the original rectangular search region may be updated via EBVP and merged with the Intra TMP_Merge list to form a new coarse search list, followed by a fine search. With reference to FIG. 21, the specific implementation is as follows:
S2101: Construct an initial coarse search list in the search region with a step size of 3;
S2102: Construct an Intra TMP_EBVP list to update the coarse search list;
S2103: Construct an Intra TMP_Merge list to update the coarse search list;
S2104: Determine a new coarse search list; and
S2105: Determine a fine search list around the BV of the coarse search list with a step size of 1.

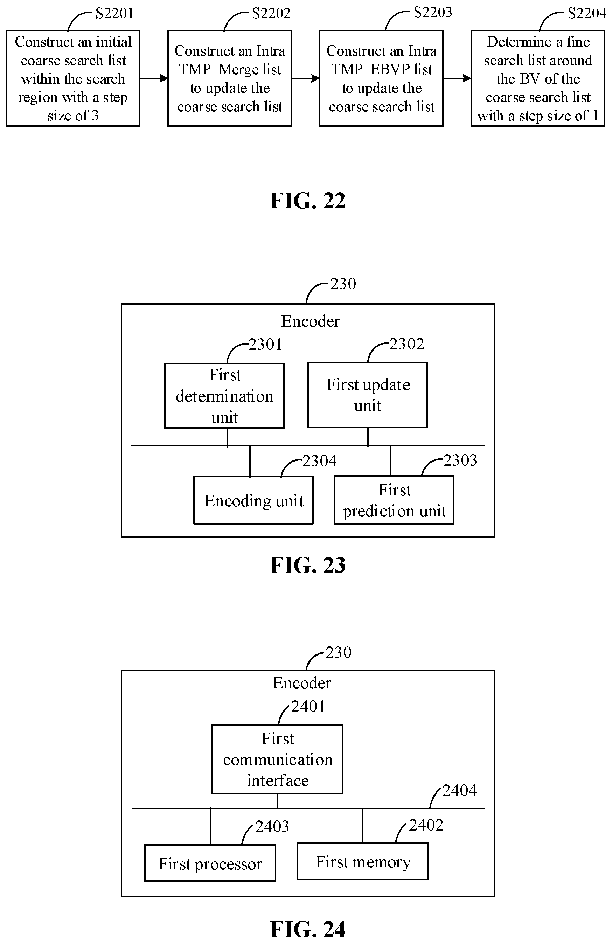

In yet another possible implementation, the list of the original rectangular search region may be first updated through the Intra TMP_Merge list, and the modified list is further updated via EBVP. During the second update, all items in the updated coarse search list may be constructed based on the Intra TMP_EBVP list, and a final list is taken as a new coarse search list for a fine search. With reference to FIG. 22, the specific implementation is as follows:
S2201: Construct an initial coarse search list in the search region with a step size of 3;
S2202: Construct an Intra TMP_Merge list to update the coarse search list;
S2203: Construct an Intra TMP_EBVP list to update the coarse search list; and
S2204: Determine a fine search list around the BV of the coarse search list with a step size of 1.

It should be noted that in the embodiments of the present disclosure, it is feasible to only check all BVs replaced by the IntraTMP_Merge list from the coarse search list. In addition, the BV objects and the quantity thereof checked through the IntraTMP_EBVP list may be adjusted:
For example, the top 5 BVs or the top 10 BVs of the corresponding BV set may be adopted for checking. Alternatively, the top 5 or top 10 BVs in the corresponding BV set may be checked. Or, The number of checked objects may be limited according to the size of the current block, for example, the top 5 BVs are checked for a CU with a size less than or equal to 16×16 and the top 10 BVs are checked for a CU of other sizes. Alternatively, the updated first candidate list may be clustered according to a geometric distance to cluster centers. The number of cluster centers may be 2 to 5, for example, an EBVP operation is performed cluster centers only. Alternatively, EBVP BVs may be appended after the IntraTMP_Merge list until the IntraTMP_Merge list is fully filled, and the initial coarse search list is updated with the filled IntraTMP_Merge list, that is, the quantity is limited to the unfilled items of the IntraTMP_Merge list.

It should be noted that in the embodiments of the present disclosure, the length of the IntraTMP_EBVP list may be modified to other values. Exemplarily, the list length may be limited to 1, 2, 5 or 10.

It should be noted that in the embodiments of the present disclosure, a restriction may be performed based on a template cost corresponding to a BV (such as SAD, SATD, or the like). A template cost is calculated for each BV of the EBVP in advance, a cost threshold is set, and only a BV whose template cost does not exceed the cost threshold is added to the EBVP list.

It should be noted that in the embodiments of the present disclosure, a sub-sample search may be implemented in the fine search stage.

It should be noted that in the embodiments of the present disclosure, when constructing a predicted value of the current block, the predicted value may be corrected by a local filtering method. Alternatively, the predicted value may be corrected by weighting multiple predicted values. Alternatively, when determining the predicted value of the current block, the predicted-value construction candidate list may be determined based on multiple types of single predicted values, filtered predicted values, and weighted predicted values, and/or a predicted-value construction manner of these predicted values; and a specific item in the predicted-value construction candidate list may be determined at the decoding end through the syntax element transmitted in the bitstream, so as to acquire the actual predicted value.

It should be noted that in the embodiments of the present disclosure, the IntraTMP_EBVP list may be used independently of the IntraTMP_Merge list. That is, expansion is performed directly based on BVs obtained from a search in a search window under the IntraTMP mode only.

It should also be noted that it is not necessary to divide the search into coarse search and fine search steps; instead, a one-time search may be performed, and then BV options may be expanded based on a result of the one-time search to obtain final BVs.

It should be noted that in the embodiments of the present disclosure, only the top K items (such as K=5) of the IntraTMP_Merge list are used to update the coarse search list, and expansion is performed only based on each BV in the IntraTMP_Merge list.

In the embodiments of the present disclosure, a Merge list may be maintained jointly using IntraTMP_Merge and IntraTMP_EBVP. For example, the top P BVs (such as P=5) is first selected from the IntraTMP_Merge list, IntraTMP_EBVP expansion is performed based on the P BVs to construct a new Merge list with a length of L (such as L=28). When the new Merge list is fully filled with the expanded BVs or the expansion of all P BVs is completed, costs of all BVs in the new Merge list are computed and ranked, top Q items (such as Q=5) after ranking are selected from the list to update the first candidate list.

The embodiments of the present disclosure elaborate the specific implementation of the foregoing embodiments. It can be seen that the technical solutions of the foregoing embodiments propose a method for expanding the coverage range of an IntraTMP search list, which adds candidate BV positions deduced from BV information of a reconstructed block and effectively improves coding accuracy. That is to say, the present technical solution can effectively utilize information of spatially neighboring and non-neighboring reconstructed blocks, expand the search range of IntraTMP without significantly increasing coding complexity, improve prediction accuracy, and further enhance encoding and decoding efficiency as well as encoding and decoding performance.

In still another embodiment of the present disclosure, based on the same inventive concept as the foregoing embodiments, FIG. 23 illustrates a schematic structural diagram of an encoder according to an embodiment of the present disclosure. As shown in FIG. 23, the encoder 230 may include a first determination unit 2301, a first update unit 2302 and a first prediction unit 2303.

The first determination unit 2301 is configured to determine a first candidate list of a current block, where the first candidate list includes one or more candidate vector parameters.

The first update unit 2302 is configured to determine a second position block based on at least one candidate vector parameter in the first candidate list and/or a vector parameter of a first position block of the current block; when an encoding parameter of the second position block includes a vector parameter, determine whether the vector parameter of the second position block satisfies a second condition based on the vector parameter of the second position block; and update the first candidate list based on the vector parameter of the second position block when the vector parameter of the second position block satisfies the second condition.

The first prediction unit 2303 is configured to determine a predicted value of the current block based on the updated first candidate list.

In some embodiments, the first determination unit 2301 is further configured to: when an encoding parameter of the first position block of the current block includes a vector parameter, determine whether the vector parameter of the first position block satisfies a first condition based on the vector parameter of the first position block; and determine the second position block based on the vector parameter of the first position block when the vector parameter of the first position block satisfies the first condition.

In some embodiments, the vector parameter includes a BV parameter and/or a MV parameter.

In some embodiments, the first determination unit 2301 is further configured to: determine a first search region of the current block; and determine the first candidate list of the current block based on the first search region.

In some embodiments, the first determination unit 2301 is further configured to: determine a first template of the current block; and determine the first search region of the current block based on the first template.

In some embodiments, the first determination unit 2301 is further configured to: search in the first search region according to a first search step size to determine one or more first candidate vector parameters; and add the one or more first candidate vector parameters to the first candidate list of the current block.

In some embodiments, the first determination unit 2301 is further configured to: traverse search points in the first search region according to the first search step size, and determine a first matching cost between a matching template corresponding to each search point in the first search region and the first template according to a preset matching criterion; determine one or more matched search points according to the first matching cost; and determine one or more first candidate vector parameters based on the one or more matched search points.

In some embodiments, the first condition includes that a cost value corresponding to the vector parameter of the first position block is superior to a cost value corresponding to at least one candidate vector parameter in the first candidate list.

In some embodiments, the first determination unit 2301 is further configured to: determine the cost value corresponding to the vector parameter of the first position block according to a matching cost between a matching template corresponding to the vector parameter of the first position block and a first template; determine a cost value corresponding to at least one candidate vector parameter in the first candidate list according to a matching cost between a matching template corresponding to at least one candidate vector parameter in the first candidate list and the first template; and determine that the vector parameter of the first position block satisfies the first condition when the cost value corresponding to the vector parameter of the first position block is less than the cost value corresponding to the at least one candidate vector parameter in the first candidate list.

In some embodiments, the first update unit 2302 is further configured to: update the first candidate list based on the vector parameter of the first position block when the vector parameter of the first position block satisfies the first condition.

In some embodiments, the first update unit 2302 is further configured to: add the vector parameter of the first position block to the first candidate list.

In some embodiments, the second position block denotes a reference block pointed to by the vector parameter of the first position block.

In some embodiments, the second position block denotes a block pointed to by a vector parameter of a reference block pointed to by the vector parameter of the first position block.

In some embodiments, the quantity of the second position block is one or more.

In some embodiments, the second condition includes that a cost value corresponding to the vector parameter of the second position block is superior to a cost value corresponding to at least one candidate vector parameter in the first candidate list.

In some embodiments, the first determination unit 2301 is further configured to: determine the cost value corresponding to the vector parameter of the second position block according to a matching cost between a matching template corresponding to the vector parameter of the second position block and a first template; determine the cost value corresponding to the at least one candidate vector parameter in the first candidate list according to a matching cost between a matching template corresponding to at least one candidate vector parameter in the first candidate list and the first template; and determine that the vector parameter of the second position block satisfies the second condition when the cost value corresponding to the vector parameter of the second position block is less than the cost value corresponding to the at least one candidate vector parameter in the first candidate list.

In some embodiments, the first update unit 2302 is further configured to: add the vector parameter of the second position block to the first candidate list.

In some embodiments, the first update unit 2302 is further configured to: when the vector parameter of the first position block satisfies the first condition, determine a first candidate set of the current block based on the vector parameter of the first position block, and update the first candidate list based on the first candidate set; when the vector parameter of the second position block satisfies the second condition, determine a second candidate set of the current block based on the vector parameter of the second position block, and update the first candidate list based on the second candidate set. The first prediction unit 2303 is further configured to determine the predicted value of the current block based on the updated first candidate list.

In some embodiments, the first update unit 2302 is further configured to: determine a cost value corresponding to a second candidate vector parameter in the first candidate set, and determine a maximum cost value corresponding to one or more candidate vector parameters in the first candidate list; and when the cost value corresponding to the second candidate vector parameter is less than the maximum cost in the first candidate list, replace a candidate vector parameter corresponding to the maximum cost in the first candidate list with the second candidate vector parameter to update the first candidate list; where the second candidate vector parameter is any vector parameter in the first candidate set.

In some embodiments, the first update unit 2302 is further configured to: add the second candidate vector parameter to the first candidate list, and delete the at least one candidate vector parameter corresponding to the maximum cost from the updated first candidate list.

In some embodiments, the first determination unit 2301 is further configured to: determine one or more second candidate vector parameters updated from the first candidate set into the first candidate list; determine the second position block based on the one or more second candidate vector parameters; and determine the second candidate set of the current block based on the vector parameter of the second position block.

In some embodiments, the first determination unit 2301 is further configured to, after updating the first candidate list based on the first candidate set, determine the second position block based on all candidate vector parameters in the updated first candidate list, and determine the second candidate set of the current block based on the vector parameter of the second position block.

In some embodiments, the first determination unit 2301 is further configured to, after updating the first candidate list based on the first candidate set, determine top N candidate vector parameter(s) from the updated first candidate list; determine the second position block based on the N candidate vector parameter(s); and determine the second candidate set of the current block based on the vector parameter of the second position block; where N is a positive integer.

In some embodiments, the first determination unit 2301 is further configured to determine a value of N according to a size parameter of the current block.

In some embodiments, the first determination unit 2301 is further configured to, after updating the first candidate list based on the first candidate set, perform clustering on the updated first candidate list to determine M candidate vector parameter(s) located at clustering centers; determine the second position block based on the M candidate vector parameter(s); and determine the second candidate set of the current block based on the vector parameter of the second position block; where M is a positive integer.

In some embodiments, the first determination unit 2301 is further configured to determine that construction of a third candidate set is completed when traversal on all the vector parameter of the second position block is completed or a number of candidate vector parameters in the second candidate set is greater than a first threshold.

In some embodiments, the first update unit 2302 is further configured to: determine a second matching cost between a matching template corresponding to a third candidate vector parameter in the second candidate set and a first template according to a preset matching criterion; and delete the third candidate vector parameters from the second candidate set to update the second candidate set when the second matching cost is greater than a second threshold; where the third candidate vector parameter is any vector parameter in the second candidate set.

In some embodiments, the first update unit 2302 is further configured to: fill the vector parameter of the second position block into the first candidate set until the first candidate set is full when the first candidate set of the current block is not filled; and update the first candidate list based on the filled first candidate set.

In some embodiments, the first update unit 2302 is further configured to: determine top K candidate vector parameter(s) from the first candidate set; and update the first candidate list based on the top K candidate vector parameter(s); where K is a positive integer.

In some embodiments, the first update unit 2302 is further configured to: determine top P candidate vector parameter(s) from the first candidate set; determine the second position block based on the P candidate vector parameter(s) and determine the vector parameter of the second position block; when the vector parameter of the second position block satisfies the second condition, construct a fourth candidate set of the current block based on the vector parameter of the second position block, and determining that construction of the fourth candidate set is completed when traversal on all the P candidate vector parameter(s) is completed or the fourth candidate set is full; determine a cost value corresponding to one or more candidate vector parameters in the fourth candidate set, determine Q candidate vector parameter(s) from the fourth candidate set according to the cost value corresponding to the one or more candidate vector parameters; and update the first candidate list based on the Q candidate vector parameter(s); where P and Q are positive integers.

In some embodiments, the first prediction unit 2303 is further configured to: determine a vector parameter of the current block based on the updated first candidate list; and determine the predicted value of the current block based on the vector parameter of the current block.

In some embodiments, the first determination unit 2301 is further configured to: determine a second search region indicated by a candidate vector parameter in the updated first candidate list; and searching in the second search region according to a second search step size to determine the vector parameter of the current block; where the second search step size is smaller than the first search step size.

In some embodiments, the first determination unit 2301 is further configured to perform a sub-sample search in the second search region according to the second search step size to determine the vector parameter of the current block.

In some embodiments, the first prediction unit 2303 is further configured to, when there is one vector parameter of the current block, determine a reference block of the current block based on the vector parameter of the current block; and determine the predicted value of the current block based on the reference block.

In some embodiments, the first prediction unit 2303 is further configured to: perform filtering on the reference block to obtain a filtered reference block; and determine the predicted value of the current block based on the filtered reference block.

In some embodiments, the first prediction unit 2303 is further configured to: determine a first predicted block of the current block based on the reference block; perform prediction on the current block according to a first prediction mode to determine a second predicted block of the current block, where the first prediction mode is a non-Intra TMP mode; and determine the predicted value of the current block based on the first predicted block and the second predicted block.

In some embodiments, the first prediction unit 2303 is further configured to, when there are a plurality of vector parameters of the current block, determine a plurality of reference blocks of the current block according to the plurality of vector parameters of the current block; and determine the predicted value of the current block based on the plurality of reference blocks.

In some embodiments, the first prediction unit 2303 is further configured to: determine a plurality of predicted blocks of the current block based on the plurality of reference blocks; and perform weighted fusion on the plurality of predicted blocks to determine the predicted value of the current block.

In some embodiments, the first prediction unit 2303 is further configured to: determine a predicted-value construction mode of the current block; and determine the predicted value of the current block based on the vector parameter of the current block and the predicted-value construction mode.

In some embodiments, the first determination unit 2301 is further configured to: determine a predicted-value construction candidate list of the current block, where the predicted-value construction candidate list includes at least one candidate predicted-value construction mode; perform cost computation on the at least one candidate predicted-value construction mode respectively to obtain at least one cost result; determine a minimum cost result from the at least one cost result, and taking a candidate predicted-value construction mode corresponding to the minimum cost result as the predicted-value construction mode of the current block.

In some embodiments, with reference to FIG. 23, the encoder 230 may further include an encoding unit 2304. The first determination unit 2301 is further configured to determine a value of a first syntax element, where the value of the first syntax element indicates an index of the predicted-value construction mode of the current block in the predicted-value construction candidate list. The encoding unit 2304 is configured to perform encoding processing on the value of the first syntax element, and write the obtained encoded bits into a bitstream.

In some embodiments, the first determination unit 2301 is further configured to determine a value of a second syntax element, where the value of the second syntax element indicates whether the current block adopts an Intra TMP mode. The encoding unit 2304 is configured to perform encoding processing on the value of the second syntax element, and write the obtained encoded bits into a bitstream.

In some embodiments, the first determination unit 2301 is further configured to execute the operation of determining the first candidate list of the current block when the current block adopts the Intra TMP mode.

In some embodiments, the first determination unit 2301 is further configured to: determine a prediction residual of the current block according to the predicted value of the current block. The encoding unit 2304 is configured to perform encoding processing on the prediction residual of the current block, and write the obtained encoded bits into a bitstream.

It can be understood that in the embodiments of the present disclosure, the term "unit" may be a part of a circuit, a part of a processor, a part of a program or software, or may also be a modular or non-modular module. Each component herein may be integrated into one processing unit, or each unit exists physically independently, or two or more units may be integrated into one unit. The integrated unit may be implemented in the form of hardware or software functional modules.

When the integrated unit is implemented in the form of a software functional module and sold or used as an independent product, it may be stored in a computer-readable storage medium. Based on such understanding, the technical solutions of the present disclosure essentially or partially contributing to the prior art may be embodied in the form of a computer software product, which is stored in a storage medium and includes several instructions for enabling a computer device (which may be a personal computer, a server, a network device, etc.) or a processor to execute all steps of the method described in the foregoing embodiments. The foregoing storage medium includes various media capable of storing program codes, such as a USB flash drive, a removable hard disk, a Read-Only Memory (ROM), a Random Access Memory (RAM), a magnetic disk, or an optical disc.

Therefore, embodiments of the present disclosure provide a computer-readable storage medium applied to the encoder 230. The computer-readable storage medium has stored a computer program which, when executed by a first processor, implements the method according to any one of the foregoing embodiments.

Based on the structure of the encoder and the computer-readable storage medium, FIG. 24 is a schematic diagram of a specific hardware structure of the encoder according to an embodiment of the present disclosure. As shown in FIG. 24, the encoder 230 may include a first communication interface 2401, a first memory 2402 and a first processor 2403, all coupled together via a first bus system 2404. It can be understood that the first bus system 2404 is configured to implement connection and communication between these components. In addition to a data bus, the first bus system 2404 includes a power bus, a control bus and a status signal bus. For clarity, various buses are marked as the first bus system 2404 in FIG. 24.

The first communication interface 2401 is configured to receive and transmit signals during information transceiving with other external network elements.

The first memory 2402 is configured to store a computer program executable on the first processor 2403.

The first processor 2403 is configured to, when running the computer program, execute the following operations: determining a first candidate list of a current block, where the first candidate list includes one or more candidate vector parameters; determining a second position block based on at least one candidate vector parameter in the first candidate list and/or a vector parameter of a first position block of the current block; when an encoding parameter of the second position block includes a vector parameter, determining whether the vector parameter of the second position block satisfies a second condition based on the vector parameter of the second position block; updating the first candidate list based on the vector parameter of the second position block when the vector parameter of the second position block satisfies the second condition; and determining a predicted value of the current block based on the updated first candidate list.

It can be understood that the first memory 2402 in the embodiments of the present disclosure may be a volatile memory, a non-volatile memory, or may include both volatile and non-volatile memories. The non-volatile memory may be a ROM, a Programmable ROM (PROM), an Erasable PROM (EPROM), an Electrically EPROM (EEPROM) or a flash memory. The volatile memory may be a RAM serving as an external high-speed cache. By way of example and not limitation, various forms of RAM are applicable, such as Static RAM (SRAM), Dynamic RAM (DRAM), Synchronous DRAM (SDRAM), Double Data Rate SDRAM (DDRSDRAM), Enhanced SDRAM (ESDRAM), Synchlink DRAM (SLDRAM), and Direct Rambus RAM (DRRAM). The first memory 2402 described in the present disclosure is intended to include, but not limited to, these and any other suitable types of memories.

The first processor 2403 may be an integrated circuit chip with signal processing capability. In the implementation process, each step of the foregoing method may be completed by hardware integrated logic circuits or software instructions in the first processor 2403. The first processor 2403 may be a general-purpose processor, a Digital Signal Processor (DSP), an Application Specific Integrated Circuit (ASIC), a Field Programmable Gate Array (FPGA) or other programmable logic device, discrete gate or transistor logic device, or discrete hardware components. The steps and logical block diagrams of the methods in the present disclosure may be implemented or executed. A general-purpose processor may be a microprocessor or any conventional processor. The steps of the technical solutions in the present disclosure may be directly implemented and executed by a hardware decoding processor, or implemented by a combination of hardware and software modules in the decoding processor. The software module may be located in a mature storage medium in the field such as a random memory, a flash memory, a read-only memory, a programmable read-only memory, or a register. The storage medium is located in the first memory 2402, and the first processor 2403 may read information from the first memory 2402 and complete the steps of the foregoing method in combination with hardware thereof.

It can be understood that the embodiments described in the present disclosure may be implemented by hardware, software, firmware, middleware, microcode or any combination thereof. For hardware implementation, the processing unit may be implemented in one or more ASICs, DSPs, DSP devices, PLDs, FPGAs, general-purpose processors, microcontrollers, microprocessors, other electronic units configured to perform the functions described in the present disclosure, or a combination thereof. For software implementation, the modules (e.g., procedures, functions) described in the present disclosure may be adopted to implement the technical solutions of the present disclosure. The software codes may be stored in a memory and executed by a processor. The memory may be implemented inside or outside the processor.

Optionally, as another embodiment, the first processor 2403 is further configured to execute the method according to any one of the foregoing embodiments when running the computer program.

For the encoder provided in this embodiment, when updating the first candidate list, vector information of several second position blocks may be expanded according to the initial first candidate list and/or a vector parameter of the first position block (spatially neighboring and non-neighboring blocks of the current block), and the first candidate list may be supplemented according to the expanded vector information. Therefore, information of spatially neighboring and non-neighboring reconstructed blocks can be effectively utilized, candidate vector information is deduced according to the vector information of the reconstructed blocks on the premise of ensuring coding complexity, the coverage range of the IntraTMP search list is expanded, prediction accuracy is improved, bit rate is further saved, encoding and decoding efficiency is increased, and encoding and decoding performance is enhanced.

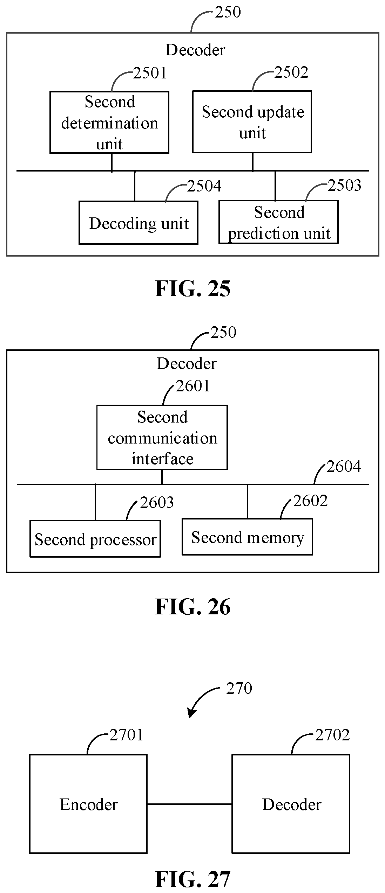

In still another embodiment of the present disclosure, based on the same inventive concept as the foregoing embodiments, FIG. 25 is a schematic structural diagram of a decoder according to an embodiment of the present disclosure. As shown in FIG. 25, the decoder 250 may include a second determination unit 2501, a second update unit 2502 and a second prediction unit 2503.

The second determination unit 2501 is configured to determine a first candidate list of a current block, where the first candidate list includes one or more candidate vector parameters.

The second update unit 2502 is configured to determine a second position block based on at least one candidate vector parameter in the first candidate list and/or a vector parameter of a first position block of the current block; when a decoding parameter of the second position block includes a vector parameter, determine whether the vector parameter of the second position block satisfies a second condition based on the vector parameter of the second position block; and update the first candidate list based on the vector parameter of the second position block when the vector parameter of the second position block satisfies the second condition.

The second prediction unit 2503 is configured to determine a predicted value of the current block based on the updated first candidate list.

In some embodiments, the second determination unit 2501 is further configured to: when a decoding parameter of the first position block of the current block includes a vector parameter, determine whether the vector parameter of the first position block satisfies a first condition based on the vector parameter of the first position block; and determine the second position block based on the vector parameter of the first position block when the vector parameter of the first position block satisfies the first condition.

In some embodiments, the vector parameter includes a BV parameter and/or a MV parameter.

In some embodiments, the second determination unit 2501 is further configured to: determine a first search region of the current block; and determine the first candidate list of the current block based on the first search region.

In some embodiments, the second determination unit 2501 is further configured to: determine a first template of the current block; and determine the first search region of the current block based on the first template.

In some embodiments, the second determination unit 2501 is further configured to: searching in the first search region according to a first search step size to determine one or more first candidate vector parameters; and add the one or more first candidate vector parameters to the first candidate list of the current block.

In some embodiments, the second determination unit 2501 is further configured to: traverse search points in the first search region according to the first search step size, and determine a first matching cost between a matching template corresponding to each search point in the first search region and the first template according to a preset matching criterion; determine one or more matched search points according to the first matching cost; and determine the one or more first candidate vector parameters based on the one or more matched search points.

In some embodiments, the first condition includes that a cost value corresponding to the vector parameter of the first position block is superior to a cost value corresponding to at least one candidate vector parameter in the first candidate list.

In some embodiments, the second determination unit 2501 is further configured to: determine the cost value corresponding to the vector parameter of the first position block according to a matching cost between a matching template corresponding to the vector parameter of the first position block and a first template; determine a cost value corresponding to at least one candidate vector parameter in the first candidate list according to a matching cost between a matching template corresponding to at least one candidate vector parameter in the first candidate list and the first template; and determine that the vector parameter of the first position block satisfies the first condition when the cost value corresponding to the vector parameter of the first position block is less than the cost value corresponding to the at least one candidate vector parameter in the first candidate list.

In some embodiments, the second update unit 2502 is further configured to update the first candidate list based on the vector parameter of the first position block when the vector parameter of the first position block satisfies the first condition.

In some embodiments, the second update unit 2502 is further configured to add the vector parameter of the first position block to the first candidate list.

In some embodiments, the second position block denotes a reference block pointed to by the vector parameter of the first position block.

In some embodiments, the second position block denotes a block pointed to by a vector parameter of a reference block pointed to by the vector parameter of the first position block.

In some embodiments, the quantity of the second position block is one or more.

In some embodiments, the second condition includes that a cost value corresponding to the vector parameter of the second position block is superior to a cost value corresponding to at least one candidate vector parameter in the first candidate list.

In some embodiments, the second determination unit 2501 is further configured to: determine the cost value corresponding to the vector parameter of the second position block according to a matching cost between a matching template corresponding to the vector parameter of the second position block and a first template; determine the cost value corresponding to the at least one candidate vector parameter in the first candidate list according to a matching cost between a matching template corresponding to at least one candidate vector parameter in the first candidate list and the first template; and determine that the vector parameter of the second position block satisfies the second condition when the cost value corresponding to the vector parameter of the second position block is less than the cost value corresponding to the at least one candidate vector parameter in the first candidate list.

In some embodiments, the second update unit 2502 is further configured to add the vector parameter of the second position block to the first candidate list.

In some embodiments, the second update unit 2502 is further configured to: when the vector parameter of the first position block satisfies the first condition, determine a first candidate set of the current block based on the vector parameter of the first position block, and update the first candidate list based on the first candidate set; when the vector parameter of the second position block satisfies the second condition, determine a second candidate set of the current block based on the vector parameter of the second position block, and update the first candidate list based on the second candidate set. The second prediction unit 2503 is further configured to determine the predicted value of the current block based on the updated first candidate list.

In some embodiments, the second update unit 2502 is further configured to: determine a cost value corresponding to a second candidate vector parameter in the first candidate set, and determining a maximum cost value corresponding to one or more candidate vector parameters in the first candidate list; and when the cost value corresponding to the second candidate vector parameters is less than the maximum cost in the first candidate list, a candidate vector parameter corresponding to the maximum cost in the first candidate list with the second candidate vector parameter to update the first candidate list; where the second candidate vector parameter is any vector parameter in the first candidate set.

In some embodiments, the second update unit 2502 is further configured to: add the second candidate vector parameter to the first candidate list, and delete the candidate vector parameter corresponding to the maximum cost from the updated first candidate list.

In some embodiments, the second determination unit 2501 is further configured to: determine one or more second candidate vector parameters updated from the first candidate set into the first candidate list; determine the second position block based on the one or more second candidate vector parameters; and determine the second candidate set of the current block based on the vector parameter of the second position block.

In some embodiments, the second determination unit 2501 is further configured to, after updating the first candidate list based on the first candidate set, determine the second position block based on all candidate vector parameters in the updated first candidate list, and determine the second candidate set of the current block based on the vector parameter of the second position block.

In some embodiments, the second determination unit 2501 is further configured to, after updating the first candidate list based on the first candidate set, determine top N candidate vector parameter(s) from the updated first candidate list; determine the second position block based on the N candidate vector parameter(s); and determine the second candidate set of the current block based on the vector parameter of the second position block; where N is a positive integer.

In some embodiments, the second determination unit 2501 is further configured to determine a value of N according to the size parameter of the current block.

In some embodiments, the second determination unit 2501 is further configured to, after updating the first candidate list based on the first candidate set, perform clustering on the updated first candidate list to determine M candidate vector parameter(s) located at clustering centers; determine the second position block based on the M candidate vector parameter(s); and determine the second candidate set of the current block based on the vector parameter of the second position block; where M is a positive integer.

In some embodiments, the second determination unit 2501 is further configured to: determine that construction of a third candidate set is completed when traversal on all the vector parameter of the second position block is completed or a number of candidate vector parameters in the second candidate set is greater than a first threshold.

In some embodiments, the second update unit 2502 is further configured to: determine a second matching cost between a matching template corresponding to a third candidate vector parameter in the second candidate set and a first template according to a preset matching criterion; and delete the third candidate vector parameters from the second candidate set to update the second candidate set when the second matching cost is greater than a second threshold; where the third candidate vector parameter is any vector parameter in the second candidate set.

In some embodiments, the second update unit 2502 is further configured to: when the first candidate set of the current block is not full, fill the vector parameter of the second position block into the first candidate set until the first candidate set is full; and update the first candidate list based on the filled first candidate set.

In some embodiments, the second update unit 2502 is further configured to: determine top K candidate vector parameter(s) from the first candidate set; and update the first candidate list based on the top K candidate vector parameter(s); where K is a positive integer.

In some embodiments, the second update unit 2502 is further configured to: determine top P candidate vector parameter(s) from the first candidate set; determine the second position block based on the P candidate vector parameter(s) and determine the vector parameter of the second position block; when the vector parameter of the second position block satisfies the second condition, construct a fourth candidate set of the current block based on the vector parameter of the second position block, and determining that construction of the fourth candidate set is completed when traversal on all the P candidate vector parameter(s) is completed or the fourth candidate set is full; determine a cost value corresponding to one or more candidate vector parameters in the fourth candidate set, determine Q candidate vector parameter(s) from the fourth candidate set according to the cost value corresponding to the one or more candidate vector parameters; and update the first candidate list based on the Q candidate vector parameter(s); where P and Q are positive integers.

In some embodiments, the second prediction unit 2503 is further configured to: determine a vector parameter of the current block based on the updated first candidate list; and determine the predicted value of the current block based on the vector parameter of the current block.

In some embodiments, the second determination unit 2501 is further configured to: determine a second search region indicated by a candidate vector parameter in the updated first candidate list; and searching in the second search region according to a second search step size to determine the vector parameter of the current block. The second search step size is smaller than the first search step size.

In some embodiments, the second determination unit 2501 is further configured to perform a sub-sample search in the second search region according to the second search step size, so as to determine the vector parameter of the current block.

In some embodiments, when there is one vector parameter of the current block, the second prediction unit 2503 is further configured to: determine a reference block of the current block based on the vector parameter of the current block; and determine the predicted value of the current block based on the reference block.

In some embodiments, the second prediction unit 2503 is further configured to: perform filtering processing on the reference block to obtain a filtered reference block; and determine the predicted value of the current block based on the filtered reference block.

In some embodiments, the second prediction unit 2503 is further configured to: determine a first predicted block of the current block based on the reference block; perform prediction on the current block according to a first prediction mode to determine a second predicted block of the current block, where the first prediction mode is a non-Intra TMP mode; and determine the predicted value of the current block based on the first predicted block and the second predicted block.

In some embodiments, when there are a plurality of vector parameters of the current block, the second prediction unit 2503 is further configured to: determine a plurality of reference blocks of the current block based on the plurality of vector parameters of the current block; and determine the predicted value of the current block based on the plurality of reference blocks.

In some embodiments, the second prediction unit 2503 is further configured to: determine a plurality of predicted blocks of the current block based on the plurality of reference blocks; and perform weighted fusion on the multiple predicted blocks to determine the predicted value of the current block.

In some embodiments, with reference to FIG. 25, the decoder 250 may further include a decoding unit 2504. The decoding unit 2504 is configured to decode a bitstream to determine a value of a first syntax element. The second prediction unit 2503 is further configured to determine a predicted-value construction mode of the current block according to the value of the first syntax element and a predicted-value construction candidate list of the current block; and determine the predicted value of the current block according to a vector parameter of the current block and the predicted-value construction mode.

In some embodiments, the decoding unit 2504 is further configured to decode a bitstream to determine a value of a second syntax element. The second determination unit 2501 is further configured to execute the operation of determining the first candidate list of the current block when the second syntax element indicates that the current block adopts an Intra TMP mode.

In some embodiments, the decoding unit 2504 is further configured to: decode a bitstream to determine a prediction residual of the current block. The second determination unit 2501 is further configured to determine a reconstructed value of the current block according to the prediction residual and the predicted value of the current block.

It can be understood that in the embodiments of the present disclosure, the term "unit" may be a part of a circuit, a part of a processor, a part of a program or software, or may be a modular or non-modular component. Each component in the present embodiment may be integrated into one processing unit, each unit may exist independently in physical form, or two or more units may be integrated into one unit. The integrated unit may be implemented in the form of hardware or software functional modules.

If the integrated unit is implemented in the form of a software functional module and is not sold or used as an independent product, the integrated unit may be stored in a computer-readable storage medium. Based on such understanding, the present embodiment provides a computer-readable storage medium applied to the decoder 250. The computer-readable storage medium has stored a computer program which, when executed by a second processor, implements the method according to any one of the foregoing embodiments.

Based on the composition of the decoder and the computer-readable storage medium, FIG. 26 is a schematic diagram of a specific hardware structure of the decoder provided by an embodiment of the present disclosure. As shown in FIG. 26, the decoder 250 may include a second communication interface 2601, a second memory 2602, and a second processor 2603. All components are coupled together via a second bus system 2604. It can be understood that the second bus system 2604 is configured to implement connection and communication accross the components. In addition to a data bus, the second bus system 2604 may include a power bus, a control bus, and a status signal bus. For clarity of description, all types of buses are marked as the second bus system 2604 in FIG. 26, where:
The second communication interface 2601 is configured to receive and transmit signals during information interaction with other external network elements;
The second memory 2602 is configured to store a computer program executable on the second processor 2603;
The second processor 2603 is configured to, when running the computer program, perform the following operations: determining a first candidate list of a current block, where the first candidate list includes one or more candidate vector parameters; determining a second position block based on at least one candidate vector parameter in the first candidate list and/or a vector parameter of a first position block of the current block; when a decoding parameter of the second position block includes a vector parameter, determining whether the vector parameter of the second position block satisfies a second condition based on the vector parameter of the second position block; updating the first candidate list based on the vector parameter of the second position block when the vector parameter of the second position block satisfies the second condition; and determining a predicted value of the current block based on the updated first candidate list.

Optionally, as another embodiment, the second processor 2603 is further configured to, when running the computer program, implement the method according to any one of the foregoing embodiments.

It can be understood that the second memory 2602 has hardware functions similar to those of the first memory 2402, and the second processor 2603 has hardware functions similar to those of the first processor 2403, which will not be elaborated herein.

The present embodiment provides a decoder. When updating the first candidate list, the decoder may expand several vector information of the second position block according to at least one candidate vector parameter in the initial first candidate list and/or a vector parameter of the first position block (spatially neighboring and non-neighboring blocks of the current block), and supplement the first candidate list with the expanded vector information. Therefore, information of spatially neighboring and non-neighboring reconstructed blocks can be effectively utilized. On the premise of guaranteeing encoding complexity, candidate vector information is deduced according to the vector information of the reconstructed block, the coverage range of an IntraTMP search list is expanded, prediction accuracy is improved, bit rate is further saved, encoding and decoding efficiency is increased, and encoding and decoding performance is enhanced.

In still another embodiment of the present disclosure, FIG. 27 is a schematic structural diagram of an encoding and decoding system provided by an embodiment of the present disclosure. As shown in FIG. 27, the encoding and decoding system 270 may include an encoder 2701 and a decoder 2702.

In the embodiments of the present disclosure, the encoder 2701 may be the encoder according to any one of the foregoing embodiments, and the decoder 2702 may be the decoder according to any one of the foregoing embodiments.

It should be noted that in the present disclosure, the terms "comprise", "include" or any other variants thereof are intended to cover a non-exclusive inclusion, such that a process, method, article or apparatus including a series of elements not only includes those elements, but also includes other elements not explicitly listed, or elements inherent to such process, method, article or apparatus. Without further limitation, an element defined by the phrase "including one ..." does not exclude the presence of additional identical elements in the process, method, article or apparatus that includes the element.

The serial numbers of the embodiments of the present disclosure are merely for description, and do not represent the superiority or inferiority of the embodiments.

The methods in the several embodiments provided by the present disclosure may be combined arbitrarily without conflict to obtain new method embodiments.

The features in the several product embodiments provided by the present disclosure may be combined arbitrarily without conflict to obtain new product embodiments.

The features in the methods or device embodiments provided by the present disclosure may be combined arbitrarily without conflict to obtain new method embodiments or device embodiments.

The foregoing are merely specific implementations of the present disclosure, and the protection scope of the present disclosure is not limited thereto. Any variations or replacements readily conceivable by those skilled in the art within the technical scope disclosed by the present disclosure shall fall within the protection scope of the present disclosure. Therefore, the protection scope of the present disclosure shall be subject to the appended claims.

### Industrial Applicability

In the embodiments of the present disclosure, at both an encoding end and a decoding end, a first candidate list of a current block is determined first, where the first candidate list includes one or more candidate vector parameters; then a second position block is determined based on at least one candidate vector parameter in the first candidate list and/or a vector parameter of a first position block of the current block; when an encoding/decoding parameter of the second position block includes a vector parameter, it is determined whether the vector parameter of the second position block satisfies a second condition based on the vector parameter of the second position block; when the vector parameter of the second position block satisfies the second condition, the first candidate list is updated based on the vector parameter of the second position block; and finally a predicted value of the current block is determined based on the updated first candidate list. That is to say, when updating the first candidate list, vector information of several second position blocks can be expanded according to at least one candidate vector parameter in the initial first candidate list and/or a vector parameter of the first position block (spatially neighboring and non-neighboring blocks of the current block), and the first candidate list is supplemented with the expanded vector information. Therefore, information of spatially neighboring and non-neighboring reconstructed blocks can be effectively utilized. On the premise of guaranteeing encoding complexity, candidate vector information is deduced according to the vector information of the reconstructed blocks, the coverage range of an IntraTMP search list is expanded, prediction accuracy is improved, bit rate is further saved, encoding and decoding efficiency is increased, and encoding and decoding performance is enhanced.

## Claims

1. A decoding method, implemented by a decoder, comprising:
determining a first candidate list of a current block, wherein the first candidate list comprises one or more candidate vector parameters;
determining a second position block based on at least one candidate vector parameter in the first candidate list and/or a vector parameter of a first position block of the current block;
when a decoding parameter of the second position block comprises a vector parameter, determining whether the vector parameter of the second position block satisfies a second condition based on the vector parameter of the second position block;
when the vector parameter of the second position block satisfies the second condition, updating the first candidate list based on the vector parameter of the second position block; and
determining a predicted value of the current block based on the updated first candidate list.

2. The decoding method of claim 1, when determining the second position block based on the vector parameter of the first position block of the current block, the method further comprising:
when a decoding parameter of the first position block of the current block comprises a vector parameter, determining whether the vector parameter of the first position block satisfies a first condition based on the vector parameter of the first position block; and
determining the second position block based on the vector parameter of the first position block when the vector parameter of the first position block satisfies the first condition.

3. The decoding method of claim 1, wherein the vector parameter comprises a block vector parameter and/or a motion vector parameter.

4. The decoding method of claim 1, wherein determining the first candidate list of the current block comprises:
determining a first search region of the current block; and
determining the first candidate list of the current block based on the first search region.

5. The decoding method of claim 4, wherein determining the first search region of the current block comprises:
determining a first template of the current block; and
determining the first search region of the current block based on the first template.

6. The decoding method of claim 4, wherein determining the first candidate list of the current block based on the first search region comprises:
searching in the first search region according to a first search step size to determine one or more first candidate vector parameters; and
adding the one or more first candidate vector parameters to the first candidate list of the current block.

7. The decoding method of claim 6, wherein searching in the first search region according to the first search step size to determine one or more first candidate vector parameters comprises:
traversing search points in the first search region according to the first search step size, and determining a first matching cost between a matching template corresponding to each search point in the first search region and the first template according to a preset matching criterion; and
determining one or more matched search points according to the first matching cost, and determining the one or more first candidate vector parameters based on the one or more matched search points.

8. The decoding method of claim 2, wherein the first condition comprises that a cost value corresponding to the vector parameter of the first position block is superior to a cost value corresponding to at least one candidate vector parameter in the first candidate list.

9. The decoding method of claim 8, further comprising:
determining the cost value corresponding to the vector parameter of the first position block according to a matching cost between a matching template corresponding to the vector parameter of the first position block and a first template;
determining a cost value corresponding to at least one candidate vector parameter in the first candidate list according to a matching cost between a matching template corresponding to at least one candidate vector parameter in the first candidate list and the first template; and
determining that the vector parameter of the first position block satisfies the first condition when the cost value corresponding to the vector parameter of the first position block is less than the cost value corresponding to the at least one candidate vector parameter in the first candidate list.

10. The decoding method of claim 2, further comprising:
updating the first candidate list based on the vector parameter of the first position block when the vector parameter of the first position block satisfies the first condition.

11. The decoding method of claim 10, wherein updating the first candidate list based on the vector parameter of the first position block comprises:
adding the vector parameter of the first position block to the first candidate list.

12. The decoding method of claim 1, wherein the second position block represents a reference block pointed to by the vector parameter of the first position block.

13. The decoding method of claim 1, wherein the second position block represents a block pointed to by a vector parameter of a reference block pointed to by the vector parameter of the first position block.

14. The decoding method of claim 1, wherein the second condition comprises that a cost value corresponding to the vector parameter of the second position block is superior to a cost value corresponding to at least one candidate vector parameter in the first candidate list.

15. The decoding method of claim 14, further comprising:
determining the cost value corresponding to the vector parameter of the second position block according to a matching cost between a matching template corresponding to the vector parameter of the second position block and a first template;
determining the cost value corresponding to the at least one candidate vector parameter in the first candidate list according to a matching cost between a matching template corresponding to at least one candidate vector parameter in the first candidate list and the first template; and
determining that the vector parameter of the second position block satisfies the second condition when the cost value corresponding to the vector parameter of the second position block is less than the cost value corresponding to the at least one candidate vector parameter in the first candidate list.

16. The decoding method of claim 1, wherein updating the first candidate list based on the vector parameter of the second position block comprises:
adding the vector parameter of the second position block to the first candidate list.

17. The decoding method of claim 1, further comprising:
when the vector parameter of the first position block satisfies a first condition, determining a first candidate set of the current block based on the vector parameter of the first position block, and updating the first candidate list based on the first candidate set;
when the vector parameter of the second position block satisfies the second condition, determining a second candidate set of the current block based on the vector parameter of the second position block, and updating the first candidate list based on the second candidate set; and
determining the predicted value of the current block based on the updated first candidate list.

18. The decoding method of claim 17, wherein updating the first candidate list based on the first candidate set comprises:
determining a cost value corresponding to a second candidate vector parameter in the first candidate set, and determining a maximum cost value corresponding to one or more candidate vector parameters in the first candidate list; and
replacing a candidate vector parameter corresponding to the maximum cost in the first candidate list with the second candidate vector parameter to update the first candidate list when the cost value corresponding to the second candidate vector parameter is less than the maximum cost in the first candidate list,
wherein the second candidate vector parameter is any vector parameter in the first candidate set.

19. The decoding method of claim 18, wherein replacing the candidate vector parameter corresponding to the maximum cost in the first candidate list with the second candidate vector parameter comprises:
adding the second candidate vector parameter to the first candidate list, and deleting the candidate vector parameter corresponding to the maximum cost from the updated first candidate list.

20. The decoding method of claim 18, wherein determining the second candidate set of the current block comprises:
determining one or more second candidate vector parameters updated from the first candidate set into the first candidate list; and
determining the second position block based on the one or more second candidate vector parameters, and determining the second candidate set of the current block based on the vector parameter of the second position block.

21. The decoding method of claim 18, wherein determining the second candidate set of the current block comprises:
after updating the first candidate list based on the first candidate set, determining the second position block based on all candidate vector parameters in the updated first candidate list, and determining the second candidate set of the current block based on the vector parameter of the second position block.

22. The decoding method of claim 17, wherein determining the second candidate set of the current block comprises:
after updating the first candidate list based on the first candidate set, determining top N candidate vector parameter(s) from the updated first candidate list; and
determining the second position block based on the N candidate vector parameter(s), and determining the second candidate set of the current block based on the vector parameter of the second position block, wherein N is a positive integer.

23. The decoding method of claim 22, further comprising:
determining a value of N based on a size parameter of the current block.

24. The decoding method of claim 17, wherein determining the second candidate set of the current block comprises:
after updating the first candidate list based on the first candidate set, performing clustering on the updated first candidate list to determine M candidate vector parameter(s) located at cluster centers; and
determining the second position block based on the M candidate vector parameter(s), and determining the second candidate set of the current block based on the vector parameter of the second position block, wherein M is a positive integer.

25. The decoding method of claim 17, further comprising:
determining that construction of a third candidate set is completed when traversal on all the vector parameter of the second position block is completed or a number of candidate vector parameters in the second candidate set is greater than a first threshold.

26. The decoding method of claim 25, further comprising:
determining a second matching cost between a matching template corresponding to a third candidate vector parameter in the second candidate set and a first template according to a preset matching criterion; and
deleting the third candidate vector parameter from the second candidate set to update the second candidate set when the second matching cost is greater than a second threshold;
wherein the third candidate vector parameter is any vector parameter in the second candidate set.

27. The decoding method of claim 17, further comprising:
when the first candidate set of the current block is not full, filling the vector parameter of the second position block into the first candidate set until the first candidate set is full; and
updating the first candidate list based on the filled first candidate set.

28. The decoding method of claim 17, wherein updating the first candidate list based on the first candidate set comprises:
determining top K candidate vector parameter(s) from the first candidate set; and
updating the first candidate list based on the top K candidate vector parameter(s);
wherein K is a positive integer.

29. The decoding method of claim 17, further comprising:
determining top P candidate vector parameter(s) from the first candidate set;
determining the second position block based on the P candidate vector parameter(s), and determining the vector parameter of the second position block;
constructing a fourth candidate set of the current block based on the vector parameter of the second position block when the vector parameter of the second position block satisfies the second condition, and determining that construction of the fourth candidate set is completed when traversal on all the P candidate vector parameter(s) is completed or the fourth candidate set is full;
determining a cost value corresponding to one or more candidate vector parameters in the fourth candidate set, and determining Q candidate vector parameter(s) from the fourth candidate set according to the cost value corresponding to the one or more candidate vector parameters; and
updating the first candidate list based on the Q candidate vector parameter(s);
wherein P and Q are positive integers.

30. The decoding method of any one of claims 1 to 29, wherein determining the predicted value of the current block based on the updated first candidate list comprises:
determining a vector parameter of the current block based on the updated first candidate list; and
determining the predicted value of the current block based on the vector parameter of the current block.

31. The decoding method of claim 30, wherein determining the vector parameter of the current block based on the updated first candidate list comprises:
determining a second search region indicated by a candidate vector parameter in the updated first candidate list; and
searching in the second search region according to a second search step size to determine the vector parameter of the current block;
wherein the second search step size is smaller than the first search step size.

32. The decoding method of claim 31, wherein searching in the second search region according to the second search step size to determine the vector parameter of the current block comprises:
performing a sub-sample search in the second search region according to the second search step size to determine the vector parameter of the current block.

33. The decoding method of claim 30, wherein when there is one vector parameter of the current block, determining the predicted value of the current block based on the vector parameter of the current block comprises:
determining a reference block of the current block based on the vector parameter of the current block; and
determining the predicted value of the current block based on the reference block.

34. The decoding method of claim 33, wherein determining the predicted value of the current block based on the reference block comprises:
performing filtering processing on the reference block to obtain a filtered reference block; and
determining the predicted value of the current block based on the filtered reference block.

35. The decoding method of claim 33, wherein determining the predicted value of the current block based on the reference block comprises:
determining a first predicted block of the current block based on the reference block;
performing prediction on the current block according to a first prediction mode to determine a second predicted block of the current block, wherein the first prediction mode is a non-intra template matching prediction mode; and
determining the predicted value of the current block based on the first predicted block and the second predicted block.

36. The decoding method of claim 30, wherein when there are a plurality of vector parameters of the current block, determining the predicted value of the current block based on the vector parameter of the current block comprises:
determining a plurality of reference blocks of the current block based on the plurality of vector parameters of the current block; and
determining the predicted value of the current block based on the plurality of reference blocks.

37. The decoding method of claim 36, wherein determining the predicted value of the current block based on the plurality of reference blocks comprises:
determining a plurality of predicted blocks of the current block based on the plurality of reference blocks; and
performing weighted fusion on the plurality of predicted blocks to determine the predicted value of the current block.

38. The decoding method of claim 30, wherein determining the predicted value of the current block based on the vector parameter of the current block comprises:
decoding a bitstream to determine a value of a first syntax element;
determining a predicted-value construction mode of the current block according to the value of the first syntax element and a predicted-value construction candidate list of the current block; and
determining the predicted value of the current block based on the vector parameter of the current block and the predicted-value construction mode.

39. The decoding method of any one of claims 1 to 38, further comprising:
decoding a bitstream to determine a value of a second syntax element; and
executing the operation of determining the first candidate list of the current block when the second syntax element indicates that the current block adopts an intra template matching prediction mode.

40. The decoding method of any one of claims 1 to 38, further comprising:
decoding a bitstream to determine a prediction residual of the current block; and
determining a reconstructed value of the current block according to the prediction residual and the predicted value of the current block.

41. An encoding method, implemented by an encoder, comprising:
determining a first candidate list of a current block, wherein the first candidate list comprises one or more candidate vector parameters;
determining a second position block based on at least one candidate vector parameter in the first candidate list and/or a vector parameter of a first position block of the current block;
when an encoding parameter of the second position block comprises a vector parameter, determining whether the vector parameter of the second position block satisfies a second condition based on the vector parameter of the second position block;
when the vector parameter of the second position block satisfies the second condition, updating the first candidate list based on the vector parameter of the second position block; and
determining a predicted value of the current block based on the updated first candidate list.

42. The encoding method of claim 41, when determining the second position block based on the vector parameter of the first position block of the current block, the method further comprising:
when an encoding parameter of the first position block of the current block comprises a vector parameter, determining whether the vector parameter of the first position block satisfies a first condition based on the vector parameter of the first position block; and
determining the second position block based on the vector parameter of the first position block when the vector parameter of the first position block satisfies the first condition.

43. The encoding method of claim 41, wherein the vector parameter comprises a block vector parameter and/or a motion vector parameter.

44. The encoding method of claim 41, wherein determining the first candidate list of the current block comprises:
determining a first search region of the current block; and
determining the first candidate list of the current block based on the first search region.

45. The encoding method of claim 44, wherein determining the first search region of the current block comprises:
determining a first template of the current block; and
determining the first search region of the current block based on the first template.

46. The encoding method of claim 44, wherein determining the first candidate list of the current block based on the first search region comprises:
searching in the first search region according to a first search step size to determine one or more first candidate vector parameters; and
adding the one or more first candidate vector parameters to the first candidate list of the current block.

47. The encoding method of claim 46, wherein searching in the first search region according to the first search step size to determine one or more first candidate vector parameters comprises:
traversing search points in the first search region according to the first search step size, and determining a first matching cost between a matching template corresponding to each search point in the first search region and the first template according to a preset matching criterion; and
determining one or more matched search points according to the first matching cost, and determining the one or more first candidate vector parameters based on the one or more matched search points.

48. The encoding method of claim 42, wherein the first condition comprises that a cost value corresponding to the vector parameter of the first position block is superior to a cost value corresponding to at least one candidate vector parameter in the first candidate list.

49. The encoding method of claim 48, further comprising:
determining the cost value corresponding to the vector parameter of the first position block according to a matching cost between a matching template corresponding to the vector parameter of the first position block and a first template;
determining a cost value corresponding to at least one candidate vector parameter in the first candidate list according to a matching cost between a matching template corresponding to at least one candidate vector parameter in the first candidate list and the first template; and
determining that the vector parameter of the first position block satisfies the first condition when the cost value corresponding to the vector parameter of the first position block is less than the cost value corresponding to the at least one candidate vector parameter in the first candidate list.

50. The encoding method of claim 42, further comprising:
updating the first candidate list based on the vector parameter of the first position block when the vector parameter of the first position block satisfies the first condition.

51. The encoding method of claim 50, wherein updating the first candidate list based on the vector parameter of the first position block comprises:
adding the vector parameter of the first position block to the first candidate list.

52. The encoding method of claim 41, wherein the second position block represents a reference block pointed to by the vector parameter of the first position block.

53. The encoding method of claim 41, wherein the second position block represents a block pointed to by a vector parameter of a reference block pointed to by the vector parameter of the first position block.

54. The encoding method of claim 41, wherein the second condition comprises that a cost value corresponding to the vector parameter of the second position block is superior to a cost value corresponding to at least one candidate vector parameter in the first candidate list.

55. The encoding method of claim 54, further comprising:
determining the cost value corresponding to the vector parameter of the second position block according to a matching cost between a matching template corresponding to the vector parameter of the second position block and a first template;
determining the cost value corresponding to the at least one candidate vector parameter in the first candidate list according to a matching cost between a matching template corresponding to at least one candidate vector parameter in the first candidate list and the first template; and
determining that the vector parameter of the second position block satisfies the second condition when the cost value corresponding to the vector parameter of the second position block is less than the cost value corresponding to the at least one candidate vector parameter in the first candidate list.

56. The encoding method of claim 41, wherein updating the first candidate list based on the vector parameter of the second position block comprises:
adding the vector parameter of the second position block to the first candidate list.

57. The encoding method of claim 41, further comprising:
when the vector parameter of the first position block satisfies the first condition, determining a first candidate set of the current block based on the vector parameter of the first position block, and updating the first candidate list based on the first candidate set;
when the vector parameter of the second position block satisfies the second condition, determining a second candidate set of the current block based on the vector parameter of the second position block, and updating the first candidate list based on the second candidate set; and
determining the predicted value of the current block based on the updated first candidate list.

58. The encoding method of claim 57, wherein updating the first candidate list based on the first candidate set comprises:
determining a cost value corresponding to a second candidate vector parameter in the first candidate set, and determining a maximum cost value corresponding to one or more candidate vector parameters in the first candidate list; and
replacing a candidate vector parameter corresponding to the maximum cost in the first candidate list with the second candidate vector parameter to update the first candidate list when the cost value corresponding to the second candidate vector parameter is less than the maximum cost in the first candidate list;
wherein the second candidate vector parameter is any vector parameter in the first candidate set.

59. The encoding method of claim 58, wherein replacing the candidate vector parameter corresponding to the maximum cost in the first candidate list with the second candidate vector parameter comprises:
adding the second candidate vector parameter to the first candidate list, and deleting the candidate vector parameter corresponding to the maximum cost from the updated first candidate list.

60. The encoding method of claim 58, wherein determining the second candidate set of the current block comprises:
determining one or more second candidate vector parameters updated from the first candidate set into the first candidate list; and
determining the second position block based on the one or more second candidate vector parameters, and determining the second candidate set of the current block based on the vector parameter of the second position block.

61. The encoding method of claim 58, wherein determining the second candidate set of the current block comprises:
after updating the first candidate list based on the first candidate set, determining the second position block based on all candidate vector parameters in the updated first candidate list, and determining the second candidate set of the current block based on the vector parameter of the second position block.

62. The encoding method of claim 57, wherein determining the second candidate set of the current block comprises:
after updating the first candidate list based on the first candidate set, determining top N candidate vector parameter(s) from the updated first candidate list; and
determining the second position block based on the N candidate vector parameter(s), and determining the second candidate set of the current block based on the vector parameter of the second position block, wherein N is a positive integer.

63. The encoding method of claim 62, further comprising:
determining a value of N based on a size parameter of the current block.

64. The encoding method of claim 57, wherein determining the second candidate set of the current block comprises:
after updating the first candidate list based on the first candidate set, performing clustering on the updated first candidate list to determine M candidate vector parameter(s) located at cluster centers; and
determining the second position block based on the M candidate vector parameter(s), and determining the second candidate set of the current block based on the vector parameter of the second position block, wherein M is a positive integer.

65. The encoding method of claim 57, further comprising:
determining that construction of a third candidate set is completed when traversal on all the vector parameter of the second position block is completed or a number of candidate vector parameters in the second candidate set is greater than a first threshold.

66. The encoding method of claim 65, further comprising:
determining a second matching cost between a matching template corresponding to a third candidate vector parameter in the second candidate set and a first template according to a preset matching criterion; and
deleting the third candidate vector parameter from the second candidate set to update the second candidate set when the second matching cost is greater than a second threshold;
wherein the third candidate vector parameter is any vector parameter in the second candidate set.

67. The encoding method of claim 57, further comprising:
when the first candidate set of the current block is not full, filling the vector parameter of the second position block into the first candidate set until the first candidate set is full; and
updating the first candidate list based on the filled first candidate set.

68. The encoding method of claim 57, wherein updating the first candidate list based on the first candidate set comprises:
determining top K candidate vector parameter(s) from the first candidate set; and
updating the first candidate list based on the top K candidate vector parameter(s);
wherein K is a positive integer.

69. The encoding method of claim 57, further comprising:
determining top P candidate vector parameter(s) from the first candidate set;
determining the second position block based on the P candidate vector parameter(s), and determining the vector parameter of the second position block;
constructing a fourth candidate set of the current block based on the vector parameter of the second position block when the vector parameter of the second position block satisfies the second condition, and determining that construction of the fourth candidate set is completed when traversal on all the P candidate vector parameter(s) is completed or the fourth candidate set is full;
determining a cost value corresponding to one or more candidate vector parameters in the fourth candidate set, and determining Q candidate vector parameter(s) from the fourth candidate set according to the cost value corresponding to the one or more candidate vector parameters; and
updating the first candidate list based on the Q candidate vector parameter(s);
wherein P and Q are positive integers.

70. The encoding method of any one of claims 41 to 69, wherein determining the predicted value of the current block based on the updated first candidate list comprises:
determining a vector parameter of the current block based on the updated first candidate list; and
determining the predicted value of the current block based on the vector parameter of the current block.

71. The encoding method of claim 70, wherein determining the vector parameter of the current block based on the updated first candidate list comprises:
determining a second search region indicated by a candidate vector parameter in the updated first candidate list; and
searching in the second search region according to a second search step size to determine the vector parameter of the current block;
wherein the second search step size is smaller than the first search step size.

72. The encoding method of claim 71, wherein searching in the second search region according to the second search step size to determine the vector parameter of the current block comprises:
performing a sub-sample search in the second search region according to the second search step size to determine the vector parameter of the current block.

73. The encoding method of claim 70, wherein when there is one vector parameter of the current block, determining the predicted value of the current block based on the vector parameter of the current block comprises:
determining a reference block of the current block based on the vector parameter of the current block; and
determining the predicted value of the current block based on the reference block.

74. The encoding method of claim 73, wherein determining the predicted value of the current block based on the reference block comprises:
filtering the reference block to obtain a filtered reference block; and
determining the predicted value of the current block based on the filtered reference block.

75. The encoding method of claim 73, wherein determining the predicted value of the current block based on the reference block comprises:
determining a first predicted block of the current block based on the reference block;
performing prediction on the current block according to a first prediction mode to determine a second predicted block of the current block, wherein the first prediction mode is a non-intra template matching prediction mode; and
determining the predicted value of the current block based on the first predicted block and the second predicted block.

76. The encoding method of claim 70, wherein when there are a plurality of vector parameters of the current block, determining the predicted value of the current block based on the vector parameter of the current block comprises:
determining a plurality of reference blocks of the current block according to the plurality of vector parameters of the current block; and
determining the predicted value of the current block based on the plurality of reference blocks.

77. The encoding method of claim 76, wherein determining the predicted value of the current block based on the plurality of reference blocks comprises:
determining a plurality of predicted blocks of the current block based on the plurality of reference blocks; and
performing weighted fusion on the plurality of predicted blocks to determine the predicted value of the current block.

78. The encoding method of claim 70, wherein determining the predicted value of the current block based on the vector parameter of the current block comprises:
determining a predicted-value construction mode of the current block; and
determining the predicted value of the current block based on the vector parameter of the current block and the predicted-value construction mode.

79. The encoding method of claim 78, wherein determining the predicted-value construction mode of the current block comprises:
determining a predicted-value construction candidate list of the current block, wherein the predicted-value construction candidate list comprises at least one candidate predicted-value construction mode;
performing cost computation on the at least one candidate predicted-value construction mode respectively to obtain at least one cost result; and
determining a minimum cost result from the at least one cost result, and taking a candidate predicted-value construction mode corresponding to the minimum cost result as the predicted-value construction mode of the current block.

80. The encoding method of claim 79, further comprising:
determining a value of a first syntax element, wherein the value of the first syntax element is configured to indicate an index of the predicted-value construction mode of the current block in the predicted-value construction candidate list; and
performing encoding processing on the value of the first syntax element, and writing obtained encoding bits into a bitstream.

81. The encoding method of any one of claims 41 to 80, further comprising:
determining a value of a second syntax element, wherein the value of the second syntax element is configured to indicate whether the current block adopts an intra template matching prediction (Intra TMP) mode; and
performing encoding processing on the value of the second syntax element, and writing obtained encoding bits into a bitstream.

82. The encoding method of claim 81, further comprising:
executing the operation of determining the first candidate list of the current block when the current block adopts the Intra TMP n mode.

83. The encoding method of any one of claims 41 to 80, further comprising:
determining a prediction residual of the current block according to the predicted value of the current block; and
performing encoding processing on the prediction residual of the current block, and writing obtained encoding bits into a bitstream.

84. A bitstream, generated by performing bit encoding on information to be encoded, wherein the information to be encoded comprises at least one of: a prediction residual of a current block, a value of a first syntax element, or a value of a second syntax element;
wherein the value of the first syntax element is configured to indicate an index of a predicted-value construction mode of the current block in a predicted-value construction candidate list, and the value of the second syntax element is configured to indicate whether the current block adopts an intra template matching prediction mode.

85. An encoder, comprising a first determination unit, a first update unit and a first prediction unit;
wherein the first determination unit is configured to determine a first candidate list of a current block, wherein the first candidate list comprises one or more candidate vector parameters;
the first update unit is configured to: determine a second position block based on at least one candidate vector parameter in the first candidate list and/or a vector parameter of a first position block of the current block; when an encoding parameter of the second position block comprises a vector parameter, determine whether the vector parameter of the second position block satisfies a second condition based on the vector parameter of the second position block; and update the first candidate list based on the vector parameter of the second position block when the vector parameter of the second position block satisfies the second condition; and
the first prediction unit is configured to determine a predicted value of the current block based on the updated first candidate list.

86. An encoder, comprising a first memory and a first processor;
wherein the first memory is configured to store a computer program executable on the first processor; and
the first processor is configured to, when executing the computer program, perform the method according to any one of claims 41 to 83.

87. A decoder, comprising a second determination unit, a second update unit and a second prediction unit;
wherein the second determination unit is configured to determine a first candidate list of a current block, wherein the first candidate list comprises one or more candidate vector parameters;
the second update unit is configured to: determine a second position block based on at least one candidate vector parameter in the first candidate list and/or a vector parameter of a first position block of the current block; when a decoding parameter of the second position block comprises a vector parameter, determine whether the vector parameter of the second position block satisfies a second condition based on the vector parameter of the second position block; and update the first candidate list based on the vector parameter of the second position block when the vector parameter of the second position block satisfies the second condition; and
the second prediction unit is configured to determine a predicted value of the current block based on the updated first candidate list.

88. A decoder, comprising a second memory and a second processor;
wherein the second memory is configured to store a computer program executable on the second processor; and
the second processor is configured to, when executing the computer program, perform the method according to any one of claims 1 to 40.

89. A computer-readable storage medium, storing a computer program that, when executed, implements the method according to any one of claims 1 to 40, or implements the method according to any one of claims 41 to 83.
